(19) Europäisches Patentamt
European Patent Office
Office européen des brevets

(11) EP 3 823 274 B1

(12) EUROPEAN PATENT SPECIFICATION

(45) Date of publication and mention
of the grant of the patent:
**20.11.2024 Bulletin 2024/47**

(21) Application number: **19833605.9**

(22) Date of filing: **11.06.2019**

(51) International Patent Classification (IPC):
H04N 23/698 (2023.01)    H04N 21/218 (2011.01)
H04N 21/2343 (2011.01)    H04N 21/262 (2011.01)
H04N 21/6587 (2011.01)    H04N 21/4728 (2011.01)
H04N 21/81 (2011.01)    H04N 21/845 (2011.01)
H04N 21/84 (2011.01)

(52) Cooperative Patent Classification (CPC):
H04N 21/816; H04N 21/21805; H04N 21/234345;
H04N 21/23439; H04N 21/26258; H04N 21/84;
H04N 21/8456; H04N 23/698; H04N 21/4728;
H04N 21/6587

(86) International application number:
**PCT/KR2019/007003**

(87) International publication number:
**WO 2020/013454 (16.01.2020 Gazette 2020/03)**

(54) **METHOD AND DEVICE FOR TRANSMITTING AND RECEIVING METADATA ON COORDINATE SYSTEM OF DYNAMIC VIEWPOINT**

VERFAHREN UND VORRICHTUNG ZUM SENDEN UND EMPFANGEN VON METADATEN AUF EINEM KOORDINATENSYSTEM EINES DYNAMISCHEN GESICHTSPUNKTS

PROCÉDÉ ET DISPOSITIF DE TRANSMISSION ET DE RÉCEPTION DE MÉTADONNÉES SUR UN SYSTÈME DE COORDONNÉES D'UN POINT DE VUE DYNAMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.07.2018 KR 20180081787**

(43) Date of publication of application:
**19.05.2021 Bulletin 2021/20**

(73) Proprietor: **LG Electronics Inc.**
**SEOUL, 07336 (KR)**

(72) Inventor: **OH, Sejin**
**Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(56) References cited:
WO-A1-2017/082078    WO-A1-2017/082079
WO-A1-2017/142353    WO-A1-2018/038523
KR-A- 20180 038 256    US-A1- 2014 004 340
US-A1- 2018 061 002

• **LG ELECTRONICS INC: "FLUS Metadata", vol. SA WG4, no. Albuquerque, New Mexico, US; 20171113 - 20171117, 12 November 2017 (2017-11-12), XP051380891, Retrieved from the Internet <URL:http://www.3gpp.org/ftp/tsg%5Fsa/WG4%5FCODEC/TSGS4%5F96/Docs/> [retrieved on 20171112]**

**Description**

[Technical Field]

The present disclosure relates to metadata for 360-degree video data, and more particularly, to a method and apparatus for transmitting/receiving metadata about a coordinate system of dynamic viewpoint.

[Background Art]

A virtual reality (VR) system gives the user a sense of being in an electronically projected environment. An augmented reality (AR) system arranges a 3D virtual image on a real image or a background in an overlapping manner to provide the user with a sense of being in a mixed environment of virtuality and reality. The system for providing VR or AR may be further improved to provide higher quality images and stereophonic sound. A VR or AR system may allow a user to interactively consume VR or AR content.

With the increasing demand for VR or AR content, there is a increasing need for a method of more specifically signaling information on multiple-viewpoints in VR or AR content.

US 2018/061002 A1 discloses a method for transmitting omnidirectional video. In the document the method is described to include acquiring an image for the omnidirectional video, projecting the image for the omnidirectional video onto a 3D projection structure, packing the image projected onto the 3D projection structure in a 2D frame, encoding the image packed into the 2D frame, and transmitting a data signal containing the encoded image and metadata about the omnidirectional video.

WO 2017/082079 A1 discloses an image processing apparatus and an image processing method by which three-dimensional data can be generated with high accuracy on the basis of two-dimensional image data and depth image data. In the document the image processing apparatus is described to comprise a color shift correction data generation unit generating color shift correction data for correcting a color shift between two-dimensional image data of a base viewpoint and two-dimensional image data of a reference viewpoint, and a metadata addition unit transmitting color shift correction information including the color shift correction data generated by the color shift correction data generation unit, encoded data of the two-dimensional image data of the base viewpoint and depth image data indicative of a position of each of pixels in a depthwise direction of an image pickup object and encoded data of the two-dimensional image data of the reference viewpoint and depth image data.

The document ("FLUS Metadata", 3GPP DRAFT, S4-171199, XP051380891) discloses FLUS metadata that can be exchanged between FLUS sources and FLUS sinks for being used for capability negotiation, session establishment or update between the FLUS sources and sinks.

[Disclosure]

[Technical Problem]

An object of the present disclosure is to provide a method and apparatus for processing 360-degree video data.

Another object of the present disclosure is to provide a method and apparatus for transmitting or receiving metadata for 360-degree video data.

Another object of the present disclosure is to provide a method and apparatus for transmitting or receiving metadata about a coordinate system of a dynamic viewpoint.

Another object of the present disclosure is to provide a method and apparatus for transmitting or receiving a dynamic global coordinate system rotation flag indicating whether a relative rotation angle between a common reference coordinate system and a global coordinate system of a dynamic viewpoint changes.

Another object of the present disclosure is to provide a method and apparatus for transmitting or receiving group global coordinate system rotation structure information representing information about a relative rotation angle between a common reference coordinate system and a global coordinate system of a viewpoint group including multiple viewpoints.

[Technical Solution]

The present invention is as defined by the appended independent claims. The remaining embodiments described in the description are to be construed within the limitations of the independent claims.

[Advantageous Effects]

According to the present disclosure, VR content may be efficiently transmitted in an environment supporting next-generation hybrid broadcasting, which employs a terrestrial broadcasting network and the Internet.

According to the present disclosure, an interactive experience may be provided to a user who consumes 360 content.

According to the present disclosure, necessary 360 content information may be efficiently delivered to the user while increasing the transmission capacity.

According to the present disclosure, signaling information about 360-degree video data may be efficiently stored and transmitted through an International Organization for Standardization (ISO)-based media file format such as an ISO base media file format (ISOBMFF).

According to the present disclosure, signaling information about 360-degree video data may be transmitted through HyperText Transfer Protocol (HTTP)-based adaptive streaming such as Dynamic Adaptive Streaming over HTTP (DASH).

According to the present disclosure, signaling information about 360-degree video data may be stored and transmitted through a supplemental enhancement information (SEI) message or video usability information (VUI), thereby improving the overall transmission efficiency.

According to the present disclosure, metadata about a coordinate system of a dynamic viewpoint may be effectively signaled.

According to the present disclosure, a dynamic global coordinate system rotation flag indicating whether a relative rotation angle between the common reference coordinate system of a dynamic viewpoint and the global coordinate system is changed may be effectively signaled.

According to the present disclosure, group global coordinate system rotation structure information representing information about a relative rotation angle between a common reference coordinate system of a viewpoint group including multiple viewpoints and a global coordinate system may be effectively signaled.

[Description of Drawings]

FIG. 1 is a diagram showing an overall architecture for providing 360 content according to an embodiment.

FIGS. 2 and 3 illustrate a structure of a media file according to according to some embodiments.

FIG. 4 illustrates an example of the overall operation of a DASH-based adaptive streaming model.

FIG. 5 is a diagram schematically illustrating a configuration of a 360 video transmission apparatus according to an embodiment.

FIG. 6 is a diagram schematically illustrating a configuration of a 360 video reception apparatus according to an embodiment.

FIG. 7 is a diagram illustrating the concept of aircraft principal axes for describing a 3D space according to an embodiment.

FIG. 8 exemplarily illustrates a 2D image to which a 360 video processing process and a projection format-based region-wise packing process are applied.

FIGS. 9A and 9B exemplarily show projection formats according to some embodiments.

FIGS. 10A and 10B are diagrams illustrating tiles according to some embodiments.

FIG. 11 shows an example of 360-degree video-related metadata according to an embodiment.

FIG. 12 schematically illustrates the concept of a viewpoint, a viewing position, and a viewing orientation.

FIG. 13 is a diagram schematically showing an exemplary architecture for providing 3DoF+ video according to an embodiment.

FIGS. 14A and 14B are diagrams illustrating an example of a 3DoF + end-to-end system architecture.

FIG. 15 is a diagram schematically illustrating an example of a FLUS architecture.

FIG. 16 is a diagram schematically illustrating an example of configuration of a 3DoF+ transmission terminal.

FIG. 17 is a diagram schematically illustrating an example of a configuration of a 3DoF+ reception terminal.

FIG. 18 is a diagram illustrating information about viewing orientation according to an embodiment.

FIG. 19 is a flowchart illustrating a method of operating a 360-degree video transmission apparatus according to an embodiment.

FIG. 20 is a block diagram illustrating a configuration of the 360-degree video transmission apparatus according to the embodiment.

FIG. 21 is a flowchart illustrating a method of operating a 360-degree video reception apparatus according to an embodiment.

FIG. 22 is a block diagram illustrating a configuration of the 360-degree video reception apparatus according to the embodiment.

FIG. 23 exemplarily shows devices capable of supporting embodiments of the present disclosure.

FIG. 24 illustrates an exemplary 5G usage scenario to which the technical features of the present disclosure are applicable.

FIG. 25 shows a service system according to an embodiment of the present disclosure.

[Mode]

The technical features described below may be applied to a standard specification by a Moving Picture Experts Group (MPEG) standardization organization, and may be used in a technical field dealing with video, images or audio. For example, methods or embodiments disclosed in the following description may relate to disclosures of the MPEG-I standard (ISO/IEC 23090) or next-generation standards following the MPEG-I standard (ISO/IEC 23090).

The present disclosure may be subjected to various changes and may have various embodiments, and specific embodiments will be described in detail with reference to the accompanying drawings. A singular expression includes a plural expression unless the context clearly indicates otherwise. In In this specification, the term "include" or "have" is intended to indicate that characteristics, figures, steps, operations, constituents, and components disclosed in the specification or combinations thereof exist, and should be understood as not precluding the existence or addition of one or more other characteristics, figures, steps, operations, constituents, components, or combinations thereof.

Though individual elements described in the present disclosure are independently shown in the drawings for convenience of description of different functions, this does not mean that the elements are implemented in hardware or software elements separate from each other. For example, two or more of the elements may be combined to form one element, or one element may be divided into a plurality of elements. Embodiments in which respective elements are integrated and/or separated are also within the scope of the present disclosure without departing from the essence of the present disclosure.

Hereinafter, exemplary embodiments of the present disclosure will be described in detail with reference to the accompanying drawings. The same reference numerals will be used for the same components in the drawings, and redundant descriptions of the same components are omitted.

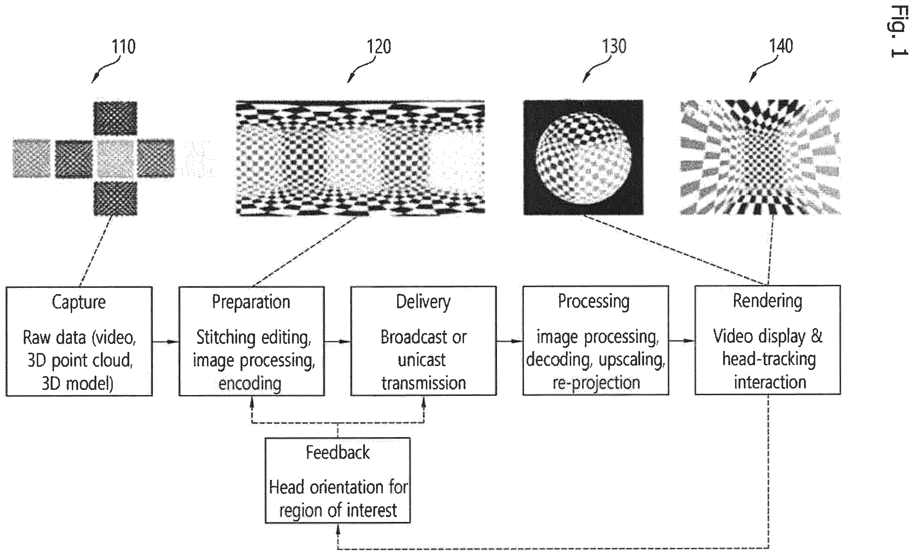

FIG. 1 is a diagram showing an overall architecture for providing 360 content according to an embodiment.

In this specification, "image" may mean a concept including a still image and a video that is a set of a series of still images over time. Also, "video" does not necessarily mean a set of a series of still images over time. In some cases, a still image may be interpreted as a concept included in a video.

In order to provide virtual reality (VR) to users, a method of providing 360-degree content may be considered. Here, the 360-degree content may be referred to as three Degrees of Freedom (3DoF) content, and VR may refer to a technique or an environment for replicating a real or virtual environment. VR may artificially provide sensuous experiences to users and thus users may experience electronically projected environments therethrough.

360 content may refer to all content for realizing and providing VR, and may include 360-degree video and/or 360 audio. The 360 degree video and/or 360 audio may also be referred to as 3D video and/or 3D audio 360-degree video may refer to video or image content which is needed to provide VR and is captured or reproduced in all directions (360 degrees) at the same time. Hereinafter, 360-degree video may refer to 360-degree video. 360-degree video may refer to a video or image presented in various types of 3D space according to a 3D model. For example, 360-degree video may be presented on a spherical surface. 360 audio may be audio content for providing VR and may refer to spatial audio content which may make an audio generation source recognized as being located in a specific 3D space. 360 audio may also be referred to as 3D audio. 360 content may be generated, processed and transmitted to users, and the users may consume VR experiences using the 360 content. The 360 video may be called omnidirectional video, and the 360 image may be called omnidirectional image.

To provide 360-degree video, a 360-degree video may be captured first using one or more cameras. The captured 360-degree video may be transmitted through a series of processes, and the data received on the receiving side may be processed into the original 360-degree video and rendered. Then, the 360-degree video may be provided to a user.

Specifically, the entire processes for providing 360-degree video may include a capture process, a preparation process, a transmission process, a processing process, a rendering process and/or a feedback process.

The capture process may refer to a process of capturing images or videos for multiple viewpoints through one or more cameras. Image/video data as shown in part 110 of FIG. 1 may be generated through the capture process. Each plane in part 110 of FIG. 1 may refer to an image/video for each viewpoint. The captured images/videos may be called raw data. In the capture process, metadata related to capture may be generated.

A special camera for VR may be used for capture. According to an embodiment, when a 360-degree video for a virtual space generated using a computer is to be provided, the capture operation using an actual camera may not be performed. In this case, the capture process may be replaced by a process of simply generating related data.

The preparation process may be a process of processing the captured images/videos and the metadata generated in the capture process. The captured images/videos may be subjected to stitching, projection, region-wise packing and/or encoding in the preparation process.

First, the images/videos may be subjected to the stitching process. The stitching process may be a process of connecting the captured images/videos to create a single panoramic image/video or a spherical image/video.

Then, the stitched images/videos may be subjected to the projection process. In the projection process, the stitched images/videos may be projected onto a 2D image. The 2D image may be referred to as a 2D image frame depending on the context. Projecting onto a 2D image may be referred to as mapping to the 2D image. The projected image/video data may take the form of a 2D image as shown in part 120 of FIG. 1.

The video data projected onto the 2D image may be subjected to the region-wise packing process in order to increase video coding efficiency. Region-wise packing may refer to a process of dividing the video data projected onto the 2D image into regions and processing the regions. Here, the regions may refer to regions obtained by dividing the 2D image onto which 360-degree video data is projected. According to an embodiment, such regions may be distinguished by dividing the 2D image equally or randomly. According to an embodiment, the regions may be divided according to a projection scheme. The region-wise packing process may be an optional process and may thus be omitted from the preparation process.

According to an embodiment, this processing process may include a process of rotating the regions or rearranging the regions on the 2D image in order to increase video coding efficiency. For example, the regions may be rotated such that specific sides of the regions are positioned close to each other. Thereby, efficiency may be increased in coding.

According to an embodiment, the processing process may include a process of increasing or decreasing the resolution of a specific region in order to differentiate the resolutions for regions of the 360-degree video. For example, the resolution of regions corresponding to a relatively important area of the 360-degree video may be increased over the resolution of the other regions. The video data projected onto the 2D image or the region-wise packed video data may be subjected to the encoding process that employs a video codec.

According to an embodiment, the preparation process may further include an editing process. In the editing process, the image/video data may be edited before or after the projection. In the preparation process, metadata for stitching/projection/encoding/editing may be generated. In addition, metadata about the initial viewpoint or the region of interest (ROI) of the video data projected onto the 2D image may be generated.

The transmission process may be a process of processing and transmitting the image/video data and the metadata obtained through the preparation process. Processing according to any transport protocol may be performed for transmission. The data that has been processed for transmission may be delivered over a broadcast network and/or broadband. The data may be delivered to a reception side on an on-demand basis. The receiving side may receive the data through various paths.

The processing process may refer to a process of decoding the received data and re-projecting the projected image/video data onto a 3D model. In this process, the image/video data projected onto 2D images may be re-projected onto a 3D space. This process may be referred to as mapping projection depending on the context. Here, the shape of the 3D space to which the data is mapped may depend on the 3D model. For example, 3D models may include a sphere, a cube, a cylinder and a pyramid.

According to an embodiment, the processing process may further include an editing process and an up-scaling process. In the editing process, the image/video data may be edited before or after the re-projection. When the image/video data has a reduced size, the size of the image/video data may be increased by up-scaling the samples in the up-scaling process. The size may be reduced through down-scaling, when necessary.

The rendering process may refer to a process of rendering and displaying the image/video data re-projected onto the 3D space. The re-projection and rendering may be collectively expressed as rendering on a 3D model. The image/video re-projected (or rendered) on the 3D model may take the form as shown in part 130 of FIG. 1. The part 130 of FIG. 1 corresponds to a case where the image/video data is re-projected onto a 3D model of sphere. A user may view a part of the regions of the rendered image/video through a VR display or the like. Here, the region viewed by the user may take the form as shown in part 140 of FIG. 1.

The feedback process may refer to a process of delivering various types of feedback information which may be acquired in the display process to a transmitting side. Through the feedback process, interactivity may be provided in 360-degree video consumption. According to an embodiment, head orientation information, viewport information indicating a region currently viewed by a user, and the like may be delivered to the transmitting side in the feedback process. According to an embodiment, the user may interact with content realized in a VR environment. In this case, information related to the interaction may be delivered to the transmitting side or a service provider in the feedback process. In an embodiment, the feedback process may be skipped.

The head orientation information may refer to information about the position, angle and motion of a user's head.

Based on this information, information about a region currently viewed by the user in the 360-degree video, that is, viewport information may be calculated.

The viewport information may be information about a region currently viewed by a user in the 360-degree video. Gaze analysis may be performed using this information to check how the user consumes 360-degree video and how long the user gazes at a region of the 360-degree video. The gaze analysis may be performed at the receiving side and a result of the analysis may be delivered to the transmitting side on a feedback channel. A device such as a VR display may extract a viewport region based on the position/orientation of the user's head, vertical or horizontal Field Of View (FOV) information supported by the device, and the like.

According to an embodiment, the aforementioned feedback information may be consumed on the receiving side as well as being delivered to the transmitting side. That is, decoding, re-projection and rendering processes of the receiving side may be performed using the aforementioned feedback information. For example, only 360-degree video corresponding to the region currently viewed by the user may be preferentially decoded and rendered using the head orientation information and/or the viewport information.

Here, the viewport or the viewport region may refer to a region of 360-degree video currently viewed by the user. A viewpoint may be a point which is viewed by the user in a 360-degree video and may represent a center point of the viewport region. That is, a viewport is a region centered on a viewpoint, and the size and shape of the region may be determined by FOV, which will be described later.

In the above-described architecture for providing 360-degree video, image/video data which is subjected to a series of capture/projection/encoding/transmission/decoding/re-projection/rendering processes may be called 360-degree video data. The term "360-degree video data" may be used as a concept including metadata or signaling information related to such image/video data.

To store and transmit media data such as the audio or video data described above, a standardized media file format may be defined. According to an embodiment, a media file may have a file format based on ISO base media file format (ISOBMFF).

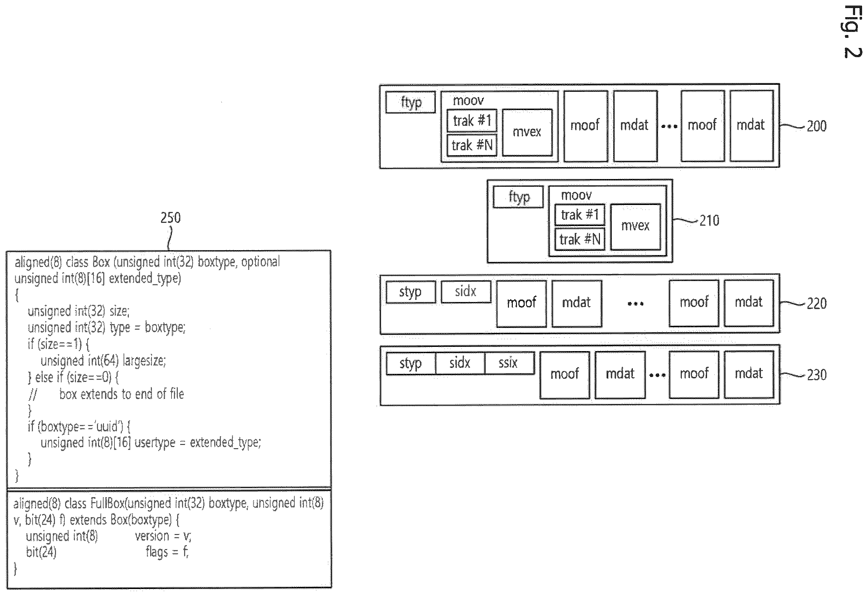

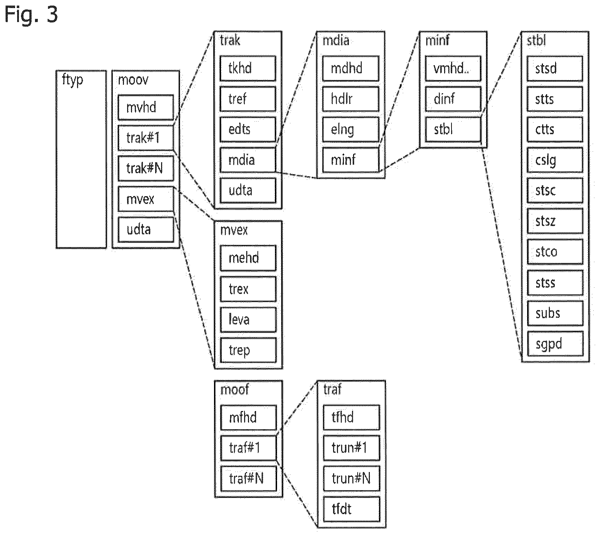

FIGS. 2 and 3 illustrate the structure of a media file according to some embodiments.

A media file according to an embodiment may include at least one box. Here, the box may be a data block or an object containing media data or metadata related to the media data. The boxes may be arranged in a hierarchical structure. Thus, the data may be classified according to the boxes and the media file may take a form suitable for storage and/or transmission of large media data. In addition, the media file may have a structure which facilitates access to media information as in the case where the user moves to a specific point in the media content.

The media file according to according to the embodiment may include an ftyp box, a moov box and/or an mdat box.

The ftyp box (file type box) may provide information related to a file type or compatibility of a media file. The ftyp box may include configuration version information about the media data of the media file. A decoder may identify the media file with reference to the ftyp box.

The moov box (movie box) may include metadata about the media data of the media file. The moov box may serve as a container for all metadata. The moov box may be a box at the highest level among the metadata related boxes. According to an embodiment, only one moov box may be present in the media file.

The mdat box (media data box) may a box that actually contains the media data of the media file. The media data may contain audio samples and/or video samples and the mdat box may serve as a container to contain such media samples.

According to an embodiment, the moov box may include an mvhd box, a trak box and/or an mvex box as sub-boxes.

The mvhd box (movie header box) may contain media presentation related information about the media data included in the media file. That is, the mvhd box may contain information such as a media generation time, change time, time standard and period of the media presentation.

The trak box (track box) may provide information related to a track of the media data. The trak box may contain information such as stream related information about an audio track or a video track, presentation related information, and access related information. Multiple trak boxes may be provided depending on the number of tracks.

According to an embodiment, the trak box may include a tkhd box (track header box) as a sub-box. The tkhd box may contain information about a track indicated by the trak box. The tkhd box may contain information such as a generation time, change time and track identifier of the track.

The mvex box (movie extend box) may indicate that the media file may include a moof box, which will be described later. The moov boxes may need to be scanned to recognize all media samples of a specific track.

According to an embodiment, the media file may be divided into multiple fragments (200). Accordingly, the media file may be segmented and stored or transmitted. The media data (mdat box) of the media file may be divided into multiple fragments and each of the fragments may include a moof box and a divided mdat box. According to an embodiment, the information of the ftyp box and/or the moov box may be needed to use the fragments.

The moof box (movie fragment box) may provide metadata about the media data of a corresponding fragment. The moof box may be a box at the highest layer among the boxes related to the metadata of the corresponding fragment.

The mdat box (media data box) may contain actual media data as described above. The mdat box may contain media samples of the media data corresponding to each fragment.

According to an embodiment, the above-described moof box may include an mfhd box and/or a traf box as sub-boxes.

The mfhd box (movie fragment header box) may contain information related to correlation of multiple divided fragments. The mfhd box may include a sequence number to indicate the sequential position of the media data of the corresponding fragment among the divided data. In addition, it may be checked whether there is missing data among the divided data, based on the mfhd box.

The traf box (track fragment box) may contain information about a corresponding track fragment. The traf box may provide metadata about a divided track fragment included in the fragment. The traf box may provide metadata for decoding/reproducing media samples in the track fragment. Multiple traf boxes may be provided depending on the number of track fragments.

According to an embodiment, the traf box described above may include a tfhd box and/or a trun box as sub-boxes.

The tfbd box (track fragment header box) may contain header information about the corresponding track fragment. The tfhd box may provide information such as a default sample size, period, offset and identifier for the media samples of the track fragment indicated by the traf box.

The trun box (track fragment run box) may contain information related to the corresponding track fragment. The trun box may contain information such as a period, size and reproduction timing of each media sample.

The media file or the fragments of the media file may be processed into segments and transmitted. The segments may include an initialization segment and/or a media segment.

The file of the illustrated embodiment 210 may be a file containing information related to initialization of the media decoder except the media data. This file may correspond to the above-described initialization segment. The initialization segment may include the ftyp box and/or the moov box described above.

The file of the illustrated embodiment 220 may be a file including the above-described fragments. For example, this file may correspond to the above-described media segment. The media segment may include the moof box and/or the mdat box described above. The media segment may further include an styp box and/or an sidx box.

The styp box (segment type box) may provide information for identifying media data of a divided fragment. The styp box may perform the same function as the above-described ftyp box for a divided fragment. According to an embodiment, the styp box may have the same format as the ftyp box.

The sidx box (segment index box) may provide information indicating an index for a divided fragment. Accordingly, the sequential position of the divided fragment may be indicated.

An ssix box may be further provided according to an embodiment 230. When a segment is further divided into sub-segments, the ssix box (sub-segment index box) may provide information indicating indexes of the sub-segments.

The boxes in a media file may further contain extended information about the basis of a box as shown in an embodiment 250 or a FullBox. In this embodiment, the size field, largesize, may indicate the length of a corresponding box in bytes. The version field may indicate the version of a corresponding box format. The Type field may indicate the type or identifier of the box. The flags field may indicate a flag related to the box.

According to an embodiment, the fields (attributes) for 360-degree video may be carried in a DASH-based adaptive streaming model.

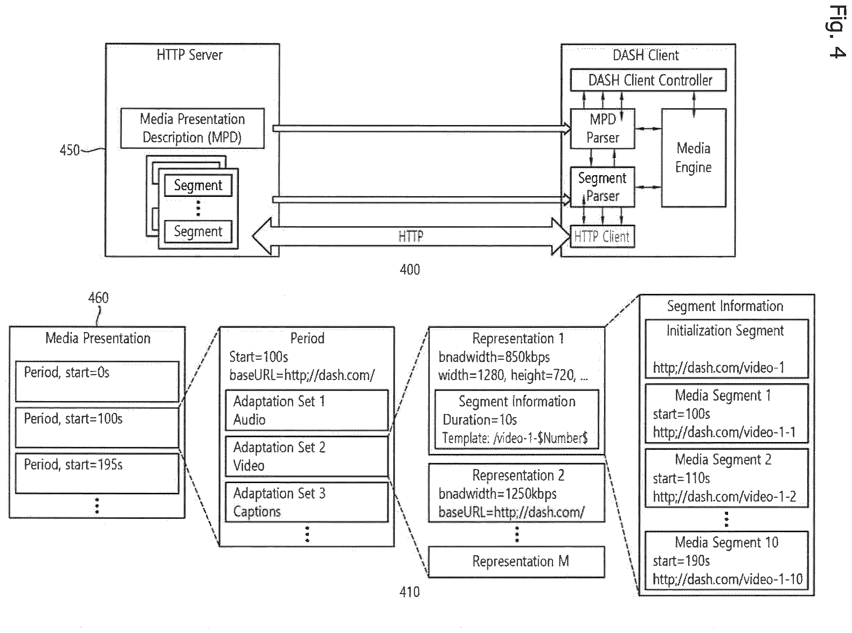

FIG. 4 illustrates an example of the overall operation of a DASH-based adaptive streaming model.

A DASH-based adaptive streaming model according to an embodiment 400 shown in the figure describes operations between an HTTP server and a DASH client. Here, DASH (dynamic adaptive streaming over HTTP) is a protocol for supporting HTTP-based adaptive streaming and may dynamically support streaming depending on the network condition. Accordingly, AV content may be seamlessly played.

First, the DASH client may acquire an MPD. The MPD may be delivered from a service provider such as the HTTP server. The DASH client may make a request to the server for segments described in the MPD, based on the information for accessing the segments. The request may be made based on the network condition.

The DASH client may acquire the segments, process the segments through a media engine and display the processed segments on a screen. The DASH client may request and acquire necessary segments by reflecting the playback time and/or the network condition in real time (Adaptive Streaming). Accordingly, content may be seamlessly played.

The MPD (media presentation description) is a file containing detailed information allowing the DASH client to dynamically acquire segments, and may be represented in an XML format.

A DASH client controller may generate a command for requesting the MPD and/or segments considering the network condition. In addition, the DASH client controller may control an internal block such as the media engine to use the acquired information.

An MPD parser may parse the acquired MPD in real time. Accordingly, the DASH client controller may generate a command for acquiring necessary segments.

A segment parser may parse the acquired segment in real time. Internal blocks such as the media engine may perform a specific operation according to the information contained in the segment.

The HTTP client may make a request to the HTTP server for a necessary MPD and/or segments. In addition, the HTTP client may deliver the MPD and/or segments acquired from the server to the MPD parser or the segment parser.

The media engine may display content on the screen based on the media data included in the segments. In this operation, the information of the MPD may be used.

The DASH data model may have a hierarchical structure 410. Media presentation may be described by the MPD. The MPD may describe a time sequence of multiple periods for the media presentation. A period may represent one section of media content.

In one period, data may be included in adaptation sets. An adaptation set may be a set of multiple media content components which may be exchanged. An adaption may include a set of representations. A representation may correspond to a media content component. In one representation, content may be temporally divided into multiple segments, which may be intended for appropriate accessibility and delivery. To access each segment, URL of each segment may be provided.

The MPD may provide information related to media presentation. A period element, an adaptation set element, and a representation element may describe a corresponding period, a corresponding adaptation set, and a corresponding representation, respectively. A representation may be divided into sub-representations. A sub-representation element may describe a corresponding sub-representation.

Here, common attributes/elements may be defined. The common attributes/elements may be applied to (included in) sub-representations. The common attributes/elements may include EssentialProperty and/or SupplementalProperty.

The EssentialProperty may be information including elements regarded as essential elements in processing the corresponding media presentation related data. The SupplementalProperty may be information including elements which may be used in processing the corresponding media presentation related data. In an embodiment, descriptors which will be described later may be defined in the EssentialProperty and/or the SupplementalProperty when delivered through an MPD.

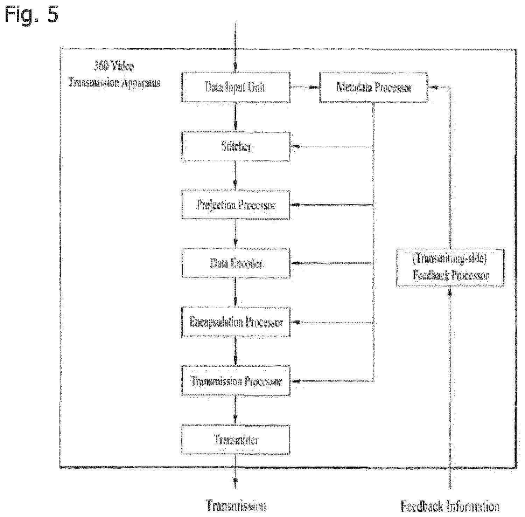

FIG. 5 is a diagram schematically illustrating a configuration of a 360 video transmission apparatus according to an embodiment.

The 360 video transmission apparatus according to the embodiment may perform operations related to the preparation process or transmission process described above. The 360 video transmission apparatus may include a data input unit, a stitcher, a projection processor, a region-wise packing processor (not shown), a metadata processor, a (transmitting-side) feedback processor, a data encoder, an encapsulation processor, a transmission processor, and/or a transmitter as internal/external elements.

The data input unit may receive images/videos for each captured viewpoint. These viewpoint-specific images/videos may be images/videos captured by one or more cameras. The data input unit may also receive metadata generated during the capture process. The data input unit may deliver the input images/videos for each viewpoint to the stitcher, and deliver the metadata of the capture process to the signaling processor.

The stitcher may perform stitching on the captured images/videos for each viewpoint. The stitcher may deliver the stitched 360 video data to the projection processor. When necessary, the stitcher may receive necessary metadata from the metadata processor and use the same for stitching. The stitcher may deliver metadata generated in the stitching process to the metadata processor. The metadata of the stitching process may contain information such as an indication of whether stitching has been performed and a stitching type.

The projection processor may project the stitched 360 video data onto a 2D image. The projection processor may perform projection according to various schemes, which will be described later. The projection processor may perform mapping in consideration of a corresponding depth of 360 video data for each viewpoint. When necessary, the projection processor may receive metadata necessary for projection from the metadata processor and use the same in the projection operation. The projection processor may deliver the metadata generated in the projection process to the metadata processor. The metadata of the projection processor may include a type of a projection scheme.

The region-wise packing processor (not shown) may perform the above-described region-wise packing process. That is, the region-wise packing processor may perform processing such as dividing the projected 360 video data into regions, rotating or rearranging each region, or changing the resolution of each region. As described above, the region-wise packing process is optional. When region-wise packing is skipped, the region-wise packing processor may be omitted. When necessary, the region-wise packing processor may receive metadata necessary for region-wise packing from the metadata processor and use the same in the region-wise packing operation. The region-wise packing processor may deliver the metadata generated in the region-wise packing process to the metadata processor. The metadata of the region-wise packing processor may include a rotation degree and size of each region.

According to an embodiment, the stitcher, the projection processor and/or the region-wise packing processor described above may be implemented by one hardware component.

The metadata processor may process metadata that may be generated in the capture process, stitching process, projection process, region-wise packing process, encoding process, encapsulation process, and/or transmission process. Using the metadata, the metadata processor may generate 360 video-related metadata. According to an embodiment, the metadata processor may generate 360 video-related metadata in the form of a signaling table. Depending on the signaling context, the 360 video-related metadata may be referred to as metadata or 360 video-related signaling information. The metadata processor may also deliver the acquired or generated metadata to internal elements of the 360 video transmission apparatus, as necessary. The metadata processor may transmit the 360 video-related metadata to the data encoder, the encapsulation processor and/or the transmission processor such that the metadata may be transmitted to the receiving side.

The data encoder may encode 360 video data projected onto a 2D image and/or 360 video data packed region-wise. The 360 video data may be encoded in various formats.

The encapsulation processor may encapsulate the encoded 360 video data and/or the 360 video-related metadata in the form of a file. Here, the 360 video-related metadata may be received from the metadata processor described above. The encapsulation processor may encapsulate the data in a file format such as ISOBMFF, or CFF, or process the data into DASH segments or the like. According to an embodiment, the encapsulation processor may include the 360 video-related metadata in a file format. The 360-related metadata may be included, for example, in various levels of boxes in the ISOBMFF, or included as data in separate tracks in the file. According to an embodiment, the encapsulation processor may encapsulate the 360 video-related metadata into a file. The transmission processor may process the encapsulated 360 video data according to the file format so as to be transmitted. The transmission processor may process the 360 video data according to any transport protocol. The processing for transmission may include processing for delivery over a broadcast network, and processing for delivery over a broadband. According to an embodiment, the transmission processor may receive not only the 360 video data, but also the 360 video-related metadata from the metadata processor, and may process the same so as to be transmitted.

The transmitter may transmit, over a broadcast network and/or a broadband, the 360 video data and/or 360 video-related metadata processed for transmission. The transmitter may include an element for transmission over a broadcast network and/or an element for transmission over a broadband.

According to an embodiment, the 360 video transmission apparatus may further include a data storage unit (not shown) as an internal/external element. The data storage unit may store the encoded 360 video data and/or 360 video-related metadata before transmitting the same to the transmission processor. These data may be stored in a file format such as ISOBMFF. When a 360 video is transmitted in real time, the data storage unit may not be needed. However, when the video is transmitted on-demand, in NRT (Non Real Time), or over a broadband. The encapsulated 360 data may be stored in the data storage unit for a certain period of time and then transmitted.

According to another embodiment, the 360 video transmission apparatus may further include a (transmitting-side) feedback processor and/or a network interface (not shown) as internal/external elements. The network interface may receive feedback information from the 360 video reception apparatus according to the present disclosure, and deliver the same to the transmitting-side feedback processor. The transmitting-side feedback processor may deliver the feedback information to the stitcher, the projection processor, the region-wise packing processor, the data encoder, the encapsulation processor, the metadata processor, and/or the transmission processor. According to an embodiment, after the feedback information is delivered to the metadata processor, it may in turn be delivered to each internal element. The internal elements that receive the feedback information may reflect the feedback information in subsequent processing of the 360 video data.

According to another embodiment of the 360 video transmission apparatus, the region-wise packing processor may rotate each region and map the same onto a 2D image. In this operation, the respective regions may be rotated at different angles in different directions, and then mapped onto the 2D image. The rotation of the regions may be performed in consideration of a portion that neighbored the 360 video data on the spherical surface or was stitched before projection. Information about the rotation of the regions, that is, the rotation directions, angles, and the like, may be signaled by 360 video-related metadata. According to another embodiment of the 360 video transmission apparatus, the data encoder may perform encoding differently for each region. The data encoder may encode a specific region with high quality and other regions with low quality. The transmitting-side feedback processor may deliver the feedback information received from the 360 video reception apparatus to the data encoder, such that the data encoder uses a differentiated encoding method for each region. For example, the transmitting-side feedback processor may deliver the viewport information received from the receiving side to the data encoder. The data encoder may encode regions including an area indicated by the viewport information with higher quality (UHD, etc.) than the other regions.

According to another embodiment of the 360 video transmission apparatus, the transmission processor may perform processing for transmission differently for each region. The transmission processor may apply different transmission parameters (modulation order, code rate, etc.) for the respective regions, such that the data transmitted for each region may have different robustness.

Then, the transmitting-side feedback processor may deliver the feedback information received from the 360 video reception apparatus to the transmission processor, such that the transmission process performs the differentiated transmission processing for each region. For example, the transmitting-side feedback processor may deliver viewport information received from the receiving side to the transmission processor. The transmission processor may perform processing for transmission on regions including an area indicated by the viewport information, such that the regions may have higher robustness than the other regions.

The internal/external elements of the 360 video transmission apparatus described above may be hardware elements implemented in hardware. According to an embodiment, the internal/external elements may be changed, omitted, or replaced with other elements. According to an embodiment, supplemental elements may be added to the 360 video transmission apparatus.

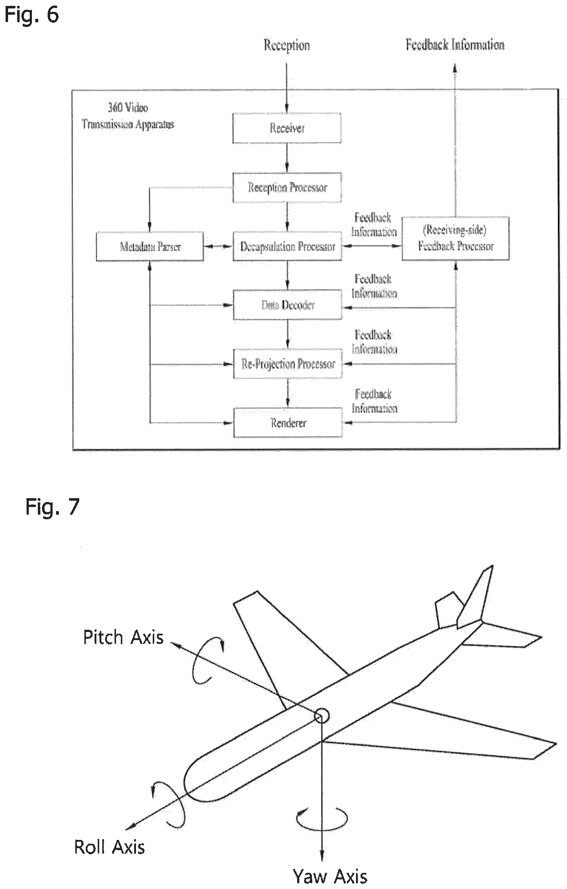

FIG. 6 is a diagram schematically illustrating a configuration of a 360 video reception apparatus according to an embodiment.

According to an embodiment, the 360 video reception apparatus may perform operations related to the processing process and/or the rendering process described above. The 360 video reception apparatus may include a receiver, a reception processor, a decapsulation processor, a data decoder, a metadata parser, a (receiving-side) feedback processor, a re-projection processor, and/or a renderer as internal/external elements. A signaling parser may be referred to as a metadata parser.

The receiver may receive 360 video data transmitted by the 360 video transmission apparatus according to an embodiment. Depending on the transmission channel, the receiver may receive 360 video data over a broadcast network or a broadband.

The reception processor may process the received 360 video data according to a transport protocol. The reception processor may perform the reverse of the process of the above-described transmission processor such that the reverse process corresponds to the processing for transmission on the transmitting side. The reception processor may deliver the acquired 360 video data to the decapsulation processor, and deliver the acquired 360 video-related metadata to the metadata parser. The 360 video-related metadata acquired by the reception processor may be in the form of a signaling table.

The decapsulation processor may decapsulate the 360 video data received in the form of a file from the reception processor. The decapsulation processor may decapsulate the files according to ISOBMFF or the like to acquire the 360 video data or 360 video-related metadata. The acquired 360 video data may be delivered to the data decoder, and the acquired 360 video-related metadata may be delivered to the metadata parser. The 360 video-related metadata acquired by the decapsulation processor may be in the form of a box or track in the file format. When necessary, the decapsulation processor may receive metadata needed for decapsulation from the metadata parser.

The data decoder may decode the 360 video data. The data decoder may receive metadata needed for decoding from the metadata parser. The 360 video-related metadata acquired in the data decoding process may be delivered to the metadata parser.

The metadata parser may parse/decode the 360 video-related metadata. The metadata parser may deliver the acquired metadata to the data decapsulation processor, the data decoder, the re-projection processor, and/or the renderer.

The re-projection processor may re-project the decoded 360 video data. The re-projection processor may re-project the 360 video data onto a 3D space. The shape of the 3D space may depend on the employed 3D model. The re-projection processor may receive metadata needed for re-projection from the metadata parser. For example, the re-projection processor may receive information about the type of the employed 3D model and the corresponding detailed information from the metadata parser. According to an embodiment, the re-projection processor may re-project only 360 video data corresponding to a specific area in the 3D space onto the 3D space using the metadata needed for re-projection.

The renderer may render the re-projected 360 degree video data. As described above, the 360 video data may be rendered in the 3D space. In the case where the two processes occur at once as described above, the re-projection processor and the renderer may be integrated, and the processes may all be performed by the renderer. According to an embodiment, the renderer may render only a part that the user is viewing according to the viewing position information about the user.

The user may view some areas of the rendered 360 video through a VR display or the like. The VR display is a device that plays back the 360 video, and may be included in the 360 video reception apparatus (in a tethered state) or connected to the 360 video reception apparatus as a separate device (in an un-tethered state).

According to an embodiment, the 360 video reception apparatus may further include a (receiving-side) feedback processor and/or a network interface (not shown) as internal/external elements. The receiving-side feedback processor may acquire feedback information from the renderer, the re-projection processor, the data decoder, the decapsulation processor, and/or the VR display, and process the same. The feedback information may include viewport information, head orientation information, and gaze information. The network interface may receive the feedback information from the receiving-side feedback processor and transmit the same to the 360 video transmission apparatus.

As described above, the feedback information may not only be delivered to the transmitting side, but also be consumed at the receiving side. The receiving-side feedback processor may deliver the acquired feedback information to internal elements of the 360 video reception apparatus such that the information may be reflected in processes such as rendering. The receiving-side feedback processor may deliver the feedback information to the renderer, the re-projection processor, the data decoder and/or the decapsulation processor. For example, the renderer may preferentially render an area viewed by a user based on the feedback information. The decapsulation processor and the data decoder may preferentially decapsulate and decode the area that is being viewed or to be viewed by the user.

The internal/external elements of the 360 video reception apparatus according to the embodiment described above may be hardware elements implemented in hardware. According to an embodiment, the internal/external elements may be changed, omitted, or replaced with other elements. According to an embodiment, supplemental elements may be added to the 360 video reception apparatus.

In another aspect, the operation method of the 360 video reception apparatus according to the above-described embodiment may be related to a method of transmitting 360 video and a method of receiving 360 video. The methods of transmitting/receiving a 360 video according to an embodiment may be implemented by the 360 video transmission/reception apparatuses according to the above-described embodiment or by the embodiments of the apparatuses.

The embodiments of the 360 video transmission/reception apparatuses, the transmission/reception methods, and the internal/external elements thereof according to the above-described embodiment may be combined with each other. For example, the embodiments of the projection processor and the embodiments of the data encoder may be combined with each other to configure as many embodiments of the 360 video transmission apparatus as the combinations.

FIG. 7 is a diagram illustrating the concept of aircraft principal axes for describing a 3D space according to an embodiment.

In the present disclosure, the concept of aircraft principal axes may be used to express a specific point, position, direction, spacing, area, and the like in a 3D space. That is, in the present disclosure, the concept of 3D space given before or after projection may be described, and the concept of aircraft principal axes may be used to perform signaling thereon. According to an embodiment, a method based on a Cartesian coordinate system emplying X, Y, and Z axes or a spherical coordinate system may be used.

An aircraft may rotate freely in three dimensions. The three-dimensional axes are called a pitch axis, a yaw axis, and a roll axis, respectively. In this specification, these axes may be simply expressed as pitch, yaw, and roll or as a pitch direction, a yaw direction, a roll direction.

In one example, the roll axis may correspond to the X-axis or back-to-front axis of the Cartesian coordinate system. Alternatively, the roll axis may be an axis extending from the front nose to the tail of the aircraft in the concept of aircraft principal axes, and rotation in the roll direction may refer to rotation about the roll axis. The range of roll values indicating the angle rotated about the roll axis may be from -180 degrees to 180 degrees, and the boundary values of -180 degrees and 180 degrees may be included in the range of roll values.

In another example, the pitch axis may correspond to the Y-axis or side-to-side axis of the Cartesian coordinate system. Alternatively, the pitch axis may refer to an axis around which the front nose of the aircraft rotates upward/downward. In the illustrated concept of aircraft principal axes, the pitch axis may refer to an axis extending from one wing to the other wing of the aircraft. The range of pitch values, which represent the angle of rotation about the pitch axis, may be between -90 degrees and 90 degrees, and the boundary values of -90 degrees and 90 degrees may be included in the range of pitch values.

In another example, the yaw axis may correspond to the Z axis or vertical axis of the Cartesian coordinate system. Alternatively, the yaw axis may refer to a reference axis around which the front nose of the aircraft rotates leftward/rightward. In the illustrated concept of aircraft principal axes, the yaw axis may refer to an axis extending from the top to the bottom of the aircraft. The range of yaw values, which represent the angle of rotation about the yaw axis, may be from -180 degrees to 180 degrees, and the boundary values of - 180 degrees and 180 degrees may be included in the range of yaw values.

In 3D space according to an embodiment, a center point that is a reference for determining a yaw axis, a pitch axis, and a roll axis may not be static.

As described above, the 3D space in the present disclosure may be described based on the concept of pitch, yaw, and roll.

As described above, the video data projected on a 2D image may be subjected to the region-wise packing process in order to increase video coding efficiency and the like. The region-wise packing process may refer to a process of dividing the video data projected onto the 2D image into regions and processing the same according to the regions. The regions may refer to regions obtained by dividing the 2D image onto which 360-degree video data is projected. The divided regions of the 2D image may be distinguished by projection schemes. Here, the 2D image may be called a video frame or a frame.

In this regard, the present disclosure proposes metadata for the region-wise packing process according to a projection scheme and a method of signaling the metadata. The region-wise packing process may be more efficiently performed based on the metadata.

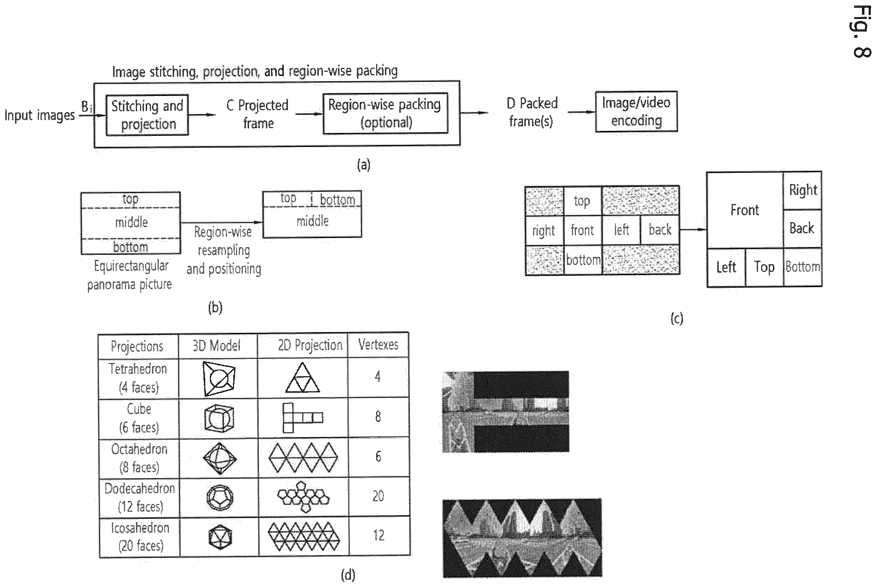

FIG. 8 exemplarily illustrates a 2D image to which a 360 video processing process and a projection format-based region-wise packing process are applied.

FIG. 8(a) may illustrate a process of processing input 360-degree video data. Referring to FIG. 8(a), 360-degree video data of the input viewing position may be stitched and projected onto a 3D projection structure according to various projection schemes. The 360-degree video data projected onto the 3D projection structure may be represented as a 2D image. That is, the 360 video data may be stitched and projected into the 2D image. The 2D image into which the 360 video data is projected may be represented as a projected frame. In addition, the above-described may be performed on the projected frame. That is, processing such as dividing an area including the projected 360 video data on the projected frame into regions, rotating or rearranging each region, or changing the resolution of each region may be performed. In other words, the region-wise packing process may represent a process of mapping the projected frame to one or more packed frames. Performing the region-wise packing process may be optional. When the region-wise packing process is skipped, the packed frame may be identical to the projected frame. When the region-wise packing process is applied, each region of the projected frame may be mapped to a region of the packed frame, and metadata indicating the position, shape, and size of the region of the packed frame to which each region of the projected frame is mapped may be derived.

FIGS. 8(b) and 8(c) may show examples in which each region of the projected frame is mapped to a region of the packed frame. Referring to FIG. 8(b), the 360 video data may be projected into a 2D image (or frame) according to a panoramic projection scheme. The top region, middle region, and bottom region of the projected frame may be subjected to a region-wise packing process and rearranged as shown on the right side of the figure. Here, the top region may represent the top surface of the panorama on a 2D image, the middle region may represent the middle surface of the panorama on the 2D image, and the bottom region may represent the bottom surface of the panorama on the 2D image. Referring to FIG. 8(c), the 360 video data may be projected into a 2D image (or frame) according to a cubic projection scheme. The front region, the back region, the top region, the bottom region, the right region, and the left region of the projected frame may be subjected to the region-wise packing process and rearranged as shown on the right side of the figure. Here, the front region may represent the front face of the cube on the 2D image, and the back region may represent the back face of the cube on the 2D image. In addition, the top region may represent the top face of the cube on the 2D image, and the bottom region region may represent the bottom face of the cube on the 2D image. The right region may represent the right face of the cube on the 2D image, and the left region may represent the left face of the cube on the 2D image.

FIG. 8(d) may show various 3D projection formats in which the 360 video data may be projected. Referring to FIG. 8(d), the 3D projection formats may include tetrahedron, cube, octahedron, dodecahedron, and icosahedron. The 2D projections shown in FIG. 8(d) may represent projected frames representing 360 video data projected onto a 3D projection format as a 2D image.

According to an embodiment, as the projection formats, for example, some or all of various projection formats (or projection schemes) may be used. A projection format used for 360 video may be indicated through, for example, the projection format field of metadata.

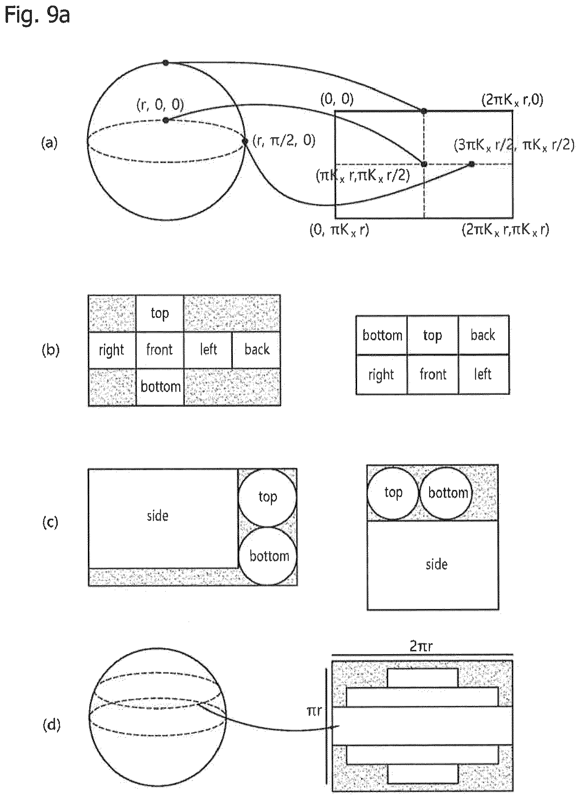

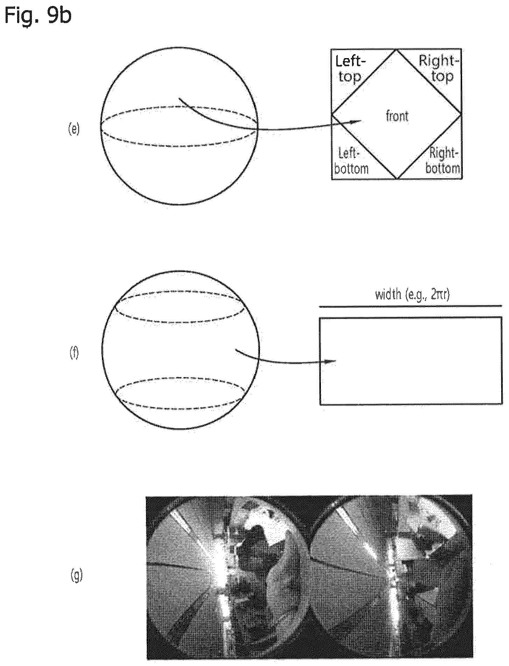

FIGS. 9A and 9B exemplarily show projection formats according to some embodiments.

FIG. 9A(a) may show an equilateral projection format. When the equilateral projection format is used, a point $(r, \theta_0, 0)$ on the spherical surface, that is, a point with $\theta = \theta_0$ and $\varphi = 0$, may be mapped to a center pixel of the 2D image. In addition, the principal point of the front camera may be assumed to be the point $(r, 0, 0)$ on the spherical surface. Also, $\varphi_0$ may be fixed to $\varphi_0 = 0$. Accordingly, the value $(x, y)$ obtained by transformation into the XY coordinate system may be transformed into a pixel $(X, Y)$ on the 2D image by the following equation.

Equation 1

$$X = K_x * x + X_O = K_x * (\theta - \theta_0) * r + X_O$$
$$Y = -K_y * y - Y_O$$

In addition, when the left top pixel of the 2D image is positioned at (0,0) of the XY coordinate system, the offset value along the x-axis and the offset value along the y-axis may be given by the following equation.

Equation 2

$$X_O = K_x * \pi * r$$
$$Y_O = -K_y * \pi/2 * r$$

Based on this equation, the equation for a transformation into to the XY coordinate system may be given as follows.

Equation 3

$$X = K_x x + X_O = K_x * (\pi + \theta - \theta_0) * r$$
$$Y = -K_y y - Y_O = K_y * (\pi/2 - \varphi) * r$$

For example, when $\theta_0 = 0$, that is, when the center pixel of the 2D image indicates data with $\theta = 0$ on a spherical surface, the spherical surface may be mapped to an area having a width = $2K_x \pi r$ and a height = $K_x \pi r$ in the 2D image with respect to (0,0). Data having $\varphi = \pi/2$ on the spherical surface may be mapped to the entire top side of the 2D image. In addition, data of (r, $\pi/2$, 0) on the spherical surface may be mapped to a point ($3\pi K_x r/2$, $\pi K_x r/2$) on the 2D image.

On the receiving side, 360 video data on the 2D image may be re-projected onto a spherical surface. The transformation question for this operation may be given as follows.

Equation 4

$$\theta = \theta_0 + X/K_x * r - \pi$$
$$\varphi = \pi/2 - Y/K_y * r$$

For example, on a 2D image, a pixel whose XY coordinate value is ($K_x \pi r$, 0) may be re-projected to a point where $\theta = \theta_0$ and $\varphi = \pi/2$ on a spherical surface.

FIG. 9A(b) may show a cubic projection format. For example, stitched 360 video data may be displayed on a spherical surface. The projection processor may divide the 360 video data in a cube shape to project the same onto a 2D image. The 360 video data on the spherical face may correspond to each face of the cube, and may be projected onto the 2D image as shown on the left side or right side of (b) in FIG. 9A.

FIG. 9A(c) may show a cylindrical projection format. Assuming that the stitched 360 video data can be displayed on a spherical surface, the projection processor may divide the 360 video data in a cylinder shape and project the same onto a 2D image. The 360 video data on the spherical surface may correspond to the side, top, and bottom of the cylinder, respectively, and may be projected onto the 2D image as shown on the left side or right side of (c) in FIG. 9A.

FIG. 9A(d) may show a tile-based projection format. When a tile-based projection scheme is used, the above-described projection processor may divide the 360 video data on the spherical surface into one or more detailed regions as shown in FIG. 9A(d) to project the same onto a 2D image. The detailed regions may be referred to as tiles.

FIG. 9B(e) may show a pyramid projection format. When it is assumed that the stitched 360 video data can be displayed on a spherical surface, the projection processor may consider the 360 video data to have a pyramid shape and divide the respective faces thereof to project the same onto a 2D image. The 360 video data on the spherical surface may correspond to the front side of the pyramid and the four sides (left top, left bottom, right top, right bottom) of the pyramid, respectively, and may be projected as shown on the left side or right side of (e) in FIG. 9B. Here, the front may be an area including data acquired by a camera facing forward.

FIG. 9B(f) may show a panoramic projection format. When a panoramic projection format is used, the above-described projection processor may project, onto a 2D image, only a side surface of the 360 video data on a spherical surface, as shown in FIG. 9B(f). This may be the same as the case where the top and bottom are not present in the cylindrical projection scheme.

According to an embodiment, projection may be performed without stitching. FIG. 9B(g) may show a case where projection is performed without stitching. When projection is performed without stitching, the above-described projection processor may project 360 video data onto a 2D image as shown in FIG. 9B(g). In this case, stitching may be skipped, and each image acquired by the camera may be projected directly onto the 2D image.

Referring to FIG. 9B(g), two images may be projected onto a 2D image without stitching. Each image may be a fish-eye image acquired through each sensor in a spherical camera (or a fish-eye camera). As described above, the receiving side may stitch the image data acquired from the camera sensors, and map the stitched image data onto a spherical surface to render a spherical video, that is, 360 video.

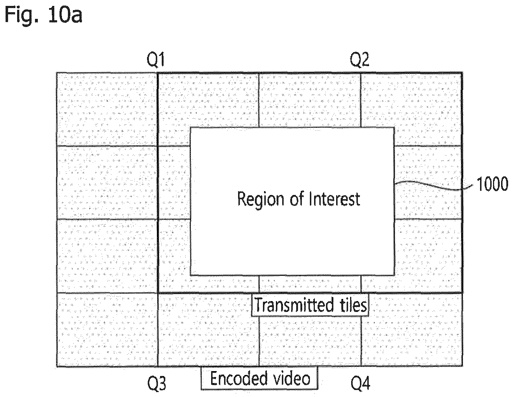

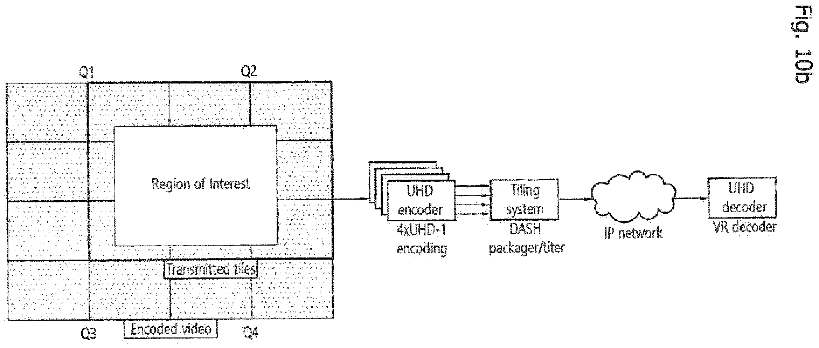

FIGS. 10A and 10B are diagrams illustrating tiles according to some embodiments.

The 360 video data obtained after being projected onto a 2D image or and then subjected to region-wise packing may be divided into one or more tiles. FIG. 10A shows that one 2D image is divided into 16 tiles. Here, the 2D image may be the aforementioned projected frame or packed frame. According to another embodiment of the 360 video transmission apparatus of the present disclosure, the data encoder may independently encode each tile.

The region-wise packing and tiling described above be distinguished from each other. The region-wise packing may refer to dividing 360 video data projected onto a 2D image into regions and processing the regions to improve coding efficiency or to adjust resolution. The tiling may referred to an operation of the data decoder of dividing the projected frame or the packed frame into sections called tiles and independently encoding each tile. When 360 video is provided, the user does not consume all parts of the 360 video simultaneously. The tiling may make it possible to transmit or consume only tiles corresponding to an important part or a certain part, such as a viewport currently viewed by a user, to on the receiving side on a limited bandwidth. When tiling is performed, the limited bandwidth may be utilized more efficiently, and the receiving side may reduce the computational load compared to a case where all 360 video data are processed at once.

A region and a tile are distinguished from each other, and accordingly the region and the tile do not need to be the same. However, according to an embodiment, the region and the tile may refer to the same area. According to an embodiment, region-wise packing is performed according to a tile, and thus the region and the tile may be the same. According to an embodiment, when each face according to the projection scheme and a region are the same, each face according to the projection scheme, the region, and the tile may refer to the same area. Depending on the context, a region may be called a VR region, or a tiled may be called as a tile region.

A region of interest (ROI) may refer to an area of interest of users, as suggested by a 360 content provider. In producing a 360 video, the 360 content provider may create the 360 video, assuming that users will be interested in a certain area. According to an embodiment, the ROI may correspond to an area in which important content is played in the content of the 360 video.

According to another embodiment of the 360 video transmission/reception apparatus, the receiving-side feedback processor may extract and collect viewport information and transmit the same to the transmitting-side feedback processor. In this process, viewport information may be transferred between both sides using both network interfaces. In the 2D image of FIG. 10A, a viewport 1000 is displayed. Here, the viewport may span 9 tiles on the 2D image.

In this case, the 360 video transmission apparatus may further include a tiling system. According to an embodiment, the tiling system may be arranged next to the data encoder (as shown in FIG. 10B), may be included in the above-described data encoder or transmission processor, or may be included in the 360 video transmission apparatus as a separate internal/external element.

The tiling system may receive viewport information from the feedback processor of the transmitting side. The tiling system may select and transmit only tiles including the viewport region. In the 2D image shown in FIG. 10A, only 9 tiles including the viewport region 1000 among the 16 tiles may be transmitted. Here, the tiling system may transmit the tiles over broadband in a unicast manner. This is because the viewport region varies among users.

In this case, the transmitting-side feedback processor may deliver the viewport information to the data encoder. The data encoder may encode the tiles including the viewport region with higher quality than the other tiles.

In this case, the transmitting-side feedback processor may deliver the viewport information to the metadata processor. The metadata processor may deliver metadata related to the viewport region to each internal element of the 360 video transmission apparatus, or may include the same in the 360 video-related metadata.

As the tiling operation is performed, the transmission bandwidth may be saved, and data processing/transmission may be performed efficiently by performing differentiated processing on each tile.

The above-described embodiments related to the viewport region may be applied to specific regions other than the viewport region in a similar manner. For example, a region that users are determined to be mainly interested in through the gaze analysis described above, the ROI, and a region that is played first when the user views 360 video through a VR display (initial viewpoint) may be processed in the same manner as the viewport region described above.

According to another embodiment of the 360 video transmission apparatus, the transmission processor may process each tile differently for transmission. The transmission processor may apply different transmission parameters (modulation order, code rate, etc.) for the respective tiles, such that the data delivered for each tile may have different robustness.

Then, the transmitting-side feedback processor may deliver the feedback information received from the 360 video reception apparatus to the transmission processor, such that the transmission processor performs differentiated processing on each tile for transmission. For example, the transmitting-side feedback processor may deliver viewport information received from the receiving side to the transmission processor. The transmission processor may perform processing for transmission on the tiles including the viewport region, such that the tiles may have higher robustness than the other tiles.

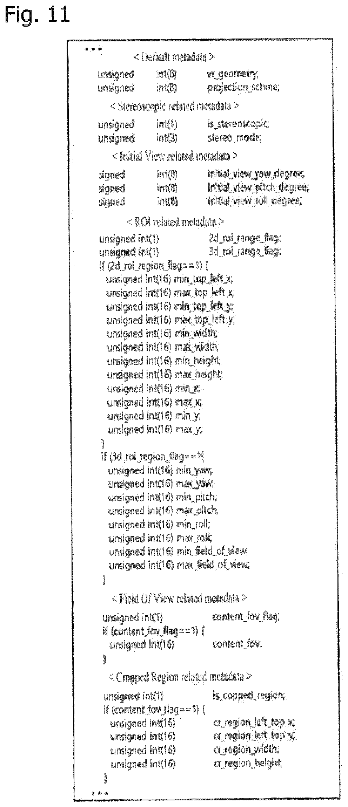

FIG. 11 shows an example of 360-degree video-related metadata according to an embodiment.

As described above, the 360-degree video-related metadata may include various metadata about 360-degree video. Depending on the context, the 360-degree video-related metadata may be referred to as 360-degree video related signaling information. The 360-degree video-related metadata may be transmitted in a separate signaling table, may be transmitted in a DASH MPD, or may be transmitted in the form of a box in a file format such as ISOBMFF. When the 360-degree video-related metadata is included in a box form, it may be included in various levels such as file, fragment, track, sample entry, and sample to include metadata for the data of the corresponding level.

According to an embodiment, a part of the metadata which will described later may be configured and delivered in a signaling table, and the other part thereof may be included in a file format in a box or track form.

According to an embodiment of the 360-degree video-related metadata, the 360-degree video-related metadata may include default metadata related to a projection scheme, stereoscopic related metadata, and initial view/initial viewpoint-related metadata, ROI-related metadata, FOV (Field of View)-related metadata, and/or cropped region-related metadata. According to an embodiment, the 360-degree video-related metadata may further include supplemental metadata.

Embodiments of 360-degree video-related metadata may include at least one of the default metadata, the stereoscopic related metadata, the initial view/viewpoint-related metadata, the ROI-related metadata, the FOV-related metadata, the cropped region-related metadata, and/or metadata that may be added later. Embodiments of the 360-degree video-related metadata according to the present disclosure may be configured in various ways according to the number of cases of detailed metadata included in each embodiment. According to an embodiment, the 360-degree video-related metadata may further contain supplemental information in addition to the above-described information.

The stereo_mode field may indicate a 3D layout supported by the corresponding 360-degree video. Only this field may indicate whether the 360-degree video supports the 3D layout. In this case, the is_stereoscopic field described above may be omitted. When the value of this field is 0, the 360-degree video may be in the mono mode. That is, the projected 2D image may include only one mono view. In this case, the 360-degree video may not support the 3D layout.

When the value of this field is 1 or 2, the 360-degree video may conform to a left-right layout and a top-bottom layout, respectively. The left-right layout and the top-bottom layout may also be called a side-by-side format and a top-bottom format, respectively. In the left-right layout, 2D images onto which the left/right images are projected may be positioned on the left and right in the image frame, respectively. In the top-bottom layout, the 2D images onto which the left/right images are projected may be positioned at the top and bottom of the image frame, respectively. When the other values for the field may be reserved for future use.

The initial view-related metadata may include information about a view (initial viewpoint) of the user when the 360-degree video is initially played. The initial view-related metadata may include an initial_view_yaw_degree field, an initial_view_pitch_degree field, and/or an initial_view_roll_degree field. According to an embodiment, the initial view-related metadata may further include supplemental information.

The initial view_yaw_degree field, the initial_view_pitch_degree field, and the initial_view_roll_degree field may indicate an initial view in playing back a corresponding 360-degree video. That is, the center point of the viewport that is initially displayed in playback may be indicated by these three fields. Specifically, the initial_view_yaw_degree field may indicate a yaw value for the initial view. That is, the initial view_yaw_degree field may indicate the direction (sign) and degree (angle) of rotation of the position of the center point about the yaw axis. The initial_view_pitch_degree field may indicate a pitch value for the initial view. That is, the initial_view_pitch_degree field may indicate the direction (sign) and degree (angle) of rotation of the position of the center point about the pitch axis. The initial view roll degree field may indicate a roll value for the initial view. That is, the initial_view_roll_degree field may indicate the direction (sign) and degree (angle) of rotation of the position of the center point about the roll axis. Based on the initial _view_yaw _degree field, the initial view_pitch_degree field, and the initial view roll degree field, an initial view in playing back a 360-degree video, that is, a center point of a viewport initially displayed in playback may be indicated. Thereby, a specific region of the 360-degree video may be displayed and provided to the user at the initial viewpoint. In addition, based on the field of view (FOV), the width and height of the initial viewport with respect to the indicated initial view may be determined. That is, using these three fields and the FOV information, the 360-degree video reception apparatus may provide the user with a certain region of the 360-degree video as an initial viewport.

According to an embodiment, the initial view indicated by the initial view-related metadata may vary among scenes. That is, the scene of the 360-degree video changes according to the temporal flow of the 360 content, and the initial view or initial viewport that the user sees first may vary among the scenes of the 360-degree video. In this case, the initial view-related metadata may indicate an initial view for each scene. To this end, the initial view-related metadata may further include a scene identifier for identifies a scene to which the corresponding initial view is applied. In addition, since the FOV may vary among the scenes of the 360-degree video, the initial view-related metadata may further include scene-specific FOV information indicating the FOV corresponding to a scene.

The ROI-related metadata may include information related to the ROI described above. The ROI-related metadata may include a 2d_roi_range_flag field and/or a 3d_roi_range_flag field. The 2d_roi_range_flag field may indicate whether the ROI-related metadata includes fields representing an ROI based on a 2D image, and the 3d_roi_range_flag field may indicate whether the ROI-related metadata includes fields representing an ROI based on 3D space. According to an embodiment, the ROI-related metadata may further include supplemental information such as differentiated encoding information according to the ROI and differentiated transmission processing information according to the ROI.

When the ROI-related metadata includes the fields representing an ROI based on a 2D image, the ROI-related metadata may include a min_top_left_x field, a max_top_left_x field, a min_top_left_y field, a max_top_left_y field, a min_width field, a max width field, a min_height field, a max_height field, a min_x field, a max_x field, a min_y field, and/or a max_y field.

The min_top_left_x field, the max top left x field, the min_top_left_y field, and the max_top_left_y field may indicate minimum/maximum values of the coordinates of the top left end of the ROI. That is, the fields may indicate the minimum x coordinate, the maximum x coordinate, the minimum y coordinate, and the maximum y coordinate of the top left end, respectively.

The min width field, the max_width field, the min height field, and the max height field may indicate the minimum/maximum values of the width and height of the ROI. That is, the fields may indicate the minimum value of the width, the maximum value of the width, the minimum value of the height, and the maximum value of the height, respectively.

The min_x field, the max_x field, the min_y field, and the max_y field may indicate the minimum/maximum values of the coordinates in the ROI. That is, the fields may indicate the minimum x coordinate, the maximum x coordinate, the minimum y coordinate, and the maximum y coordinate among the coordinates in the ROI, respectivley. These fields may be omitted.

When the ROI-related metadata includes fields that represent an ROI based on coordinates in the 3D rendering space, the ROI-related metadata may include a min_yaw field, a max_yaw field, a min_pitch field, a max_pitch field, a min_roll field, a max_roll field, a min_field_of_view field, and/or a max_field_of_view field.

The min_yaw field, the max_yaw field, the min_pitch field, the max_pitch field, the min_roll field, and the max_roll field may indicate an area occupied by the ROI in 3D space with the minimum/maximum values of yaw, pitch, and roll. That is, these fields may indicate the minimum value of the amount of rotation about the yaw axis, the maximum value of the amount of rotation about the yaw axis, the minimum value of the amount of rotation about the pitch axis, the maximum value of the amount of rotation about the pitch axis, the minimum value of the amount of rotation about the roll axis, and the maximum value of the amount of rotation about the the roll axis.

The min_field_of_view field and the maxfield of view field may indicate the minimum/maximum value of the FOV of the corresponding 360-degree video data. FOV may refer to a field of view displayed at a time in playing back the 360-degree video. The min_field_of_view field and the max_field_of_view field may indicate the minimum and maximum values of the FOV, respectively. These fields may be omitted. These fields may be included in FOV-related metadata, which will be described later.

The FOV-related metadata may include information related to the FOV described above. The FOV-related metadata may include a content_fov_flag field and/or a content_fov field. According to an embodiment, the FOV-related metadata may further include supplemental information, such as information related to the minimum/maximum values of the FOV described above.

The content fov_flag field may indicate whether information about an FOV intended at the time of production of the 360-degree video is present. When the value of this field is 1, the content_fov field may be present.

The content fov field may indicate information about an FOV intended at the time of production of a corresponding 360-degree video. According to an embodiment, an area of a 360 image to be displayed to the user at one time may be determined based on a vertical or horizontal FOV of the 360-degree video reception apparatus. Alternatively, according to an embodiment, an area of the 360-degree image to be displayed to the user at one time to may be determined considering the FOV information of this field.

The cropped region-related metadata may include information about an area actually containing 360-degree video data in an image frame. The image frame may include an active video area onto which the 360-degree video data is actually projected and an unprojected area. In this case, the active video area may be referred to as a cropped region or a default display region. The active video area is a region where a 360-degree video is actually displayed on a VR display. The 360-degree video reception apparatus or VR display may process/display only the active video area. For example, when the aspect ratio of an image frame is 4:3, only the area of an image frame except a portion of the upper part and the lower part of the image frame may contain 360-degree video data. This area may be referred to as an active video area.

The cropped region-related metadata may include an is cropped region field, a cr region left top x field, a cr_region left top_y field, a cr region width field, and/or a cr_region_height field. According to an embodiment, the cropped region-related metadata may further include supplemental information.

The is_cropped_region field may be a flag indicating whether the entire area of the image frame is used by a 360-degree video reception apparatus or a VR display. Here, an area to which 360-degree video data is mapped or an area displayed on the VR display may be referred to as an active video area. The is_cropped_region field may indicate whether the entire image frame is an active video area. When only a part of the image frame is an active video area, the following 4 fields may be further added.

The cr_region_left_top_x field, the cr_region_left_top_y field, the cr_region_width field, and the cr region height field may indicate an active video area in an image frame. These fields may indicate the x coordinate of the top left of the active video area, the y coordinate of the top left of the active video area, the width of the active video area, and the height of the active video area, respectively. The width and the height may be expressed in units of pixels.

The 360 video-based VR system may provide a visual/aural experience for different viewing orientations with respect to the user's position for the 360 video based on the above-described 360 video processing process. A VR system that provides a visual/aural experience for different viewing orientations at the user's fixed position for the 360 video may be referred to as a 3 degree of freedom (DoF)-based VR system. A VR system capable of providing an extended visual/aural experience for different viewing orientations at different viewpoints or viewing positions may be referred to as a 3DoF+ or 3DoF plus-based VR system.

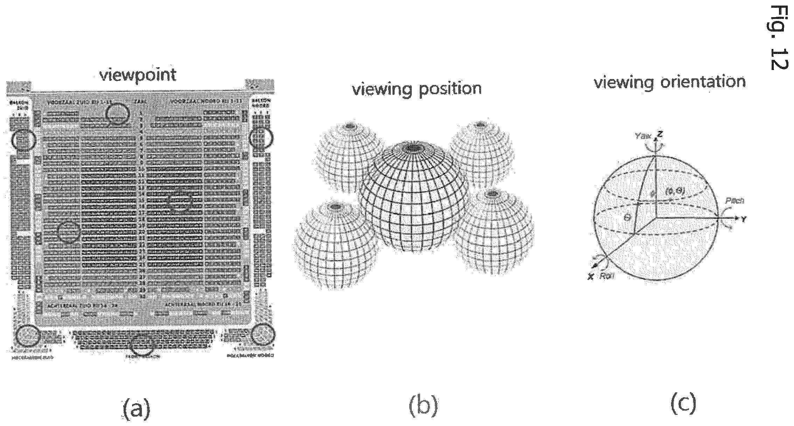

FIG. 12 schematically illustrates the concept of a viewpoint, a viewing position, and a viewing orientation.

Referring to FIG. 12, when a space (e.g., a theater) as shown in (a) is assumed, circles marked in the space may represent different viewpoints. The video/audio provided at the respective viewpoints in the same space may be associated with each other in the same time zone. In this case, different visual/aural experiences may be provided to the user according to change in the user's gaze direction (e.g., head motion) at a specific viewpoint. That is, spheres of various viewing positions as shown in (b) may be assumes for a specific viewpoint, and image/audio/text information reflecting the relative position of each viewing position may be provided.

As shown in (c), at a specific viewing position of a specific viewpoint, visual/aural information for various directions may be delivered as in the case of the existing 3DoF. At this time, a main source (e.g., image/audio/text) and various additional sources may be integrated and provided. In this case, information may be delivered in connection with or independently of the viewing orientation of the user.

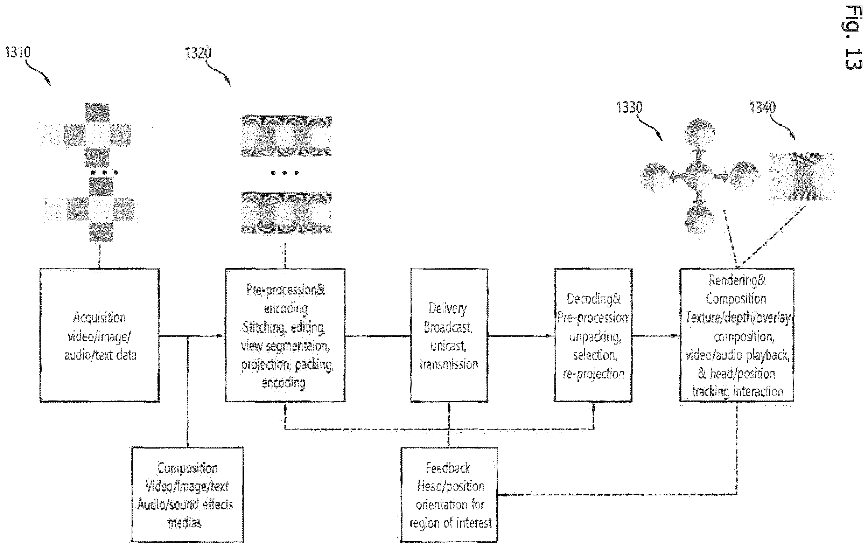

FIG. 13 is a diagram schematically showing an exemplary architecture for providing 3DoF+ video according to an embodiment.

FIG. 13 may show a flow diagram of a 3DoF+ end-to-end system including 3DoF+ image acquisition, pre-processing, transmission, (post) processing, rendering, and feedback processes.

Referring to FIG. 13, the acquisition process may refer to a process of acquiring 360 video through capture, composition, or generation of 360 video. Through this process, multiple pieces of image/audio information according to change in the gaze direction (e.g., head motion) may be acquired for multiple positions. Here, the image information may include depth information as well as visual information (e.g., texture). As illustrated in the example 1310 of image information, multiple pieces of information of different viewing positions according to different viewpoints may be acquired respectively.

The composition process may include a procedure and method for composing video/image, audio/sound effect and text (a subtitle, etc.) from external media as well as the information acquired through an image/audio input device to include the same in the user experience.

The pre-processing process may be a preparation (pre-processing) process for transmitting/delivering the acquired 360 video, and may include the stitching process, the projection process, the region-wise packing process, and/or the encoding process described above. That is, this process may include a pre-processing process and an encoding process for changing/supplementing the image/sound/text information according to the producer's intention. For example, the pre-processing of an image may include an operation of mapping the acquired visual information onto a 360 sphere (stitching), a correction operation of removing an area boundary, reducing a difference in color/brightness, or adding a visual effect to the image (editing), and operation of segmenting an image according to a view (view segmentation), and operation of mapping an image on a 360 sphere to a 2D image (projection), and operation of rearranging the image according to regions (region-wise packing), and an encoding operation of compressing the image information. As illustrated in the example 1320 in a video aspect, multiple projection images of different viewing positions according to different viewpoint may be generated.

The transmission process may refer to a process of processing and transmitting the image/audio data and metadata formed through the preparation process (pre-processing process). As a method of transmitting multiple image/audio data and related metadata of different viewing positions according to different viewpoints, a broadcast network

EP 3 823 274 B1

or a communication network may be used as described above, or a unidirectional delivery method may be used.

The post-processing and composition process may refer to a post-processing process for decoding received/stored video/audio/text data and finally playing back the same. For example, the post-processing process may include an unpacking process of unpacking the packed image and a re-projection process of restoring a 3D spherical image from a 2D projected image.

The rendering process may refer to a process of rendering and displaying the re-projected image/video data in 3D space. In this process, the video/audio signal may be reconstructed into a form for final output. The viewing orientation, viewing position/head position, and viewpoint of the user's ROI may be tracked, and only necessary image/audio/text information may be selectively used according to this information. In the case of an image signal, different viewing positions may be selected according to the user's ROI as in the example 1330. Finally, an image of a specific viewing orientation of a specific viewing position at a specific viewpoint, like the example 1340, may be output.

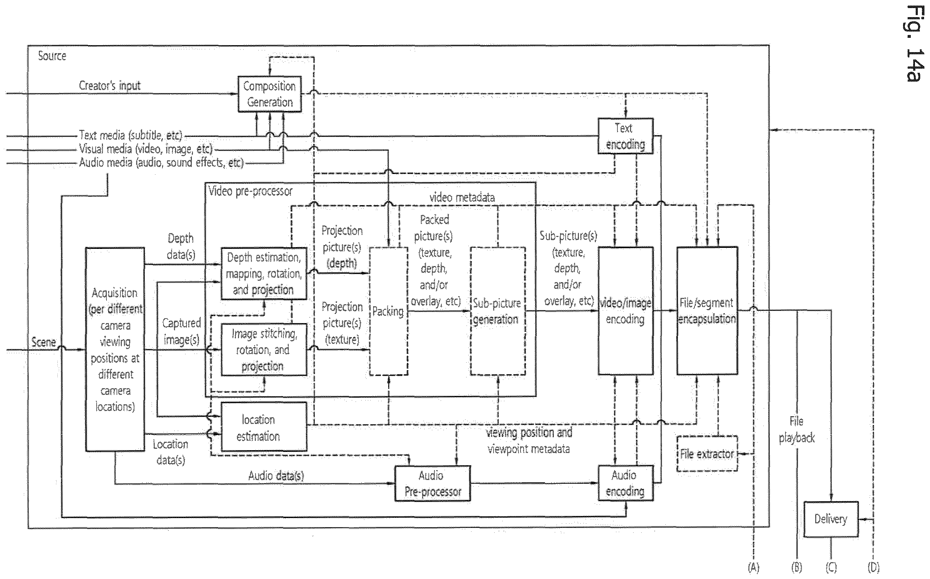

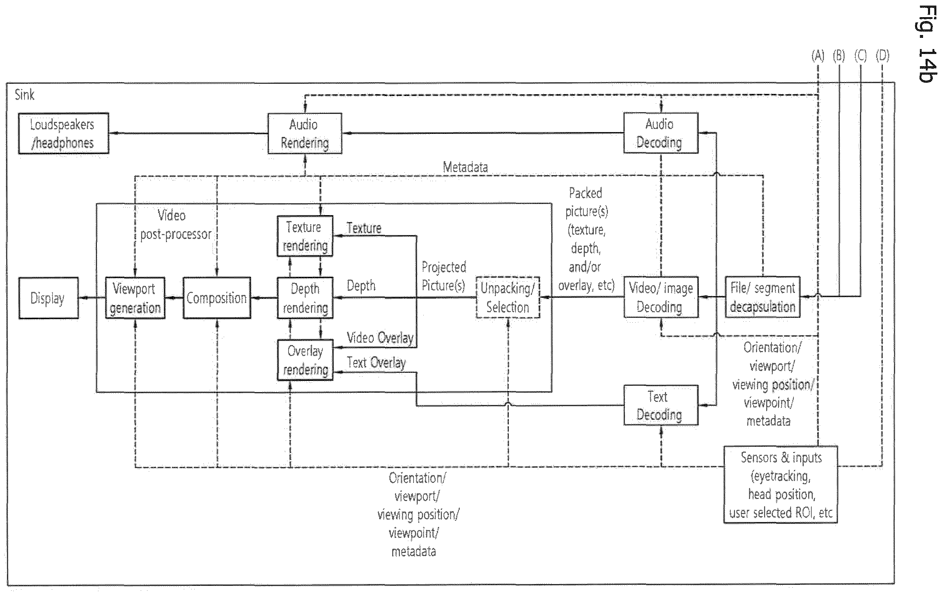

FIGS. 14A and 14B are diagrams illustrating an example of a 3DoF+ end-to-end system architecture.

3DoF+ 360 content as described above may be provided by the architecture of FIGS. 14A and 14B.

Referring to FIG. 14A, a 360 video transmission apparatus (transmission terminal) may include a acquisition unit configured to acquire 360 video (image)/audio data, a video/audio pre-processor configured to process the acquired data, and a composition generation unit configured to compose supplemental information, an encoding unit configured to encode text, audio, and a projected 360-degree video, an encapsulation unit configured to encapsulate the encoded data. As described above, the encoded data may be output in the form of a bitstream. The encoded data may be encapsulated in a file format such as ISOBMFF or CFF, or may be processed in the form of other DASH segments. The encoded data may be delivered to a 360 video reception apparatus through a digital storage medium. Alternatively, although not explicitly shown, the encoded data may be processed for transmission through a transmission processor as described above, and then transmitted over a broadcasting network or broadband.

The data acquisition unit may acquire different pieces of information simultaneously or sequentially according to the sensor orientation (or viewing orientation for an image), sensor position for acquisition of information (or a viewing position for an image), and sensor information acquisition location (a viewpoint for an image). At this time, video, image, audio, and location information may be acquired.

In the case of image data, texture and depth information may be repectively acquired, and different video pre-processing may be performed thereon according to characteristics of each component. For example, in the case of the texture information, a 360 omnidirectional image may be constructed using images of different viewing orientations of the same viewing position acquired at the same viewpoint based on the image sensor location information. To this end, an image stitching process may be performed. In addition, projection and/or region-wise packing for changing the image to a format for encoding may be performed. In the case of a depth image, an image may generally be acquired through a depth camera. In this case, a depth image may be created in a form such as a texture. Alternatively, depth data may be generated based on separately measured data. After the images for the respective components are generated, sub-picture generation may be performed by performing additional packing into a video format for efficient compression or dividing the image into parts that are actually needed. Information about the video configuration used in the video pre-processing stage is delivered through video metadata.

When additionally given image/audio/text information is provided along with the acquired data (or data for a main service), information for composing such information at the time of final playback needs to be provided. The composition generation unit generates, based on the creator's intention, information for composing externally generated media data (video/image for visual media, audio/sound effect for audio media, and a subtitle for text) in the final playback stage. This information is delivered as composition metadata.

The image/audio/text information obtained after each process is compressed using each encoder and encapsulated in a file unit or a segment unit depending on the application. In this case, only necessary information may be extracted (by a file extractor) according to the video, file, or segment configuration method.

In addition, information for reconstructing each data in the receiver is delivered at a codec or file format/system level. This information includes information for video/audio reconstruction (video/audio metadata), composition information for overlay (composition metadata), video/audio playable position (viewpoint), and viewing position information (viewing position and viewpoint metadata) for each viewpoint. Such information may be generated through a separate metadata processor.

Referring to FIG. 14B, a 360 video reception apparatus (reception terminal) may include a file/segment decapsulation unit configured to decapsulate a received file or segment, a decoding unit configured to generate video/audio/text information from a bitstream, a post-processor configured to reconstruct image/audio/text in a form for playback, a tracking unit configured to track a user's ROI, and a display that is a playback device.

The bitstream generated through decapsulation may be divided into image/audio/text according to the type of data and separately decoded into a playable form.

The tracking unit may generate information about a viewpoint of the user's region of interest, a viewing position at the viewpoint, and a viewing orientation at the viewing position based on the input information of the sensor and the user. This information may be used for selection or extraction of a region of interest by each module of the 360 video reception apparatus, or may be used for a post-processing process for emphasizing information about the region of interest. When delivered to the 360 video transmission apparatus, the information may be used for file extraction or sub-picture selection for efficient bandwidth use, and various ROI-based image reconstruction methods (viewport/viewing position/viewpoint dependent processing).

The decoded image signal may be processed using various processing methods according to an image configuration method. When image packing is performed by the 360 video transmission apparatus, a process of reconstructing an image based on the information delivered through metadata is needed. In this case, video metadata generated by the 360 video transmission apparatus may be used. In addition, the location of the user's region of interest generated through tracking, when images of multiple viewpoints, multiple viewing positions, or various viewing orientations are included in the decoded image, information matching the viewpoint, viewing position and viewing orientation of the user's ROI may be selected and processed. At this time, the viewing position and viewpoint related metadata generated by the transmission terminal may be used. When multiple components are delivered for a specific viewpoint, viewing position, or viewing orientation, or video information for overlay is separately delivered, a rendering process based thereon may be included. The video data (texture, depth, overlay) that has undergone the separate rendering process is subjected to a composition process. At this time, composition metadata generated by the transmission terminal may be used. Finally, information for playback in a viewport may be generated according to the user's ROI.

A playable audio signal may be generated from the decoded audio signal through an audio renderer and/or a post-processing process. At this time, based on the information about the user's ROI and the metadata delivered to the 360 video reception apparatus, information meeting the user's request may be generated.

The decoded text signal may be delivered to an overlay renderer and processed as text-based overlay information such as a subtitle. A separate text post-processing process may be included when necessary.

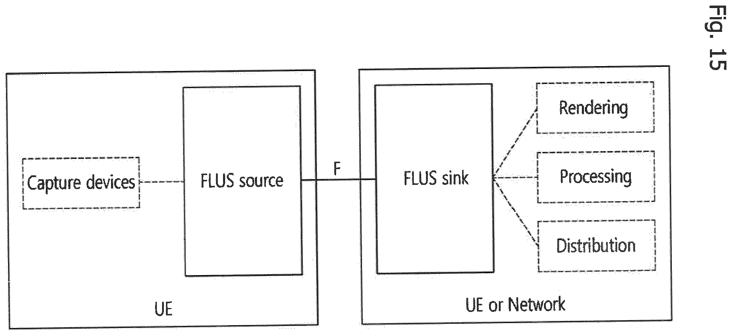

FIG. 15 is a diagram schematically illustrating an example of a FLUS architecture.

FIG. 15 illustrates an example of communication performed between user equipments (UEs) or between a UE and a network based on Framework for Live Uplink Streaming (FLUS) in a wireless communication system. The FLUS source and the FLUS sink may transmit and receive data to and from each other using an F reference point.

In this specification, "FLUS source" may refer to a device configured to transmit data to an FLUS sink through the F reference point based on FLUS. However, the FLUS source does not always transmit data to the FLUS sink. In some cases, the FLUS source may receive data from the FLUS sink through the F reference point. The FLUS source may be construed as a device identical/similar to the image transmission apparatus or 360 video transmission apparatus described herein, as including the image transmission apparatus or 360 video transmission apparatus, or as being included in the image transmission apparatus or 360 video transmission apparatus. The FLUS source may be, for example, a UE, a network, a server, a cloud server, a set-top box (STB), a base station, a PC, a desktop, a laptop, a camera, a camcorder, a TV, or the like, and may be an element or module included in the illustrated apparatuses. Further, devices similar to the illustrated apparatuses may also operate as a FLUS source. Examples of the FLUS source are not limited thereto.

In this specification, "FLUS sink" may refer to a device configured to receive data from an FLUS source through the F reference point based on FLUS. However, the FLUS sink does not always receive data from the FLUS source. In some cases, the FLUS sink may transmit data to the FLUS source through the F reference point. The FLUS sink may be construed as a device identical/similar to the image reception apparatus or 360 video reception apparatus described herein, as including the image reception apparatus or 360 video reception apparatus, or as being included in the image reception apparatus or 360 video reception apparatus. The FLUS sink may be, for example, a network, a server, a cloud server, an STB, a base station, a PC, a desktop, a laptop, a camera, a camcorder, a TV, or the like, and may be an element or module included in the illustrated apparatuses. Further, devices similar to the illustrated apparatuses may also operate as a FLUS sink. Examples of the FLUS sink are not limited thereto.

While the FLUS source and the capture devices are illustrated in FIG. 15 as constituting one UE, embodiments are not limited thereto. The FLUS source may include capture devices. In addition, a FLUS source including the capture devices may be a UE. Alternatively, the capture devices may not be included in the UE, and may transmit media information to the UE. The number of capture devices may be greater than or equal to one.

While the FLUS sink, a rendering module (or unit), a processing module (or unit), and a distribution module (or unit) are illustrated in FIG. 15 as constituting one UE or network, embodiments are not limited thereto. The FLUS sink may include at least one of the rendering module, the processing module, and the distribution module. In addition, a FLUS sink including at least one of the rendering module, the processing module, and the distribution module may be a UE or a network. Alternatively, at least one of the rendering module, the processing module, and the distribution module may not be included in the UE or the network, and the FLUS sink may transmit media information to at least one of the rendering module, the processing module, and the distribution module. At least one rendering module, at least one processing module, and at least one distribution module may be configured. In some cases, some of the modules may not be provided.

In one example, the FLUS sink may operate as a media gateway function (MGW) and/or application function (AF).

In FIG. 15, the F reference point, which connects the FLUS source and the FLUS sink, may allow the FLUS source to create and control a single FLUS session. In addition, the F reference point may allow the FLUS sink to authenticate and authorize the FLUS source. Further, the F reference point may support security protection functions of the FLUS control plane F-C and the FLUS user plane F-U.

In one embodiment, the FLUS source and the FLUS sink may each include a FLUS ctrl module. The FLUS ctrl modules of the FLUS source and the FLUS sink may be connected via the F-C. The FLUS ctrl modules and the F-C may provide a function for the FLUS sink to perform downstream distribution on the uploaded media, provide media instantiation selection, and support configuration of the static metadata of the session. In one example, when the FLUS sink can perform only rendering, the F-C may not be present.

In one embodiment, the F-C may be used to create and control a FLUS session. The F-C may be used for the FLUS source to select a FLUS media instance, such as MTSI, provide static metadata around a media session, or select and configure processing and distribution functions.

The FLUS media instance may be defined as part of the FLUS session. In some cases, the F-U may include a media stream creation procedure, and multiple media streams may be generated for one FLUS session.

The media stream may include a media component for a single content type, such as audio, video, or text, or a media component for multiple different content types, such as audio and video. A FLUS session may be configured with multiple identical content types. For example, a FLUS session may be configured with multiple media streams for video.

In one embodiment, the FLUS source and the FLUS sink may each include a FLUS media module. The FLUS media modules of the FLUS source and the FLUS sink may be connected through the F-U. The FLUS media modules and the F-U may provide functions of creation of one or more media sessions and transmission of media data over a media stream. In some cases, a media session creation protocol (e.g., IMS session setup for an FLUS instance based on MTSI) may be required.

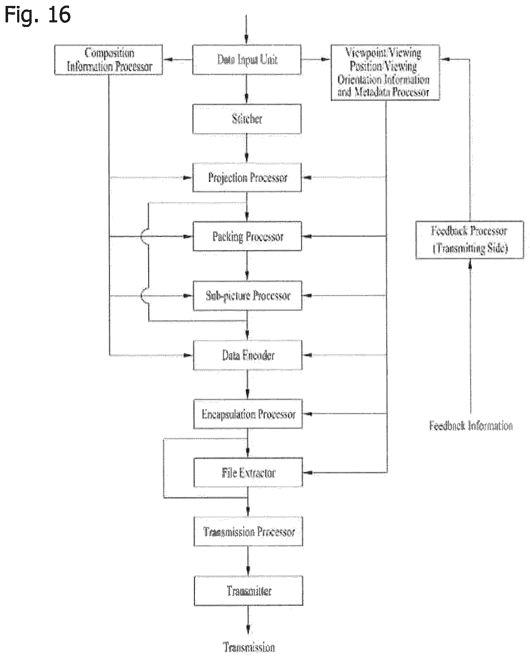

FIG. 16 is a diagram schematically illustrating an example of configuration of a 3DoF+ transmission terminal.

Referring to FIG. 16, when the input data is a camera output image, the transmission terminal (360 video transmission apparatus) may perform stitching for configuring a sphere image according to each viewpoint/viewing position/component. Once a sphere image is configured for each viewpoint/viewing position/component, the image may be projected onto a 2D image for coding. Depending on the application, packing for creating an integrated image from multiple images or sub-picture generation of dividing the image into images of detailed regions may be performed. As described above, the region-wise packing process may be skipped as an optional process. In this case, the packing processor may be omitted. When the input data is supplemental image/audio/text information, a method to add the supplemental information to a central image and display the image may be signaled, and added data may also be transmitted. The generated image and the added data may be compressed into a bitstream in the encoding process, and then transformed into a file format for transmission or storage through the encapsulation process. At this time, a process of extracting a file required by the receiver may be processed according to an application or a system request. The generated bitstream may be transformed into a transmission format and transmitted through the transmission processor. Then, the transmitting-side feedback processor may process the viewpoint/viewing position/viewing orientation information and necessary metadata based on the information transmitted from the reception terminal, and deliver the same to a related transmitter.

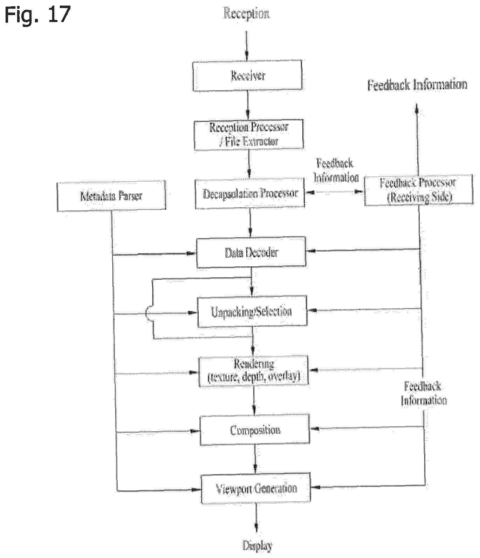

FIG. 17 is a diagram schematically illustrating an example of a configuration of a 3DoF+ reception terminal.

Referring to FIG. 17, the reception terminal (360 video reception apparatus) may extract a necessary file after receiving a bitstream delivered from the transmission terminal. An video stream in the generated file format may be selected using the viewpoint/viewing position/viewing orientation information and the video metadata delivered from the feedback processor, and video information may be reconstructed from the selected bitstream through a decoder. A packed image may be unpacked based on the packing information transmitted through the metadata. When the packing process is omitted at the transmission terminal, unpacking at the reception terminal may also be omitted. When necessary, a process of selecting an image and necessary components suitable for the viewpoint/viewing position/viewing orientation delivered from the feedback processor may be performed. A rendering process of reconstructing the image texture, depth, and overlay information into a format suitable for playback may be performed. Before the final image is generated, a composition process of integrating information of different layers may be performed, and an image suitable for a display viewport may be generated and played.

In the present invention, metadata about a 360-degree video includes a syntax element for a viewpoint information structure. The syntax element for the viewpoint information structure provides viewpoint information including the position of the viewpoint, and yaw, pitch, and roll angles of the x-axis, y-axis, and z-axis of the global coordinate system with respect to a common reference coordinate system of viewpoints. The syntax element for the viewpoint information structure may be presented through, for example, the syntax of Table 1 below.

TABLE 1

```
aligned(8) ViewpointInfoStruct(gcs_rotated_flag) {
    ViewpointPosStruct();
    if (gcs_rotated_flag) {
        ViewpointGlobalCoordinateSysRotationStruct();
    }
}
aligned(8) ViewpointPosStruct() {
    signed int(32) viewpoint_pos_x;
    signed int(32) viewpoint_pos_y;
    signed int(32) viewpoint_pos_z;
    unsigned int(1) viewpoint_gpspos_present_flag;
    bit(31) reserved = 0;
    if(viewpoint_gpspos_present_flag) {
        signed int(32) viewpoint_gpspos_longitude;
        signed int(32) viewpoint_gpspos_latitude;
        signed int(32) viewpoint_gpspos_altitude;
    }
}
aligned(8) class ViewpointGlobalCoordinateSysRotationStruct() {
    signed int(32) viewpoint_gcs_yaw;
    signed int(32) viewpoint_gcs_pitch;
    signed int(32) viewpoint_gcs_roll;
}
```

The syntax of Table 1 includes ViewpointInfoStruct, gcs rotated flag, viewpoint_pos_x, viewpoint_pos_y, viewpoint_pos_z, viewpoint_gpspos_present_flag, viewpoint_gpspos_longitude, viewpoint_gpspos_latitude, viewpoint_gpspos_altitude, viewpoint_gcs_yaw, viewpoint_gcs_pitch, and viewpoint_gcs_roll.

ViewpointInfoStruct may correspond to an example representing a syntax element for the viewpoint information structure. However, examples of the syntax element indicating the viewpoint information structure are not limited to ViewpointInfoStruct.

When the value of gcs_rotated_flag is 1, information about a yaw rotation angle, a pitch rotation angle, and a roll rotation angle of the x-axis, y-axis, and z-axis of the global coordinate system with respect to the common reference coordinate system may be specified. When the value of gcs_rotated_flag is 0, information about the yaw rotation angle, pitch rotation angle, and roll rotation angle of the x-axis, y-axis, and z-axis of the global coordinate system with respect to the common reference coordinate system may not be specified.

The information about the yaw rotation angle, pitch rotation angle, and roll rotation angle of the x-axis, y-axis, and z-axis of the global coordinate system with respect to the common reference coordinate system may be indicated by, for example, viewpoint_gcs_yaw, viewpoint_gcs_pitch and viewpoint_gcs roll. The unit for the information may be $2^{-16}$ degrees. The range of viewpoint_gcs_yaw may be $-180*2^{16}$ to $180*2^{16}-1$, the range of viewpoint gcs_pitch may be $-90*2^{16}$ to $90*2^{16}$, and the range of viewpoint_gcs_roll may be $-180*2^{16}$ to $180*2^{16}-1$.

The viewpoint_pos_x, viewpoint_pos_y, and viewpoint_pos_z may indicate the position of a viewpoint in millimeters when (0, 0, 0) is the origin of the common reference coordinate system in the 3D space.

When the value of viewpoint_gpspos_present_flag is 1, viewpoint_gpspos_longitude, viewpoint_gpspos_latitude, and viewpoint_gpspos_altitude may be present. When the value of viewpoint_gpspos_present _flag is 0, viewpoint_gpspos_longitude, viewpoint_gpspos_latitude and viewpoint_gpspos_altitude may not be specified. Viewpoint_gpspos_longitude, viewpoint_gpspos_latitude and viewpoint_gpspos_altitude may indicate the longitude, latitude and altitude of the geolocation of the viewpoint, respectively.

In one embodiment, the viewpoint configuration box may store metadata related to the viewpoint. The viewpoint configuration box may be represented as, for example, ViewpointConfigBox in Table 2 below.

TABLE 2

```
class ViewpointConfigBox(type) extends FullBox('vwcf', 0, 0) {
    bit(6)    reserved = 0;
    unsigned int(1)    viewpoint_pos_changed;
    unsigned int(1)    gcs_rotated_flag;

    ViewpointInfoStruct(gcs_rotated_flag);
    unsigned int(16) viewpoint_id;
    string viewpoint_label;
}
```

The syntax in Table 2 includes ViewpointConfigBox, viewpoint_pos_changed, viewpoint_id, and viewpoint_label.

When the value of viewpoint_pos_changed is 0, the position of the viewpoint may not change. When the value of viewpoint_pos_changed is 1, the position of the viewpoint may be changed. When the value of viewpoint_pos_changed is 1, a dynamic viewpoint timed metadata track may be present in the file. The dynamic viewpoint timed metadata track may indicate that viewpoint parameters change dynamically with time.

The viewpoint_id may indicate a unique identifier of a viewpoint. Two or more viewpoints may not have the same value of viewpoint id.

The viewpoint label may be a null-terminated UTF-8 string that provides a human-readable text label for the viewpoint.

ViewpointConfigBox may be present in any box in the file.

In one embodiment, 360 video metadata about viewpoint track grouping may be provided. Tracks belonging to the same viewpoint may have the same value of track_group_id for track group type 'vipo'. Track_group_id of tracks from a specific viewpoint may be different from track_group_id of tracks from another viewpoint. By default, when track grouping is not indicated by any track in the file, the file may be considered to contain only content for the viewpoint. An example of syntax for viewpoint track grouping is shown in Table 3 below.

TABLE 3

```
aligned(8) class ViewpointGroupBox extends TrackGroupTypeBox('vipo') {
    bit(6)    reserved = 0;
    unsigned int(1)    viewpoint_pos_changed;
    unsigned int(1)    gcs_rotated_flag;
    unsigned int(1)    gcs_rotated_changed;

    if(viewpoint_pos_changed == 0){
        ViewpointPosStruct();
        ViewpointInfoStruct(gcs_rotated_flag);
    }
    unsigned int(16) viewpoint_id;
    string viewpoint_label;
}
```

Tracks having the same value of track_group_id in TrackGroupTypeBox whose track_group_type is 'vipo' may be included in the same viewpoint.

When the value of viewpoint_pos_changed is 0, the position of a viewpoint related to tracks may not change. When the value of viewpoint_pos_changed is 1, the position of the viewpoint related to the tracks may change. When the value of viewpoint_pos_changed is 1, a dynamic viewpoint timed metadata track may be present in the file. The dynamic viewpoint timed metadata track may indicate that viewpoint parameters change dynamically with time.

When the value of gcs_rotated_changed is 1, the yaw rotation angle, the pitch rotation angle, and the roll rotation angle of the x-axis, y-axis, and z-axis of the global coordinate system with respect to the common reference coordinate system may change dynamically with time. When the value of gcs_rotated_changed is 1, the dynamic viewpoint timed metadata track may indicate viewpoint parameters that dynamically change with time. When the value of gcs_rotated_changed is 0, the values of viewpoint_gcs_yaw, viewpoint_gcs_pitch, and viewpoint_gcs_roll may not change with time.

The viewpoint_id may indicate a unique identifier of a viewpoint. Two or

The viewpoint label may be a null-terminated UTF-8 string that provides a human-readable text label for the viewpoint.

The metadata about a 360-degree video provides dynamic viewpoint information. The dynamic viewpoint timed metadata track indicates viewpoint parameters that dynamically change with time. In one example, when an OMAF player starts playback after switching from a viewpoint to a specific viewpoint, it may use the signaled information as follows. If a recommended viewing orientation is explicitly signaled, the OMAF player may follow the recommended viewing orientation to parse the information about the recommended viewing orientation. Otherwise, the OMAF player may be expected to maintain the viewing orientation immediately before the viewpoint switching occurs.

A track sample entry type 'dyvp' may be used, and an example of syntax indicating the same is shown in Table 4 below.

TABLE 4

```
class DynamicViewpointSampleEntry extends MetaDataSampleEntry('dyvp') {
    ViewpointPosStruct();
    unsigned int(32) viewpoint_id;
    bit(6) reserved = 0;
    unsigned int(1) dynamic_gcs_rotated_flag;
    unsigned int(1) viewpoint_gpspos_present_flag;

    if (dynamic_gcs_rotated_flag == 0) {
        ViewpointGlobalCoordinateSysRotationStruct();
    }
    signed int(32) viewpoint_pos_x_min;
    signed int(32) viewpoint_pos_x_max;
    signed int(32) viewpoint_pos_y_min;
    signed int(32) viewpoint_pos_y_max;
    signed int(32) viewpoint_pos_z_min;
    signed int(32) viewpoint_pos_z_max;
    if (viewpoint_gpspos_present_flag) {
        signed int(32) viewpoint_gpspos_longitude_min;
        signed int(32) viewpoint_gpspos_longitude_max;
        signed int(32) viewpoint_gpspos_latitude_min;
        signed int(32) viewpoint_gpspos_latitude_max;
        signed int(32) viewpoint_gpspos_altitude_min;
        signed int(32) viewpoint_gpspos_altitude_max;
    }
}
```

In Table 4, the viewpoint id may indicate a viewpoint ID of a viewpoint related to all samples referring to a sample entry.

When the value of dynamic_gcs_rotated_flag is 1, the yaw rotation angle, pitch rotation angle, and roll rotation angle of the x-axis, y-axis, and z-axis of the global coordinate system with respect to the common reference coordinate system are indicated in the sample format. When the value of gcs_rotated_changed is 0, the values of viewpoint_gcs_yaw, viewpoint_gcs_pitch and viewpoint_gcs_roll may not change in any samples referring to the sample entry.

When the value of viewpoint_gpspos_present _flag is 1, viewpoint_gpspos_longitude, viewpoint_gpspos_latitude, and viewpoint_gpspos_altitude may be present in the sample format. When the value of viewpoint_gpspos_present_flag is 0, viewpoint_gpspos _longitude, viewpoint_gpspos_latitude and viewpoint_gpspos_altitude may not be present in any samples referring to the sample entry.

ViewpointPosStruct() may indicate the initial viewpoint position of a related viewpoint.

ViewpointGlobalCoordinateSysRotationStruct() may indicate the yaw, pitch and roll rotation angles of the x-axis, y-axis and z-axis of the global coordinate system with respect to the common reference coordinate system for the respective samples referring to the sample entry.

The viewpoint_pos_x_min and viewpoint_pos_x_max may indicate the minimum and maximum values of viewpoint_pos _x in all samples referring to the sample entry.

The viewpoint_pos_y_min and viewpoint_pos_y_max may indicate the minimum and maximum values of viewpoint_pos_y in all samples referring to the sample entry.

The viewpoint_pos_z_min and viewpoint_pos z_max may indicate the minimum and maximum values of viewpoint_pos_z in all samples referring to the sample entry.

The viewpoint_gpspos_longtitude_min and viewpoint_gpspos_longtitudemax may indicate the minimum and maximum values of viewpoint_gpspos_longtitudein all samples referring to the sample entry.

The viewpoint_gpspos_latitude_min and viewpoint_gpspos_latitude_max may indicate the minimum and maximum values of viewpoint_gpspos latitude in all samples referring to the sample entry.

The viewpoint_gpspos_altitude_min and viewpoint_gpspos_altitude_max may indicate the minimum and maximum values of viewpoint_gpspos_altitude in all samples referring to the sample entry.

In one embodiment, an example of the sample syntax of the sample entry type 'dyvp' may be given as shown in Table 5 below.

TABLE 5

```
aligned(B) DynaraicViewpointSample() {
        ViewpointlnfoStruct(dynamic_gcs_rotated_flag);
}
```

In DASH MPD according to an embodiment, a viewpoint element having an @schemeldUri attribute of "urn:mpeg:mpegl:omaf:2018:vwpt" may be referenced as a viewpoint information descriptor (VWPT) descriptor. One VWPT descriptor may be present at the adaptation set level, and no VWPT descriptor may be present at the other levels. If a VWPT descriptor is included when there is no adaptation set in the media presentation, it may be assumed that the media presentation includes only one viewpoint. The VWPT descriptor may indicate a viewpoint to which the adaptation set belongs. Table 6 below shows an example of semantics of the elements and attributes for the VWPT descriptor.

TABLE 6

| Elements and attributes for VWPT descriptor | Use | Description |
|---|---|---|
| @value | M | Specifies the viewpoint ID of the viewpoint. |
| @center_x | M | If the viewpoint's position is static, the value specifies the X component of the viewpoint position, i.e., the absolute position of the center of the viewpoint in a global three-dimensional coordinates on the X axis in unit of millimeters. Otherwise (the viewpoint's position is dynamic), the specifies the X component of the initial position of the viewpoint. |
| @center_y | M | If the viewpoint's position is static, the value specifies the Y component of the viewpoint position, i.e., the absolute position of the center of the viewpoint in a global three-dimensional coordinates on the Y axis in unit of millimeters. Otherwise (the viewpoint's position is dynamic), the specifies the Y component of the initial position of the viewpoint. |
| @center_z | M | If the viewpoint's position is static, the value specifies the Z component of the viewpoint position, i.e., the absolute position of the center of the viewpoint in a global three-dimensional coordinates on the Z axis in unit of millimeters. Otherwise (the viewpoint's position is dynamic), the specifies the Z component of the initial position of the viewpoint. |
| @dynamic_flag | O | Indicates whether the position of the viewpoint is static or dynamic. When it is equal to 1, it indicates the position of the viewpoint is changed. When it is equal to 0, the position of the viewpoint is static. When it is not present, it indicates the position of the viewpoint is static. When it set to 1, a timed metadata Representation carrying a timed metadata track with sample entry type 'dyvp' is present |
| @viewpoint_pos_x_min | O | specifies the minimum values of the X compononent of the viewpoint position, i.e., the minimum value of the absolute position of the center of the viewpoint in a global three-dimensional coordinates on the X axis in unit of millimeters. |
| @viewpoint_pos_x_max | O | specifies the maximum values of the X compononent of the viewpoint position, i.e., the maximum value of the absolute position of the center of the viewpoint in a global three-dimensional coordinates on the X axis in unit of millimeters. |
| @viewpoint_pos_y_min | O | specifies the minimum values of the Y compononent of the viewpoint position, i.e., the minimum value of the absolute position of the center of the viewpoint in a global three-dimensional coordinates on the Y axis in unit of millimeters. |
| @viewpoint_pos_y_max | O | specifies the maximum values of the Y compononent of the viewpoint position, i.e., the maximum value of the absolute position of the center of the viewpoint in a global three-dimensional coordinates on the Y axis in unit of millimeters. |
| @viewpoint_pos_z_min | O | specifies the minimum values of the Z compononent of the viewpoint position, i.e., the minimum value of the absolute position of the center of the viewpoint in a global three-dimensional coordinates on the Z axis in unit of millimeters. |
| @viewpoint_pos_z_max | O | specifies the maximum values of the Z compononent of the viewpoint position, i.e., the maximum value of the absolute position of the center of the viewpoint in a global three-dimensional coordinates on the Z axis in unit of millimeters. |
| Legend: M=Mandatory, O=Optional | | |

In Table 6, @dynamic_flag may indicate whether the position of the viewpoint is static or dynamic. When the value of @dynamic_flag is 1, the position of the viewpoint may be changed. When the value of @dynamic_flag is 0, the position of the viewpoint may be static. When @dynamic_flag is not specified, it may be indicated that the position of the viewpoint is static. When @dynamic_flag is set to 1, a timed metadata representation involving a timed metadata track of the sample entry type "dyvp" may be specified.

@viewpoint_pos_x_min may indicate the minimum value of the X component of the viewpoint position. For example, @viewpoint_pos_x_min may indicate the minimum value of the absolute position of the center of the viewpoint on the X axis of the global 3D coordinate system in millimeters.

@viewpoint_pos_y_min may indicate the minimum value of the Y component of the viewpoint position. For example, @viewpoint_pos_y_min may indicate the minimum value of the absolute position of the center of the viewpoint on the Y axis of the global 3D coordinate system in millimeters.

@viewpoint_pos_z_min may indicate the minimum value of the Z component of the viewpoint position. For example, @viewpoint_pos_z_min may indicate the minimum value of the absolute position of the center of the viewpoint on the Z axis of the global 3D coordinate system in millimeters.

@viewpoint_pos_x_max may indicate the maximum value of the X component of the viewpoint position. For example, @viewpoint_pos_x_max may indicate the maximum value of the absolute position of the center of the viewpoint on the X axis of the global 3D coordinate system in millimeters.

@viewpoint_pos_y_max may indicate the maximum value of the Y component of the viewpoint position. For example, @viewpoint_pos_y_max may indicate the maximum value of the absolute position of the center of the viewpoint on the Y axis of the global 3D coordinate system in millimeters.

@viewpoint_pos_z_max may indicate the maximum value of the Z component of the viewpoint position. For example, @viewpoint_pos_z_max may indicate the maximum value of the absolute position of the center of the viewpoint on the Z axis of the global 3D coordinate system in millimeters.

In one embodiment, when the viewpoint is related to a timed metadata representation involving a timed metadata track of the sample entry type 'dyvp', the position of the viewpoint may be dynamic. When the viewpoint is not related to the timed metadata representation involving the timed metadata track of the sample entry type 'dyvp', the viewpoint may be static.

When the viewpoint is related to the timed metadata representation involving the timed metadata track of the sample entry type 'dyvp', the dynamic position of the viewpoint is may be signaled within the related timed metadata representation involving the timed metadata track of the sample entry type 'dyvp'.

The metadata for a 360-degree video provides dynamic viewpoint group information. The dynamic viewpoint group timed metadata track may indicate information about a group including a viewpoint, which dynamically changes with time. The track sample entry type 'dyvg' may be used, and the sample entry of the sample entry type may be configured as shown in Table 7 below, for example.

TABLE 7

```
class DynamicViewpointGroupEntry extends MetaDataSampleEntry('dyvg') {
    unsigned int(32) viewpoint_id;
    unsigned int(8)  num_groups_max;
}
```

The viewpoint id may indicate a viewpoint ID of a viewpoint related to all samples referring to a sample entry. The numb_groups_max may indicate the maximum number of groups to which the viewpoint belongs in the samples referring to the sample entry.

In one embodiment, the sample syntax of the sample entry type 'dyvg' may be configured as shown in Table 8 below, for example.

TABLE 8

```
aligned(8) DynamicViewpointGroupSample() {
    unsigned int(8)  num_groups;
    for (i = 0; i < num_groups; i++) {
        unsigned int(32)  vp_group_id;
        unsigned int(32) anchor_viewpoint_id;
        unsigned int(1)  non_contiguous_flag;
        unsigned int(7)   num_viewpoints;
    }
}
```

In Table 8, the num_groups may indicate the number of groups to which the viewpoint belongs in each sample. The vp_group_id may indicate a group ID to which the viewpoint belongs. The anchor_viewpoint_id may indicate the value of viewpoint _id of a viewpoint which is an anchor of multiple viewpoints in the group. When the value of the non_contiguous_flag is 0, contiguous switching between viewpoints in the same group may be possible. When the value of the non_contiguous_flag is 1, switching between viewpoints in the same group may be non-contiguous. The num_viewpoints may indicate the number of viewpoints in the same group.

In another embodiment, the sample syntax of the sample entry type 'dyvg' may be configured as shown in Table 9 or Table 10 below, for example.

## TABLE 9

```
aligned(8) DynamicViewpointGroupSample() {
    unsigned int(8) num_groups;
    for (i = 0; i < num_groups; i++) {
        unsigned    int(32)    vp_group_id;
        unsigned    int(32)    anchor_viewpoint_id;
        unsigned    int(1)     non_contiguous_flag;
        unsigned    int(7)     num_viewpoints;
        unsigned int1}         common_reference_system_info_flag;
        unsigned int(8)        common_reference_system_id;
        if(common_reference_system_flag){
            GroupGlobalCoordinateSysRotationStruct();
        }
    }
}
```

## TABLE 10

```
aligned(8) ViewpointInfoStruct(gcs_rotated_flag) {
    ViewpointPosStruct();
    if (gcs_rotated_flag) {
        ViewpointGlobalCoordinateSysRotationStruct();
    }
    ViewpointGroupInfoStruct();
}
aligned(8) ViewpointGroupInfoStruct() {
    unsigned int(8) num_groups;
    for (i = 0; i < num_groups; i++) {
        unsigned int(32)    vp_group_id;
        unsigned int(32)    anchor_viewpoint_id;
        unsigned int(1)     non_contiguous_flag;
        unsigned int(6)     num_viewpoints;
        unsigned int1}      common_reference_system_info_flag;
        unsigned int(8)     common_reference_system_id;
        if(common_reference_system_info_flag){
            GroupGlobalCoordinateSysRotationStruct();
        }
    }
}
```

The comon_reference_system_info_flag may indicate whether common reference system information (e.g., GroupGlobalCoordinateSysRotationStruct()) is present.

The common_reference_system_id may indicate an identifier of a global coordinate system shared among the viewpoint videos in the same group. Viewpoints having the same common_reference_system_id may share a common reference coordinate system. In one example, viewpoints having different values of the common_reference_system_id may be based on different coordinate systems.

In one embodiment, GroupGlobalCoordinateSysRotationStruct may be configured, for example, as shown in Table 11 below.

## TABLE 11

TABLE 11

```
aligned(8) class GroupGlobalCoordinateSysRotationStruct () {
    signed int(32) group_gcs_yaw;
    signed int(32) group_gcs_pitch;
    signed int(32) group_gcs_roll;
}
```

The group_gcs_yaw, group_gcs_pitch and group_gcs_roll indicate the yaw, pitch and roll rotation angles of the X, Y and Z axes of the global coordinate system of a viewpoint group with respect to the common reference coordinate system, and the unit of the angles is $2^{-16}$ degrees. The viewpoint_gcs_yaw may be in the range of $-180*2^{16}$ to $180*2^{16}-1$, the viewpoint_gcs_pitch may be in the range of $-90*2^{16}$ to $90*2^{16}$, and the viewpoint_gcs_roll may be in the range of $-180*2^{16}$ to $180*2^{16}-1$. The viewpoint group may include one or more viewpoint videos.

The parameters disclosed in Tables 8 to 11 (num_groups, vp_group_id, anchor_viewpoint_id, non contiguous flag, num viewpoints, etc.) may be presnt in any boxes in a file, such as the track group box and the sample group box. The parameters may be static when the parameters are present in a box for signaling static information (e.g., sample entry), and may be dynamic when the parameters are present in a box for signaling dynamic information (e.g., the timed metadata track).

In one embodiment, the 360-degree video metadata may include initial viewing orientation metadata of a viewpoint track group. The initial viewing orientation metadata track may indicate an initial viewing orientation of related viewpoint media tracks. A viewpoint video may be executed through one or more tracks, and the initial viewing orientation metadata track may be related to one or more media tracks having a 'cdsc' track reference that satisfies a condition of 'both track_group id equal to track_IDs [i] and (flags & 1) of TrackGroupTypeBox equal to 1'.

In one embodiment, the 360 degree video metadata may include information about a sample group for the initial viewing orientation of multiple viewpoints. The timed metadata track with the sample entry type of 'invo' may include one or more SampleToGroupBoxes with grouping_type of 'vwpt'. The SampleToGroupBox may indicate assigning samples in the timed metadata (and corresponding samples in media tracks) to viewpoints. When SampleToGroupBox with grouping type of 'vwpt' is present, SampleGroupDescriptionBox of the same grouping type may be present and may include the ID of a specific viewpoint of the group to which the samples belong. The sample group entry 'ViewpointEntry' with grouping_type of 'vwpt' may be configured as shown in Table 12 below, for example.

## TABLE 12

```
class ViewpointEntry() extends SampleGroupDescriptionEntry('vwpt') {
    unsigned int(32)     viewpoint_id;
    bit(6)    reserved = 0;
    unsigned int(1)      viewpoint_pos_changed;
    unsigned int(1)      gcs_rotated_flag;

    ViewpointInfoStruct(gcs_rotated_flag);
}
```

The viewpoint_id may indicate a viewpoint ID of a viewpoint related to a group of samples. The initial viewing orientation of the group of samples may be applied to a media track related to the viewpoint ID.

When the value of viewpoint_pos_changed is 0, it may indicate that the position of the viewpoint related to the group of samples is not changed. When the value of viewpoint_pos_changed is 1, the position of the viewpoint may be changed. When the value of viewpoint_pos_changed is 1, a dynamic viewpoint timed metadata track may be present in the file. The dynamic viewpoint timed metadata track may indicate viewpoint parameters that dynamically change with time.

When the value of gcs_rotated_flag is 1, information about the yaw rotation angle, pitch rotation angle, and roll rotation angle of the x-axis, y-axis, and z-axis of the global coordinate system with respect to the common reference coordinate system may be provided. When the value of gcs_rotated_flag is 0, the information about the yaw rotation angle, pitch rotation angle, and roll rotation angle of the x-axis, y-axis, and z-axis of the global coordinate system with respect to the common reference coordinate system may not be provided.

The ViewpointInfoStruct may provide viewpoint information related to the group of samples, including the position of the viewpoint, and the yaw, pitch, and roll angles of the x, y, and z axes of the global coordinate system with respect to the common reference coordinate system of the viewpoint.

In this specification, specific terms or sentences are used to define specific information or concepts. For example, in this specification, specific terms or sentences are used to define specific metadata. In one example, in this specification, a viewpoint ID of a viewpoint related to all samples referring to a sample entry is defined as "viewpoint_id." However, "viewpoint id" may be replaced with various terms such as viewpointID and viewpoint_identifier. Accordingly, meaning of specific terms or sentences used to define specific information or concepts in the specification should not be limited to the name, but should be understood based on various operations, functions, and effects according to the content that the above terms intend to represent.

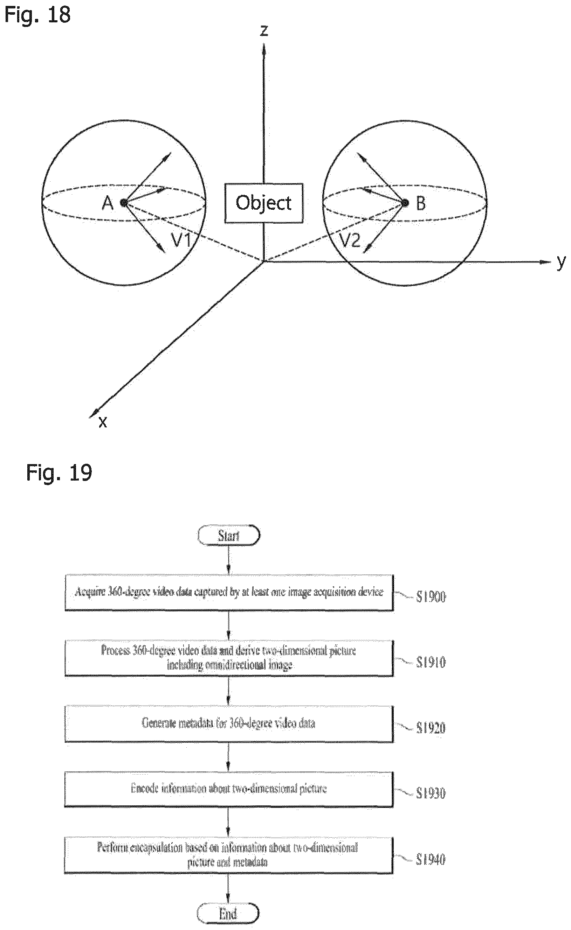

FIG. 18 is a diagram illustrating information about viewing orientation according to an embodiment.

In one embodiment, a recommended viewing orientation or an initial viewing orientation may be shared by multiple viewpoints. In a situation where there are multiple viewpoints, the user may be interested in persistently viewing one specific object or scene when a switch between viewpoints occurs. As shown in FIG. 18, at a specific time, the user may observe an object at viewpoint A through viewport V1. The user may be allowed to observe the object even at viewpoint B through viewport V2 by matching the viewport V1 of viewpoint A with viewport V2 of viewpoint B at the specific time. An example of related syntax may be configured as shown in Table 13 below.

TABLE 13

```
aligned(8) ViewpointInfoStruct(gcs_rotated_flag) {
    ViewpointPosStruct();
    if (gcs_rotated_flag) {
        ViewpointGlobalCoordinateSysRotationStruct();
    }
    ViewingOrientationStruct();
}

aligned(8) ViewingOrientationStruct() {
    unsigned int(8)  viewing_orientation_id;
    signed int(32)   center_pos_x;
    signed int(32)   center_pos_y;
    signed int(32)   center_pos_z;
    unsigned int(1) gpspos_present_flag;
    unsigned int(1) volume_present_flag;
    bit(30) reserved = 0;
    if(viewpoint_gpspos_present_flag) {
        signed int(32)   center_gpspos_longitude;
        signed int(32)   center_gpspos_latitude;
        signed int(32)   center_gpspos_altitude;
    }

    if(volume_present_flag) {
        unsigned int(8)  volume_type;
        if(volume_type == '1') {   //sphere
            unsigned int(32)      sphere_radius;
        }else if (volue_type == '2')      //spheroid {
            unsigned int(32)      hor_radius;
            unsigned int(32)      ver_radius;
        } else if (volue_type == '3')      //cube {
            unsigned int(32)      cube_hor_range;
            unsigned int(32)      cube_ver_range;
        } else if (volue_type == '4')      //cylinder {
            unsigned int(32)      cy_radius;
            unsigned int(32)      cy_hor_range;
        } else if (volue_type == '5')      //rectangular prism {
            unsigned int(32)      rect_hor_range;
            unsigned int(32)      rect_vor_range;
        }
    }
}
```

The parameters included in Table 13 may be referred to as viewing orientation structure information representing information about a structure of a viewing orientation for a viewpoint. In one example, the viewing orientation structure information may be referred to as ViewingOrientationStruct.

The ViewingOrientationStruct may indicate a viewing orientation that will appear when the viewpoint is changed or a viewing orientation that is recommended to be played. The ViewingOrientationStruct may include the center point of a viewing orientation, the angle of inclination, and applicable GPS positioning information. In addition, the ViewingOrientationStruct may include information about a viewing orientation to appear or the volume of a viewing orientation that is recommended to be played. When the information about the volume is present, the center information may indicate the center of the viewing orientation volume.

The veiwing_orientation_id may indicate an identifier of the viewing orientation information.

In one embodiment, the viewing orientation structure information may include information about the position of the center of an object of interest. The information about the position of the center of the object of interest may include an x-axis position, a y-axis position, and a z-axis position of the center of the object of interest.

In one embodiment, the viewing orientation structure information may include information about the position of the center of the viewing orientation. The information about the position of the center of the viewing orientation may include an x-axis position, a y-axis position, and a z-axis position of the center of the viewing orientation.

The center_pos_x, center_pos_y and center_pos_z may indicate the center position of the viewing orientation on the X, Y and Z axes according to the global coordinate system. In one embodiment, the information about the position of the center of the object of interest or the information about the position of the center of the viewing orientation may be represented by center_pos_x, center_pos_y, and center_pos_z.

In one embodiment, the viewing orientation structure information may include a GPS position presence flag indicating whether GPS position information about the center of the object of interest is present. The GPS position presence flag may be represented by gps_present_flag. The gps_present_flag may indicate whether GPS position information about the center of the viewing orientation is present.

The center_gpspos_longitude, center_gpspos_latitude, and center_gpspos_altitude may indicate the GPS position information about the center of the viewing orientation.

In one embodiment, the viewing orientation structure information may include a volume presence flag indicating whether there is a viewing orientation volume indicating a spherical or three-dimensional space to be played or recommended for playback. The volume presence flag may be represented by volume_present_flag. The volume_present_flag may indicate whether a spherical or three-dimensional viewing orientation volume to be played or recommended for playback is present.

The volume type may indicate the type of a viewing orientation volume. When the volume _type is 0, the type of the viewing orientation volume may not be specified. When the volume type is 1, it may indicate the spherical type. When the volume_type is 2, it may indicate a spheroid type. When the volume_type is 3, it may indicate a cube type. When the volume_type is 4, it may indicate a cylinder type. When the volume _type is 5, it may indicate a rectangular prism type.

The sphere radius may indicate the spherical radius of a spherical viewing orientation volume.

The hor_radius and ver radius may indicate the horizontal and vertical radii of a spheroid.

The cube hor range and cube ver range may indicate the width and height of a cube.

The cy_radius and cy_hor_ranges may indicate the radius of a cylinder and the height of the cylinder.

The rect hor range and rect_ver_range may indicate the width and height of a rectangular prism.

The parameters according to Table 13 may be present in any boxes in the file, such as a track group box and a sample group box. When present in boxes (e.g., sample entry) for signaling static information, the parameters may be static. When present in boxes (e.g., sample group) for signaling dynamic information or in timed metadata, the parameters may be dynamic. The parameters may be signaled in boxes for signaling information shared by one or more viewpoints (or a group of viewpoints).

In one embodiment, the information according to Table 13 may be signaled based on DASH MPD or SEI messages.

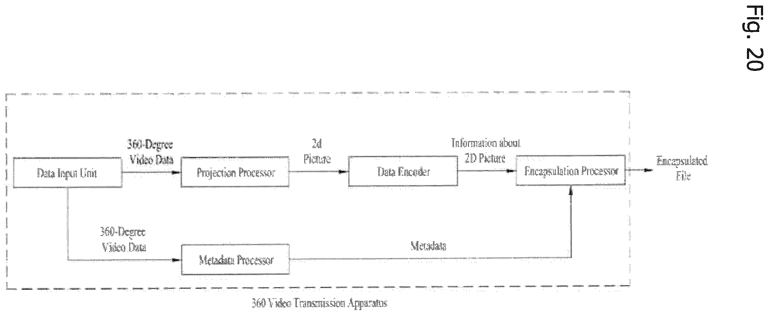

FIG. 19 is a flowchart illustrating a method of operating a 360-degree video transmission apparatus according to an embodiment, and FIG. 20 is a block diagram illustrating a configuration of the 360-degree video transmission apparatus according to the embodiment.

Each step disclosed in FIG. 19 may be performed by the 360 video transmission apparatus disclosed in FIG. 5, the 360 video transmission apparatus disclosed in FIG. 14A, the FLUS source disclosed in FIG. 15, or the 360-degree video transmission apparatus disclosed in FIG. 20. In one example, S1900 of FIG. 19 may be performed by the data input unit of the 360 video transmission apparatus disclosed in FIG. 5, and 1910 of FIG. 19 may be performed by the projection processor of the 360 video transmission apparatus disclosed in FIG. 5. S1920 of FIG. 19 may be performed by the metadata processor disclosed in FIG. 5, S1930 of FIG. 19 may be performed by the data encoder of the 360 video transmission apparatus disclosed in FIG. 5, and S1940 of FIG. 19 may be performed by the encapsulation processor of the 360 video transmission apparatus disclosed in FIG. 5. Accordingly, in describing each step of FIG. 19, description of details already described with reference to FIGS. 5, 14A, and 15 will be skipped or briefly made.

As illustrated in FIG. 20, a 360-degree video transmission apparatus according to an embodiment may include a data input unit, a projection processor, a metadata processor, a data encoder, and an encapsulation processor. However, in some cases, not all of the components shown in FIG. 20 may be essential components of the 360-degree video transmission apparatus. The 360-degree video transmission apparatus may be implemented by more or fewer components than those shown in FIG. 20.

In the 360-degree video transmission apparatus according to the embodiment, the data input unit, the projection processor, the metadata processor, the data encoder, and the encapsulation processor may each be implemented as separate chips, or two or more components may be implemented through one chip.

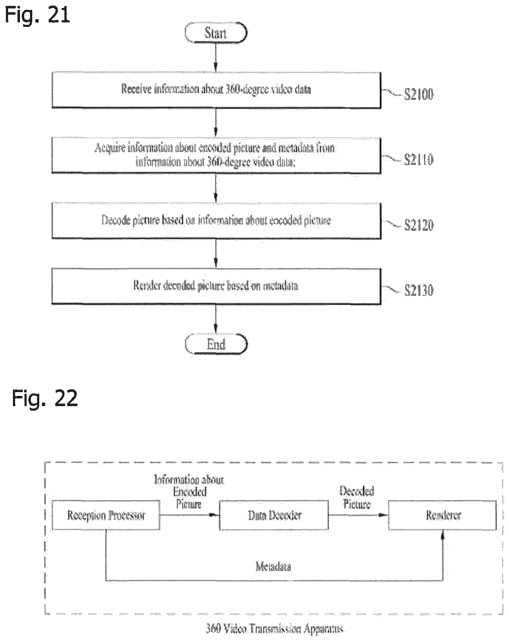

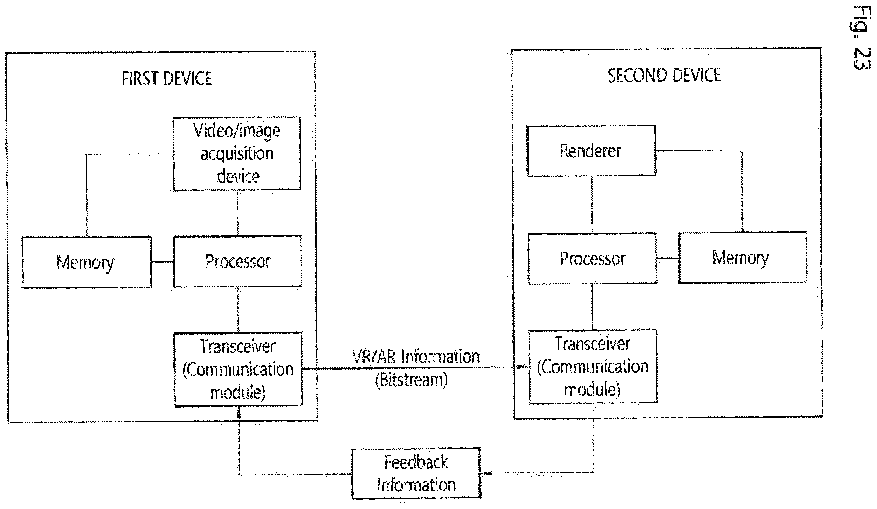

In this specification, "360 video" and "360-degree video" merely differ in name and may represent the same object. Accordingly, the "360 video transmission apparatus" shown in FIG. 5 and the "360-degree video transmission apparatus" shown in FIG. 21 merely differ in name and may perform the same/similar operations. The "360-degree video reception apparatus" shown in FIG. 6 and the "360-degree video reception apparatus" shown in FIG. 23 merely differ in name and may perform the same/similar operations.

According to an embodiment, the 360-degree video transmission apparatus may acquire 360-degree video data (S1900). For example, the data input unit of the 360-degree video transmission apparatus may acquire 360-degree video data captured by at least one camera.

According to an embodiment, the 360-degree video transmission apparatus may process the 360-degree video data to derive a two-dimensional picture including an omnidirectional image (S1910). More specifically, the projection processor of the 360-degree video transmission apparatus may process the 360-degree video data to derive a two-dimensional picture including an omnidirectional image.

According to an embodiment, the 360-degree video transmission apparatus may generate metadata for the 360-degree video data (S1920). More specifically, the metadata processor of the 360-degree video transmission apparatus may generate metadata for the 360-degree video data.

In one embodiment, the metadata may include group global coordinate system rotation structure information representing information about relative rotation angles between a common reference coordinate system of a viewpoint group including multiple viewpoints and a global coordinate system.

In one example, the group global coordinate system rotation structure information may be referred to as GroupGlobalCoordinateSysRotationStruct.

In one embodiment, the group global coordinate system rotation structure information may include information about a yaw rotation angle, a pitch rotation angle, and a roll rotation angle of the x, y, and z axes of the global coordinate system with respect to the common reference coordinate system. In one example, the information about the yaw rotation angle of the x, y, and z axes of the global coordinate system with respect to the common reference coordinate system may be referred to as group_gcs_yaw, the information about the pitch rotation angle of the x, y, and z axes of the global coordinate system with respect to the common reference coordinate system may be referred to as group_gcs_pitch, and the information about the roll rotation angle of the x, y, and z axes of the global coordinate system with respect to the common reference coordinate system may be referred to as group_gcs_roll.

In one embodiment, the metadata may include a common reference coordinate system information flag indicating whether information about the common reference coordinate system is present. When the value of the common reference coordinate system information flag is 1, the group global coordinate system rotation structure information may be included in the metadata. In one example, the common reference coordinate system information flag may be referred to as common_reference_system_info_flag.

In one embodiment, the multiple viewpoints included in the viewpoint group may share the common reference coordinate system.

In one embodiment, when the viewpoint IDs of a first viewpoint and a second viewpoint among the multiple viewpoints are different from each other, a common reference coordinate system for the first viewpoint and a common reference coordinate system for the second viewpoint may be different from each other.

In one embodiment, the metadata may include viewing orientation structure information representing information about a structure of a viewing orientation for a viewpoint.

In one embodiment, the viewing orientation structure information may include information about the position of a center of an object of interest.

In one embodiment, the information about the position of the center of the object of interest may include an x-axis position, a y-axis position, and a z-axis position of the center of the object of interest.

In one embodiment, the viewing orientation structure information may include information about the position of the center of the viewing orientation.

In one embodiment, the information about the position of the center of the viewing orientation may include an x-axis position, a y-axis position, and a z-axis position of the center of the viewing orientation.

In one embodiment, the viewing orientation structure information may include a GPS position presence flag indicating whether GPS position information about the center of the object of interest is present.

In one embodiment, the viewing orientation structure information may include a volume presence flag indicating whether there is a viewing orientation volume indicating a spherical or three-dimensional space to be played or recommended for playback.

In one embodiment, the 360-degree video reception apparatus may communicate with at least one of a mobile terminal, a network, and a self-driving vehicle.

The metadata includes a dynamic gloabal coordinate system rotation flag indicating whether a relative rotation angle between the common reference coordinate system and the global coordinate system of a dynamic viewpoint are changed.

In one example, the dynamic global coordinate system rotation flag may be represented by dynamic_gcs_rotated_flag.

In one embodiment, the dynamic global coordinate system rotation flag is for a sample entry. When the dynamic global coordinate system rotation flag indicates 0, the relative rotation angle between the common reference coordinate system and the global coordinate system of the dynamic viewpoint may remain unchanged within samples referring to the sample entry.

In one embodiment, when the dynamic global coordinate system rotation flag indicates 0, the metadata may include information about a yaw rotation angle, a pitch rotation angle and a roll rotation angle of the x-axis, y-axis, and z-axis of the global coordinate system with respect to the common reference coordinate system. The information about the yaw rotation angle, the pitch rotation angle and the roll rotation angle of the x-axis, y-axis, and z-axis of the global coordinate system with respect to the common reference coordinate system may be signaled based on, for example, the syntax element ViewpointGlobalCoordinateSysRotationStruct().

In one embodiment, when the dynamic global coordinate system rotation flag indicates 1, the metadata about a sample referring to the sample entry may include information about a yaw rotation angle, a pitch rotation angle, and a roll rotation angle of the x-axis, y-axis, and z-axis of the global coordinate system with respect to the common reference coordinate system related to the sample.

In one embodiment, multiple viewpoints may be categorized into at least one viewpoint group, and the metadata may include viewpoint group structure information about each of the at least one viewpoint group.

In the present specification, terms "first viewpoint group" and "second viewpoint group" are merely intended to distinguish between viewpoint groups included in the 360 video data, and thus it will be readily understood by those of ordinary skill in the art that they are not intended to imply either that the viewpoint groups are predefined viewpoint groups, or that the ordinal numbers representing the viewpoint groups have particular meanings.

In one embodiment, the at least one viewpoint group may include a first viewpoint group and a second viewpoint group. When the viewpoint group including the dynamic viewpoint changes from the first viewpoint group to the second viewpoint group, the 360-degree video data processing method may be based on viewpoint group structure information about the second viewpoint group. In one example, the metadata may include a viewpoint group structure information flag indicating whether the viewpoint group structure information is changed. The viewpoint group structure information flag may be referred to as, for example, dynamic_vwpt_group_flag.

In one embodiment, the viewpoint group structure information may include at least one of information about an anchor viewpoint ID of the viewpoint group, information about whether viewpoints included in the viewpoint group are contiguous with each other, and information about the number of viewpoints included in the viewpoint group.

The 360-degree video transmission apparatus according to an embodiment may encode information about a 2D picture (S1930). More specifically, the data encoder of the 360-degree video transmission apparatus may encode the information about the 2D picture.

According to an embodiment, the 360-degree video transmission apparatus may perform encapsulation based on the information about the 2D picture and the metadata (S1940). More specifically, the encapsulation processor of the 360-degree video transmission apparatus may perform encapsulation based on the information about the 2D picture and the metadata.

According to the 360-degree video transmission apparatus and the operation method of the 360-degree video transmission apparatus disclosed in FIGS. 19 and 20, the 360-degree video transmission apparatus according to an embodiment may acquire 360-degree video data (S1900), process the 360-degree video data and derive a 2D picture including an omnidirectional image (S1910), generate metadata for the 360-degree video data (S1920), encode information about the 2D picture (S1930), and perform encapsulation based on the information about the 2D picture and the metadata (S1940). Here, the metadata may include group global coordinate system rotation structure information representing information about a relative rotation angle between a common reference coordinate system of a viewpoint group including multiple viewpoints and a global coordinate system. Accordingly, the group global coordinate system rotation structure information representing the information about the relative rotation angle between the common reference coordinate system of the viewpoint group including multiple viewpoints and the global coordinate system may be effectively signaled.

FIG. 21 is a flowchart illustrating a method of operating a 360-degree video reception apparatus according to an embodiment, and FIG. 22 is a block diagram illustrating a configuration of the 360-degree video reception apparatus according to the embodiment.

The 360-degree video reception apparatus and operation method thereof according to FIGS. 21 and 22 may partially correspond to the above-described operation method of the 360-degree video transmission apparatus according to FIGS. 19 and 20. Accordingly, description of the operations as those of the above-described operation method may be briefly made or skipped.

Each step disclosed in FIG. 21 may be performed by the 360 video reception apparatus disclosed in FIG. 6, the 360 video reception apparatus disclosed in FIG. 14B, the FLUS sink disclosed in FIG. 15, or the 360 video reception apparatus disclosed in FIG. 21. In one example, S2100 of FIG. 21 may be performed by the receiver of the 360 video reception apparatus disclosed in FIG. 6, and S2110 may be performed by the decapsulation processor of the 360 video reception apparatus disclosed in FIG. 6. S2120 of FIG. 21 may be performed by the data decoder of the 360 video reception apparatus disclosed in FIG. 6, and S2130 of FIG. 21 may be performed by the renderer disclosed in FIG. 6. Accordingly, in describing each step of FIG. 21, description of details already described with reference to FIGS. 6, 14B, and 15 will be omitted or briefly made.

As illustrated in FIG. 22, a 360-degree video reception apparatus according to an embodiment may include a receiver, a decapsulation processor, a data decoder, and a renderer. However, in some cases, not all of the components shown in FIG. 22 may be essential components of the 360-degree video reception apparatus. The 360-degree video reception apparatus may be implemented by more or fewer components than those shown in FIG. 22.

In the 360-degree video reception apparatus according to the embodiment, the receiver, the decapsulation processor, the data decoder, and the renderer may be implemented as separate chips, or at least two or more components may be implemented through one chip.

The 360-degree video reception apparatus according to the embodiment may receive information about 360-degree video data (S2100). More specifically, the receiver of the 360-degree video reception apparatus may receive the information about 360-degree video data.

In one embodiment, the 360-degree video reception apparatus may receive the information about the 360-degree video data from a 360-degree video transmission apparatus. The information about the 360-degree video data may include, for example, a file derived by performing encapsulation based on information about a picture encoded by the 360-degree transmission apparatus and metadata for the 360-degree video data. However, examples are not limited thereto.

The 360-degree video reception apparatus according to the embodiment may acquire the information about the encoded picture and the metadata from the information about the 360-degree video data (S2110). More specifically, the reception processor, the metadata parser, or the decapsulation processor of the 360-degree video reception apparatus may acquire the information about the encoded picture and the metadata from the information about the 360-degree video data.

In one embodiment, the metadata may include group global coordinate system rotation structure information representing information about relative rotation angles between a common reference coordinate system of a viewpoint group including multiple viewpoints and a global coordinate system.

In one example, the group global coordinate system rotation structure information may be referred to as GroupGlobalCoordinateSysRotationStruct.

In one embodiment, the group global coordinate system rotation structure information may include information about a yaw rotation angle, a pitch rotation angle, and a roll rotation angle of the x, y, and z axes of the global coordinate system with respect to the common reference coordinate system. In one example, the information about the yaw rotation angle of the x, y, and z axes of the global coordinate system with respect to the common reference coordinate system may be referred to as group_gcs_yaw, the information about the pitch rotation angle of the x, y, and z axes of the global coordinate system with respect to the common reference coordinate system may be referred to as group_gcs_pitch, and the information about the roll rotation angle of the x, y, and z axes of the global coordinate system with respect to the common reference coordinate system may be referred to as group_gcs_roll.

In one embodiment, the metadata may include a common reference coordinate system information flag indicating whether information about the common reference coordinate system is present. When the value of the common reference coordinate system information flag is 1, the group global coordinate system rotation structure information may be included in the metadata. In one example, the common reference coordinate system information flag may be referred to as common_reference_system_info_flag.

In one embodiment, the multiple viewpoints included in the viewpoint group may share the common reference coordinate system.

In one embodiment, when the viewpoint IDs of a first viewpoint and a second viewpoint among the multiple viewpoints are different from each other, a common reference coordinate system for the first viewpoint and a common reference coordinate system for the second viewpoint may be different from each other.

In one embodiment, the metadata may include viewing orientation structure information representing information about a structure of a viewing orientation for a viewpoint.

In one embodiment, the viewing orientation structure information may include information about the position of a center of an object of interest.

In one embodiment, the information about the position of the center of the object of interest may include an x-axis position, a y-axis position, and a z-axis position of the center of the object of interest.

In one embodiment, the viewing orientation structure information may include information about the position of the center of the viewing orientation.

In one embodiment, the information about the position of the center of the viewing orientation may include an x-axis position, a y-axis position, and a z-axis position of the center of the viewing orientation.

In one embodiment, the viewing orientation structure information may include a GPS position presence flag indicating whether GPS position information about the center of the object of interest is present.

In one embodiment, the viewing orientation structure information may include a volume presence flag indicating whether there is a viewing orientation volume indicating a spherical or three-dimensional space to be played or recommended for playback.

In one embodiment, the 360-degree video reception apparatus may communicate with at least one of a mobile terminal, a network, and a self-driving vehicle.

The metadata includes a dynamic global coordinate system rotation flag indicating whether a relative rotation angle between the common reference coordinate system and the global coordinate system of a dynamic viewpoint are changed.

In one example, the dynamic global coordinate system rotation flag may be represented by dynamic_gcs_rotated_flag.

In one embodiment, the dynamic global coordinate system rotation flag is for a sample entry. When the dynamic global coordinate system rotation flag indicates 0, the relative rotation angle between the common reference coordinate system and the global coordinate system of the dynamic viewpoint may remain unchanged within samples referring to the sample entry.

In one embodiment, when the dynamic global coordinate system rotation flag indicates 0, the metadata may include information about a yaw rotation angle, a pitch rotation angle and a roll rotation angle of the x-axis, y-axis, and z-axis of the global coordinate system with respect to the common reference coordinate system. The information about the yaw rotation angle, the pitch rotation angle and the roll rotation angle of the x-axis, y-axis, and z-axis of the global coordinate system with respect to the common reference coordinate system may be signaled based on, for example, the syntax element ViewpointGlobalCoordinateSysRotationStruct().

In one embodiment, when the dynamic global coordinate system rotation flag indicates 1, the metadata about a sample referring to the sample entry may include information about a yaw rotation angle, a pitch rotation angle, and a roll rotation angle of the x-axis, y-axis, and z-axis of the global coordinate system with respect to the common reference coordinate system related to the sample.

In one embodiment, multiple viewpoints may be categorized into at least one viewpoint group, and the metadata may include viewpoint group structure information about each of the at least one viewpoint group.

In one embodiment, the at least one viewpoint group may include a first viewpoint group and a second viewpoint group. When the viewpoint group including the dynamic viewpoint changes from the first viewpoint group to the secod viewpoint group, the 360-degree video data processing method may be based on viewpoint group structure information about the second viewpoint group. In one example, the metadata may include a viewpoint group structure information flag indicating whether the viewpoint group structure information is changed. The viewpoint group structure information flag may be referred to as, for example, dynamic_vwpt_group_flag.

In one embodiment, the viewpoint group structure information may include at least one of information about an anchor viewpoint ID of the viewpoint group, information about whether viewpoints included in the viewpoint group are contiguous with each other, and information about the number of viewpoints included in the viewpoint group.

In one embodiment, the 360-degree video data reception apparatus may communicate with at least one of a mobile terminal, a network, and a self-driving vehicle.

The 360-degree video reception apparatus according to the embodiment may decode the picture based on the information about the encoded picture (S2120). More specifically, the data decoder of the 360-degree video reception apparatus may decode the picture based on the information about the encoded picture.

The 360-degree video reception apparatus according to the embodiment may render the decoded picture based on the metadata (S2130). More specifically, the renderer of the 360-degree video reception apparatus may render the decoded picture based on the metadata.

According to the 360-degree video reception apparatus and the operation method of the 360-degree video reception apparatus disclosed in FIGS. 21 and 22, the 360-degree video reception apparatus according to the embodiment may receive information about 360-degree video data (S2100), acquire information about an encoded picture and metadata from the information about the 360-degree video data (S2110), decode the picture based on the information about the encoded picture (S2120), and render the decode picture based on the metadata (S2130). Here, the metadata may include group global coordinate system rotation structure information representing information about a relative rotation angle between a common reference coordinate system of a viewpoint group including multiple viewpoints and a global coordinate system. Accordingly, the group global coordinate system rotation structure information representing the information about the relative rotation angle between the common reference coordinate system of the viewpoint group including multiple viewpoints and the global coordinate system may be effectively signaled.

The above-described embodiments of the present disclosure may be applied to VR and AR. The above-described embodiments of the present disclosure may be implemented based on the following chipsets.

FIG. 23 exemplarily shows devices capable of supporting embodiments of the present disclosure. For example, the first device may include a transmission device (e.g., the 360 video transmission apparatus), and the second device may include a reception device (e.g., the 360 video reception apparatus). The technical features of the present specification for the above-described transmission device and reception device may be applied to this embodiment.

For example, the first device may include a processor, a memory, a video/image acquisition device, and a transceiver. The processor may be configured to perform the proposed functions, procedures and/or methods described herein. For example, the processor may be configured to control and/or perform procedures such as stitching, projection, (region-wise) packing, composition, (video/image) encoding, and metadata generation and processing described above. The processor may be configured to control and/or perform a 360 video/image acquisition procedure and procedures for encapsulation and transmission processing of VR/AR information (e.g., 360 video/image data, etc.). The processor may control the configuration and transmission of metadata disclosed in the embodiments of the present disclosure. The memory is operatively coupled with the processor, and stores various kinds of information for operating the processor. The transceiver is operatively coupled with the processor, and transmits and/or receives wired/wireless signals.

For example, the second device may include a processor, a memory, a transceiver, and a renderer. The renderer may be omitted and implemented as an external device. The processor may be configured to perform the proposed functions, procedures and/or methods described herein. For example, the processor may be configured to control and/or perform procedures such as metadata acquisition and processing, (video/image) decoding, (region-wise) unpacking, selection, composition, reprojection, and rendering described above. The processor may be configured to control and/or perform procedures for decapsulation and reception processing of VR/AR information (e.g., 360 video/image data, etc.). The processor may control the configuration and transmission of metadata disclosed in the embodiments of the present disclosure. The memory is operatively coupled with the processor, and stores various kinds of information for operating the processor. The transceiver is operatively coupled with the processor, and transmits and/or receives wired/wireless signals.

In the present specification, the processor may include an application-specific integrated circuit (ASIC), other chipsets, logic circuits, and/or data processing devices. The memory may include a read-only memory (ROM), a random access memory (RAM), a flash memory, a memory card, a storage medium, and/or other storage devices. The transceiver may include a baseband circuit configured to process radio frequency signals. When embodiments are implemented in software, the techniques described herein may be implemented as a module (e.g., a procedure, a function, etc.) configured to perform the functions described herein. The module may be stored in the memory and executed by the processor. The memory may be implemented inside the processor. Alternatively, the memory may be implemented outside the processor, and may be communicatively connected to the processor through various means known in the art.

The first device may be a base station, a network node, a transmission terminal, a reception terminal, a wireless device, a wireless communication device, a vehicle, a vehicle equipped with an autonomous driving function, a connected car, a drone (unmanned aerial vehicle (UAV)), an artificial intelligence (AI) module, a robot, an augmented reality (AR) device, a virtual reality (VR) device, a mixed reality (MR) device, a hologram device, a public safety device, an MTC device, an IoT device, a medical device, a fintech device (or financial device), a security device, a climate/environmental device, a device related to 5G services, or a device related to the fourth industrial revolution.

The second device may be a base station, a network node, a transmission terminal, a reception terminal, a wireless device, a wireless communication device, a vehicle, a vehicle equipped with an autonomous driving function, a connected car, a drone (unmanned aerial vehicle (UAV)), an artificial intelligence (AI) module, a robot, an augmented reality (AR) device, a virtual reality (VR) device, a mixed reality (MR) device, a hologram device, a public safety device, an MTC device, an IoT device, a medical device, a fintech device (or financial device), a security device, a climate/environmental device, a device related to 5G services, or a device related to the fourth industrial revolution.

For example, the terminals may include a cellular phone, a smart phone, a laptop computer, a terminal for digital broadcasting, personal digital assistants (PDA), a portable multimedia player (PMP), a navigation device, a slate PC, a tablet PC, an ultrabook, and a wearable device (e.g., a smartwatch, smart glass, a head mounted display (HMD)). For example, the HMD may be a display device worn on the head. For example, the HMD may be used to implement VR, AR or MR.

For example, the drone may be a vehicle that is caused to fly by radio control signals without a human riding therein. For example, the VR device may include a device configured to implement an object or background of a virtual world. For example, the AR device may include a device configured to implement an object or background of the virtual world by connecting the same to an object or background of the real world. For example, the MR device may include a device configured to implement an object or background of the virtual world by blending the same with an object or background of the real world. For example, the hologram device may include a device configured to implement a 360-degree stereoscopic image by recording and reproducing stereoscopic information using the interference effect of light generated when two laser rays called holography meet each other. For example, the public safety device may include a video/image relay device or a video/image device wearable on a user's body. For example, the MTC device and the IoT device may be devices that do not require direct human intervention or manipulation. For example, the MTC device and the IoT device may include a smart meter, a bending machine, a thermometer, a smart light bulb, a door lock, or various sensors. For example, the medical device may be a device used for the purpose of diagnosing, treating, alleviating, controlling or preventing a disease. For example, the medical device may be a device used for the purpose of diagnosing, treating, alleviating or correcting an injury or disorder. For example, the medical device may be a device used for the purpose of examining, replacing, or modifying a structure or function. For example, the medical device may be a device used to control pregnancy. For example, the medical device may include a treatment device, a surgical device, a (in vitro) diagnostic device, a hearing aid, or a procedure device. For example, the security device may be a device installed to prevent dangers that may occur and to maintain safety. For example, the security device may be a camera, a CCTV, a recorder, or a black box. For example, the fintech device may be a device capable of providing financial services such as mobile payment. For example, the fintech device may include a payment device or a point of sales (POS). For example, the climate/environmental device may include a device configured to monitor or predict the climate/environment.

The first device and/or the second device may have one or more antennas. For example, the antennas may be configured to transmit and receive wireless signals.

The technical features according to the present disclosure described above may be applied to various services including VR/AR. In addition, the technical features according to the present disclosure described above may be implemented through fifth generation (5G) or future-generation communication. For example, data (including a video/image bitstream, metadata, etc.) output from a transmission apparatus (e.g., the 360 video transmission apparatus) may be transmitted to a reception apparatus (e.g., the 360 video reception apparatus) through 5G communication. In addition, a (VR/AR) image/video acquisition device may be separately provided outside, and deliver the acquired image/video to the transmission apparatus through 5G communication. In addition, the transmission apparatus and/or the reception apparatus according to the present disclosure may support various service scenarios through 5G communication.

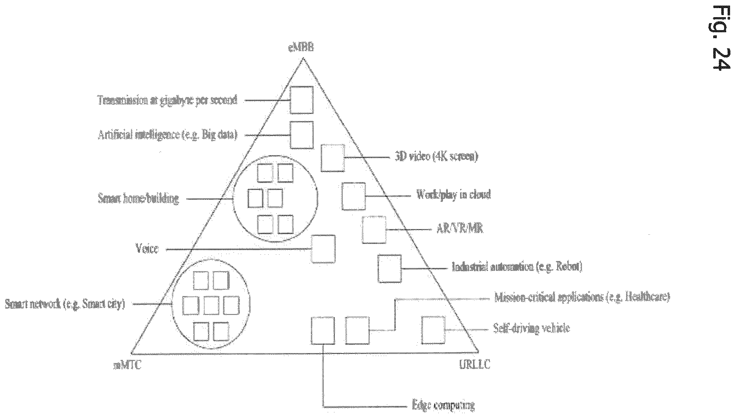

FIG. 24 illustrates an exemplary 5G usage scenario to which the technical features of the present disclosure are applicable. The 5G usage scenario illustrated in the figure is merely exemplary, and the technical features of the present disclosure may be applied to other 5G usage scenarios not illustrated in the figure.

Referring to FIG. 24, three main areas of requirements for 5G include (1) enhanced mobile broadband (eMBB), (2) massive machine type communication (mMTC), and (3) ultra-reliable and low latency communications (URLLC). Some use cases may require multiple areas for optimization, and other use cases may focus on only one key performance indicator (KPI). 5G supports these various use cases using a flexible and reliable method.

eMBB focuses on overall improvement of data rate, latency, user density, and capacity and coverage of mobile broadband connections. eMBB aims at throughput of about 10 Gbps. eMBB surpasses basic mobile Internet access and covers media and entertainment applications in rich interactive work, cloud or augmented reality. Data is one of the key drivers of 5G, and dedicated voice services may disappear for the first time in the 5G era. In 5G, voice is expected to be processed with an application simply using a data connection provided by the communication system. The main causes of increase in traffic volume are the increased content size and the increased number of applications requiring high data rates. Streaming services (audio and video) and interactive video and mobile Internet connections will be more widely used to allow more devices to connect to the internet. Many of these applications require always-on connectivity to provide real-time information and notifications to users. Cloud storage and applications are rapidly increasing on mobile communication platforms, and may be applied to both work and entertainment. The cloud storage is a special use case that drives the increase of uplink data rates. 5G is also used for remote work on the cloud and requires much lower end-to-end delay to maintain a good user experience when a tactile interface is used. In entertainment, for example, cloud gaming and video streaming are another key factor that increases the demand for mobile broadband capabilities. Entertainment is essential for smartphones and tablets at any place including high mobility environments such as trains, cars and airplanes. Another use case is augmented reality and information retrieval for entertainment. Here, augmented reality requires a very low latency and an instantaneous amount of data.

mMTC is designed to enable communication between a large number of low-cost devices powered by batteries, and is intended to support applications such as smart metering, logistics, fields and body sensors. mMTC aims at about 10 years of battery life and/or 1 million devices per $km^2$. mMTC enables smooth connection of embedded sensors in all fields and is one of the most anticipated 5G use cases. Potentially, the number of IoT devices is expected to reach 20.4 billion by 2020. Industrial IoT is one of the areas where 5G plays a key role in realizing smart cities, asset tracking, smart utilities, and agriculture and security infrastructure.

URLLC is ideal for vehicle communication, industrial control, factory automation, telesurgery, smart grid and public safety applications as it enables devices and machines to communicate with high reliability, very low latency and high availability. URLLC aims at a latency of about 1 ms. URLLC includes new services that will transform the industry through ultra-reliable/low-latency links such as remote control of key infrastructure and self-driving vehicles. Reliability and latency level are essential for smart grid control, industrial automation, robotics, and drone control and coordination.

Next, the use cases included in the triangle of FIG. 23 will be described in more detail.

5G may complement fiber-to-the-home (FTTH) and cable-based broadband (or DOCSIS) with a means to provide streams rated at hundreds of megabits per second to gigabits per second. Such fast speeds may be required to implement a TV in 4K or higher resolutions (6K, 8K and higher) as well as virtual reality (VR) and augmented reality (AR). VR and AR applications include almost immersive sports events. A specific application may require special network settings. For VR games, for example, a gaming company may need to integrate a core server with a network operator's edge network server to minimize latency.

Automotive is expected to be an important new driver for 5G, with many use cases for mobile communications for vehicles. For example, entertainment for passengers requires high capacity and high mobile broadband simultaneously. This is because future users continue to expect high-quality connections regardless of their location and speed. Another use case in the automotive field is the AR dashboard. The AR dashboard allows the driver to identify objects in the dark over what is being viewed through the windshield. The AR dashboard superimposes information about the distance and movement of an object that is to be delivered to the driver in an overlapping manner. In the future, wireless modules will enable communication between vehicles, exchange of information between a vehicle and the supporting infrastructure, and exchange of information between a vehicle and other connected devices (e.g., a device carried by a pedestrian). The safety system helps to reduce the risk of accidents by guiding an alternative course of action to help the driver drive more safely. The next step will be a remotely controlled vehicle or a self-driving vehicle. This requires very reliable and very fast communication between different self-driving vehicles and/or between the vehicle and the infrastructure. In the future, self-driving vehicles will perform all driving activities, and drivers will focus only on traffic conditions which the vehicle cannot identify. A technical requirement of self-driving vehicles is ultra-low latency and ultra-high-speed reliability that increase traffic safety to a level that cannot be achieved by humans.

Smart cities and smart homes, referred to as smart societies, will be embedded in high-density wireless sensor networks. The distributed network of intelligent sensors will identify the conditions for cost and energy efficient maintenance of a city or home. Similar settings may be made for each home. Temperature sensors, window and heating controllers, burglar alarms and home appliances are all connected wirelessly. Many of these sensors typically require low data rates, low power and low cost. However, for example, real-time HD video may be required in certain types of devices for surveillance.

Since the consumption and distribution of energy, including heat or gas, is highly decentralized, automated control of the distributed sensor network is required. The smart grid interconnects these sensors using digital information and communication technologies to collect information and act accordingly. This information may include behaviors of suppliers and consumers, and accordingly may allow smart grids to improve efficiency, reliability, economics, production sustainability and distribution of fuels such as electricity in an automated manner. The smart grid may be considered as another sensor network with low latency.

The health sector has many applications that may benefit from mobile communications. A communication system may support telemedicine that provides clinical care from a distance. This helps to reduce barriers to distance and may improve access to medical services that are not continuously available in remote rural areas. The communication system is also used to save lives in critical care and emergency situations. Mobile communication-based wireless sensor networks may provide remote monitoring and sensors for parameters such as heart rate and blood pressure.

Wireless and mobile communications are becoming increasingly important in industrial applications. Wiring is expensive to install and maintain. Therefore, the possibility of replacing the cable with a wireless link that can be reconfigured is an attractive opportunity in many industries. However, achieving this requires that the wireless connection operate with latency, reliability, and capacity similar to those of cable, and that management thereof be simplified. Low latency and very low error rate are new requirements for 5G.

Logistics and cargo tracking is an important use case for mobile communications that enable tracking of inventory and packages from anywhere using location-based information systems. The use case of logistics and cargo tracking typically require low data rates, while requiring wide coverage and reliable location information.

Further, embodiments according to the present disclosure may be carried out to support extended reality (XR). XR refers to virtual reality (VR), augmented reality (AR), and mixed reality (MR). VR technology provides only CG images for real-world objects or backgrounds, AR technology provides virtually created CG images on real objects, and MR technology is a computer graphics technology that provides virtual objects by mixing and combining the same with the real world.

MR technology is similar to AR technology in that it displays both real and virtual objects. However, MR technology is different from AR technology, which uses a virtual object as a complement to a real object, in that a virtual object and a real object have equal characteristics.

XR technology may be applied to a head-mount display (HMD), a head-up display (HUD), a mobile phone, a tablet PC, a laptop, a desktop, a TV, a digital signage, etc. A device to which the XR technology is applied may be referred to as an XR device. The XR device may include the first device and/or the second device described above.

The XR device may be connected to various services over a communication network that is based on 5G communications or the like.

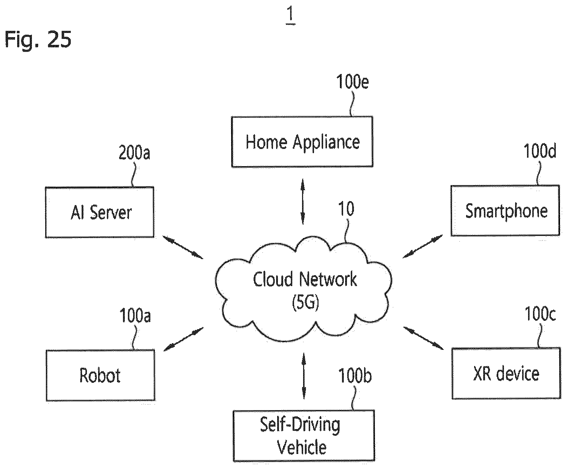

FIG. 25 shows a service system according to an embodiment of the present disclosure.

Referring to FIG. 25, an XR device 100c may be connected to at leate one of an AI server 200a, a robot 100a, a self-driving vehicle 100b, a smartphone 100d, or a home appliance 100e over a network 10. Here, the robot 100a, the self-driving vehicle 100b, the XR device 100c, the smartphone 100d, or the home appliance 100e, to which AI technology is applied, may be referred to as an AI device.

The network 10 may include a wired/wireless communication network. The network 10 may include a cloud network. The cloud network may mean a network that forms part of the cloud computing infrastructure or exists within the cloud computing infrastructure. Here, the cloud network may be configured using a 3G network, a 4G or Long Term Evolution (LTE) network, or a 5G network.

The devices 100a to 100e and 200a constituting the system 1 may be connected to each other over the cloud network 10. In particular, the devices 100a to 100e and 200a, which may communicate with each other via a base station, may communicate with each other directly without assistance from the base station.

The AI server 200a may include a server configured to perform AI processing and a server configured to perform operations on big data.

The AI server 200a may be connected to at least one of the robot 100a, the self-driving vehicle 100b, the XR device 100c, the smartphone 100d, or the home appliance 100e over the network 10 and may help at least part of AI processing of the connected AI devices 100a to 100e.

Here, the AI server 200a may train an artificial neural network according to a machine learning algorithm on behalf of the AI devices 100a to 100e, and may directly store the learning model or transmit the same to the AI devices 100a to 100e.

Then, the AI server 200a may receive input data from the AI devices 100a to 100e, infers a result value for the received input data using the learning model, and issue a response or control command based on the inferred result value and transmit the same to AI devices 100a to 100e.

Alternatively, the AI devices 100a to 100e may infer a result value for the input data using a direct learning model and generate a response or control command based on the inferred result value.

The XR device 100c may be implemented as a head-mount display (HMD), a head-up display (HUD) provided in a vehicle, a television, a mobile phone, a smartphone, a computer, a wearable device, a home appliance, a digital signage, a vehicle, a stationary robot, a mobile robot, or the like.

The XR device 100c may generate location data and attribute data about 3D points by analyzing 3D point cloud data or image data acquired through various sensors or from external devices. Thereby, it may acquire information about surrounding space or real objects, and render an XR object to be output. For example, the XR device may match an XR object including supplemental information about a recognized object with the recognized object and output the same.

The XR device 100c may perform the above-described operations using a learning model composed of at least one artificial neural network. For example, the XR device 100c may recognize a real object from the 3D point cloud data or image data using the learning model, and provide information corresponding to the recognized real object. Here, the learning model may be trained directly by the XR device 100c or by an external device such as the AI server 200a.

The XR device 100c, which may perform an operation by direcly generating a result using the learning model, may transmit sensor information to an external device such as the AI server 200a and receive a generated result corresponding thereto for subsequent operation.

The robot 100a may include a guide robot, a transport robot, a cleaning robot, a wearable robot, an entertainment robot, a pet robot, an unmanned flying robot, and a drone.

The robot 100a may include a robot control module configured to control an operation. The robot control module may represent a software module or a chip implemented with hardware.

The robot 100a may use sensor information obtained from various types of sensors to acquire state information about the robot 100a, detect (recognize) surrounding environments and objects, generate map data, determine a movement path or a travel plan, determine a response to user interaction, or determine an operation.

Here, the robot 100a may use sensor information acquired from at least one sensor among lidar, radar, and a camera determine the movement path and the travel plan.

The XR device 100c may remotely access and/or remotely control the robot 100a over the network 10. In this case, the robot 100a may share a view or a screen with a user who uses the XR device 100c, and control the driving unit based on the user's control/interaction to perform an operation or travel. Here, the robot 100a may acquire intention information about an interaction according to a user's motion or voice utterance, and determine a response based on the acquired intention information to perform an operation.

The robot 100a to which XR technology is applied may represent a robot that is a target of control/interaction within an XR image. In this case, the robot 100a and the XR device 100c may be distinguished from each other and operatively connected to each other. In this case, the robot 100a and the XR device 100c may be distinguished from each other and operatively connected to each other. When the robot 100a, which is the target of control/interaction within the XR image, acquires sensor information from sensors including a camera, the robot 100a or the XR device 100c may generate an XR image based on the sensor information. The XR device 100c may output the generated XR image. In addition, the robot 100a may operate based on a control signal or a user's interaction input through the XR device 100c.

For example, the user may check an XR image corresponding to the viewing position of the robot 100a remotely linked through an external device such as the XR device 100c, and may adjust the self-driving path of the robot 100a, control the operation or driving, or check the information about surrounding objects through interaction.

The self-driving vehicle 100b may include a mobile robot, a vehicle, a train, a manned/unmanned aerial vehicle, and a ship.

The self-driving vehicle 100b may include a self-driving control module configured to control a self-driving function. The self-driving control module may refer to a software module or a chip implemented with hardware. The self-driving control module may be included in the self-driving vehicle 100b as an internal component, or may be configured as a separate hardware outside the self-driving vehicle 100b and connected to the vehicle.

The self-driving vehicle 100b may use sensor information acquired from various types of sensors to acquire state information about the self-driving vehicle 100b, detect (recognize) surrounding environments and objects, generate map data, determine a movement path or a travel plan, or determine an operation.

Similar to the robot 100a, the self-driving vehicle 100b may sensor information acquired from at least one sensor among the lidar, radar, and camera to determine the movement path and the travel plan.

In particular, the self-driving vehicle 100b may receive sensor information from external devices and recognize an environment or an object for an area where the view thereof is blocked or an area that is at a predetermined distance or more, or may receive recognized information directly from external devices.

The XR device 100c may remotely access and/or remotely control the self-driving vehicle 100b over the network 10. In this case, the self-driving vehicle 100b may share a view or a screen with a user who uses the XR device 100c, and control the driving unit based on the user's control/interaction to perform an operation or travel. Here, the robot 100a may acquire intention information about an interaction according to a user's motion or voice utterance, and determine a response based on the acquired intention information to perform an operation.

The self-driving vehicle 100b to which the XR technology is applied may represent a self-driving vehicle having a means to provide an XR image or a self-driving vehicle that is a target of control/interaction within the XR image. In particular, the self-driving vehicle 100b that is the target of control/interaction in the XR image may be distinguished from the XR device 100c and may be operatively connected therewith.

The self-driving vehicle 100b having a means to provide an XR image may acquire sensor information from sensors including a camera, and output an XR image generated based on the acquired sensor information. For example, the self-driving vehicle 100b may have a HUD and provide an XR object corresponding to a real object or an object on the screen to the occupant by outputting an XR image.

When the XR object is output to the HUD, at least a part of the XR object may be output so as to overlap with a real object at which the occupant gazes. On the other hand, when the XR object is output to a display provided inside the self-driving vehicle 100b, at least a part of the XR object may be output so as to overlap with an object on the screen. For example, the self-driving vehicle 100b may output XR objects corresponding to objects such as lanes, other vehicles, traffic lights, traffic signs, two-wheeled vehicles, pedestrians, and buildings.

When the self-driving vehicle 100b, which is the target of control/interaction in an XR image, acquires sensor information from the sensors including a camera, the self-driving vehicle 100b or the XR device 100c may generate an XR image based on the sensor information. The XR device 100c may output the generated XR image. In addition, the self-driving vehicle 100b may operate based on a user's interaction or a control signal input through an external device such as the XR device 100c.

The XR device 100c may be provided inside the robot 100a and/or the self-driving vehicle 100b to provide separate XR content to the user, or provide images of the inside/outside of the robot 100a and/or the self-driving vehicle 100b to the user.

The XR device 100c may also be used for various other services such as entertainment, exercise, education, transportation, medical care, e-commerce, manufacturing, and defense. For example, a movie, a theme park, and sports may be experienced and/or viewed through the XR device 100c, and medical training, training in a dangerous environment such as a fire scene, and the like may be supported. In addition, through the XR device 100c, path-finding services such as AR Ways using location recognition and map generation (SLAM) technology may be provided. Further, the user may the allowed to access a virtual shopping mall to shop and purchase goods.

Each of the above-described parts, modules, or units may be a processor or hardware part that executes successive procedures stored in a memory (or storage unit). Each of the steps described in the above-described embodiment may be performed by processors or hardware parts. Each module/block/unit described in the above-described embodiment may operate as a hardware element/processor. In addition, the methods described in the present disclosure may be executed as code. The code may be written in a recoding medium readable by a processor, and thus may be read by the processor provided by the apparatus.

While the methods in the above-described embodiment are described based on a flowchart of a series of steps or blocks, the present disclosure is not limited to the order of the steps. Some steps may take place in a different order or simultaneously. It will be understood by those skilled in the art that the steps shown in the flowchart are not exclusive, and other steps may be included or one or more of the steps in the flowchart may be deleted within the scope of the present disclosure.

When embodiments of the present disclosure are implemented in software, the above-described method may be implemented as a module (process, function, etc.) configured to perform the above-described functions. The module may be stored in a memory and may be executed by a processor. The memory may be inside or outside the processor, and may be connected to the processor by various well-known means. The processor may include application-specific integrated circuits (ASICs), other chipsets, logic circuits, and/or data processing devices. The memory may include a read-only memory (ROM), a random access memory (RAM), a flash memory, a memory card, a storage medium, and/or other storage devices.

The internal components of the above-described device may be processors that execute successive processes stored in the memory, or may be hardware components composed of other hardware. These components may be arranged inside/outside the device.

The above-described modules may be omitted or replaced by other modules configured to perform similar/same operations according to embodiments.

**Claims**

1. A method for processing 360 video data by an apparatus for receiving 360 video data, the method comprising:

   receiving a bitstream including 360 video data and metadata for the 360 video data;
   decapsulating the 360 video data and the metadata;
   decoding the 360 video data; and
   rendering the 360 video data based on the metadata,
   wherein the metadata includes viewpoint information including position information of a viewpoint in which the 360 video data is acquired,
   wherein the metadata further includes viewpoint group information including an identifier for a viewpoint group that is a group of viewpoints for the 360 video data,
   wherein the identifier for the viewpoint group is used to switch to a viewpoint in the group,
   wherein the metadata further includes dynamic viewpoint information that are dynamically changed over time,
   wherein the dynamic viewpoint information includes a flag representing whether yaw, pitch, and roll rotation angles of X, Y, Z axes, of a global coordinates system of a viewpoint relative to a common reference coordinate system remain unchanged or not in samples referring to a sample entry.

2. The method of claim 1,
   wherein the metadata further includes viewpoint information including x-axis position information, y-axis position information, z-axis position information of a viewpoint for the 360 video data, longitude information of a geolocation of the viewpoint, latitude information of the geolocation of the viewpoint, and altitude information of the geolocation of the viewpoint.

3. The method of claim 1,

   wherein the metadata including group global coordinate system rotation structure information representing information for a relative rotation angle between a common reference coordinate and a global coordinate of a viewpoint group including viewpoints,
   wherein the group global coordinate system rotation structure information includes
   a yaw rotation angle, a pitch rotation angle, and a roll rotation angle for the common reference coordinate of each of a x axis, a y axis, and a z axis of the global coordinate,
   wherein the metadata includes a common reference coordinate information flag representing whether or not the information for a common reference coordinate is present,
when the common reference coordinate information flag is one(1), the group global coordinate system rotation structure information is included in the metadata or
wherein the viewpoints included in the viewpoint group shares the common reference coordinate.

4. The method of claim 1,
wherein when a first viewpoint of the viewpoints is different from a second viewpoint of the viewpoints, a common reference coordinate for the first viewpoint is different from a common reference coordinate for the second viewpoint.

5. The method of claim 1,
wherein the metadata includes viewing orientation structure information representing a structure of viewing orientation for a viewpoint.

6. The method of claim 5,
wherein the viewing orientation structure information includes location information of a center of an object.

7. The method of claim 6,

wherein the location information of the center of the object includes x axis orientation location, y axis orientation location, and z axis orientation location of the object, or
wherein the viewing orientation structure information includes a GPS location present flag representing whether or not GPS location information for a center of the object is present.

8. The method of claim 5,
wherein the viewing orientation structure information includes center location information of viewing orientation.

9. The method of claim 8,
wherein the center location information of viewing orientation includes x axis orientation location, y axis orientation location, and z axis orientation location of a center of the viewing orientation.

10. The method of claim 5,

wherein the viewing orientation structure information includes
a volume present flag representing whether or not viewing orientation representing a 3D space or a sphere to be displayed or to recommend to display is present.

11. The method of claim 1,
wherein the apparatus for receiving 360 video data is communicated with at least one of a mobile device, a network, and an automatic diving car.

12. A method for processing 360 video data by an apparatus for transmitting 360 video data, the method comprising:

acquiring 360 video data captured by at least one camera;
deriving a two-dimensional (2D) picture including an omnidirectional image by processing the 360 video data;
generating metadata for the 360 video data;
encoding the 2D picture; and
encapsulating the 2D picture and the metadata,
wherein the metadata includes viewpoint information including position information of a viewpoint in which the 360 video data is acquired,
wherein the metadata further includes viewpoint group information including an identifier for a viewpoint group that is a group of viewpoints for the 360 video data,
wherein the identifier for the viewpoint group is used to switch to a viewpoint in the group,
wherein the metadata further includes dynamic viewpoint information that are dynamically changed over time,
wherein the dynamic viewpoint information includes a flag representing whether yaw, pitch, and roll rotation angles of X, Y, Z axes, of a global coordinates system of a viewpoint relative to a common reference coordinate system remain unchanged or not in samples referring to a sample entry.

13. An apparatus for processing and receiving 360 video data, the apparatus comprising:

a receiver configured to receive a bitstream including 360 video data and metadata for the 360 video data;

a decapsulator configured to acquire the 360 video data and the metadata;

a decoder configured to decode the 360 video data;

a renderer configured to render the 360 video data based on the metadata,

wherein the metadata includes viewpoint information including position information of a viewpoint in which the 360 video data is acquired,

wherein the metadata further includes viewpoint group information including an identifier for a viewpoint group that is a group of viewpoints for the 360 video data,

wherein the identifier for the viewpoint group is used to switch to a viewpoint in the group,

wherein the metadata further includes dynamic viewpoint information that are dynamically changed over time,

wherein the dynamic viewpoint information includes a flag representing whether yaw, pitch, and roll rotation angles of X, Y, Z axes, of a global coordinates system of a viewpoint relative to a common reference coordinate system remain unchanged or not in samples referring to a sample entry..

14. An apparatus for processing and transmitting 360 video data, the apparatus comprising:

an acquirer configured to acquire 360 video data captured by at least one camera;

a packer configured to derive a two-dimensional (2D) picture including an omnidirectional image by processing the 360 video data;

a generator configured to generate metadata for the 360 video data;

an encoder configured to encode the 2D picture; and

an encapsulate configured to encapsulate the 2D picture and the metadata,

wherein the metadata includes viewpoint information including position information of a viewpoint in which the 360 video data is acquired,

wherein the metadata further includes viewpoint group information including an identifier for a viewpoint group that is a group of viewpoints for the 360 video data,

wherein the identifier for the viewpoint group is used to switch to a viewpoint in the group,

wherein the metadata further includes dynamic viewpoint information that are dynamically changed over time,

wherein the dynamic viewpoint information includes a flag representing whether yaw, pitch, and roll rotation angles of X, Y, Z axes, of a global coordinates system of a viewpoint relative to a common reference coordinate system remain unchanged or not in samples referring to a sample entry.

**Patentansprüche**

1. Verfahren zum Verarbeiten von 360-Grad-Videodaten durch eine Vorrichtung zum Empfangen von 360-Grad-Videodaten, wobei das Verfahren umfasst:

Empfangen eines Bitdatenstroms, der 360-Grad-Videodaten und Metadaten für die 360-Grad-Videodaten enthält;

Entkapseln der 360-Grad-Videodaten und der Metadaten;

Decodieren der 360-Grad-Videodaten und

Rendern der 360-Grad-Videodaten basierend auf den Metadaten,

wobei die Metadaten Gesichtspunktinformationen enthalten, die Positionsinformationen eines Gesichtspunkts enthalten, an dem die 360-Grad-Videodaten erfasst werden,

wobei die Metadaten weiterhin Gesichtspunktgruppeninformationen enthalten, die eine Kennung für eine Gesichtspunktgruppe enthalten, die eine Gruppe von Gesichtspunkten für die 360-Grad-Videodaten ist,

wobei die Kennung für die Gesichtspunktgruppe zum Wechseln zu einem Gesichtspunkt in der Gruppe verwendet wird,

wobei die Metadaten weiterhin dynamische Gesichtspunktinformationen enthalten, die im Laufe der Zeit dynamisch geändert werden,

wobei die dynamischen Gesichtspunktinformationen ein Flag enthalten, das angibt, ob Gier-, Nick- und Roll-Rotationswinkel von X-, Y- und Z-Achsen eines globalen Koordinatensystems eines Gesichtspunkts relativ zu einem gemeinsamen Referenzkoordinatensystem in Proben, die sich auf einen Probeneintrag beziehen, unverändert bleiben oder nicht.

2. Verfahren nach Anspruch 1,
wobei die Metadaten weiterhin Gesichtspunktinformationen enthalten, die X-Achsenpositionsinformationen, Y-Achsenpositionsinformationen, Z-Achsenpositionsinformationen eines Gesichtspunkts für die 360-Grad-Videodaten, Längengradinformationen einer Geolokalisation des Gesichtspunkts, Breitengradinformationen der Geolokalisation des Gesichtspunkts und Höheninformationen der Geolokalisation des Gesichtspunkts enthalten.

3. Verfahren nach Anspruch 1,

wobei die Metadaten Gruppeninformationen zur Rotationsstruktur des globalen Koordinatensystems enthalten, die Informationen für einen relativen Rotationswinkel zwischen einer gemeinsamen Referenzkoordinate und einer globalen Koordinate einer Gesichtspunktgruppe, die Gesichtspunkte enthält, darstellen,
wobei die Gruppeninformationen zur Rotationsstruktur des globalen Koordinatensystems enthalten:

einen Gier-Rotationswinkel, einen Nick-Rotationswinkel und einen Roll-Rotationswinkel für die gemeinsame Referenzkoordinate jeder von einer X-Achse, einer Y-Achse und einer Z-Achse der globalen Koordinate, wobei die Metadaten einen Flag zu Informationen für eine gemeinsame Referenzkoordinate enthalten, das angibt, ob die Informationen für eine gemeinsame Referenzkoordinate vorhanden sind oder nicht,
wenn das Flag zu Informationen für eine gemeinsame Referenzkoordinate eins (1) ist, die Gruppeninformationen zur Rotationsstruktur des globalen Koordinatensystems in den Metadaten enthalten sind, oder
wobei die in der Gesichtspunktgruppe enthaltenen Gesichtspunkte die gemeinsame Referenzkoordinate teilen.

4. Verfahren nach Anspruch 1,
wobei, wenn ein erster Gesichtspunkt der Gesichtspunkte von einem zweiten Gesichtspunkt der Gesichtspunkte verschieden ist, eine gemeinsame Referenzkoordinate für den ersten Gesichtspunkt von einer gemeinsamen Referenzkoordinate für den zweiten Gesichtspunkt verschieden ist.

5. Verfahren nach Anspruch 1,
wobei die Metadaten Informationen zur Betrachtungsausrichtungsstruktur enthalten, die eine Struktur einer Betrachtungsausrichtung für einen Gesichtspunkt darstellen.

6. Verfahren nach Anspruch 5,
wobei die Informationen zur Betrachtungsausrichtungsstruktur Positionsinformationen eines Mittelpunkts eines Objekts enthalten.

7. Verfahren nach Anspruch 6,

wobei die Positionsinformationen des Mittelpunkts des Objekts eine x-Achsenausrichtungsposition, eine y-Achsenausrichtungsposition und eine z-Achsenausrichtungsposition des Objekts enthalten oder
wobei die Informationen zur Betrachtungsausrichtungsstruktur ein Flag zum Vorhandensein einer GPS-Position enthalten, das angibt, ob GPS-Positionsinformationen für einen Mittelpunkt des Objekts vorhanden sind oder nicht.

8. Verfahren nach Anspruch 5,
wobei die Informationen zur Betrachtungsausrichtungsstruktur Informationen zur Mittelpunktposition einer Betrachtungsausrichtung enthalten.

9. Verfahren nach Anspruch 8,
wobei die Informationen zur Mittelpunktsposition einer Betrachtungsausrichtung eine X-Achsen-Ausrichtungsposition, eine Y-Achsen-Ausrichtungsposition und eine Z-Achsen-Ausrichtungsposition eines Mittelpunkts der Betrachtungsausrichtung enthalten.

10. Verfahren nach Anspruch 5,
wobei die Informationen zur Betrachtungsausrichtungsstruktur enthalten:
ein Flag zum Vorhandensein eines Volumens, das angibt, ob eine Betrachtungsausrichtung vorhanden ist, die einen 3D-Raum oder eine Kugel darstellt, die angezeigt werden soll oder zur Anzeige empfohlen werden soll.

11. Verfahren nach Anspruch 1,
wobei die Vorrichtung zum Empfangen von 360-Grad-Videodaten mit zumindest einem von einem Mobilgerät, einem Netzwerk und einem automatischen fahrenden Fahrzeug kommuniziert.

**12.** Verfahren zum Verarbeiten von 360-Grad-Videodaten durch eine Vorrichtung zum Senden von 360-Grad-Videodaten, wobei das Verfahren umfasst:

Erfassen von 360-Grad-Videodaten, die von zumindest einer Kamera aufgenommen werden;
Ableiten eines zweidimensionalen, 2D, Bilds einschließlich eines Rundumbilds durch Verarbeiten der 360-Grad-Videodaten;
Erzeugen von Metadaten für die 360-Grad-Videodaten;
Codieren des 2D-Bilds und
Kapseln des 2D-Bilds und der Metadaten,
wobei die Metadaten Gesichtspunktinformationen enthalten, die Positionsinformationen eines Gesichtspunkts enthalten, an dem die 360-Grad-Videodaten erfasst werden,
wobei die Metadaten weiterhin Gesichtspunktgruppeninformationen enthalten, die eine Kennung für eine Gesichtspunktgruppe enthalten, die eine Gruppe von Gesichtspunkten für die 360-Grad-Videodaten ist,
wobei die Kennung für die Gesichtspunktgruppe zum Wechseln zu einem Gesichtspunkt in der Gruppe verwendet wird,
wobei die Metadaten weiterhin dynamische Gesichtspunktinformationen enthalten, die im Laufe der Zeit dynamisch geändert werden,
wobei die dynamischen Gesichtspunktinformationen ein Flag enthalten, das angibt, ob Gier-, Nick- und Rollrotationswinkel von X-, Y- und Z-Achsen eines globalen Koordinatensystems eines Gesichtspunkts relativ zu einem gemeinsamen Referenzkoordinatensystem in Proben, die sich auf einen Probeneintrag beziehen, unverändert bleiben oder nicht.

**13.** Vorrichtung zum Verarbeiten und Empfangen von 360-Grad-Videodaten, wobei die Vorrichtung umfasst:

einen Empfänger, der zum Empfangen eines Bitdatenstroms eingerichtet ist, der 360-Grad-Videodaten und Metadaten für die 360-Grad-Videodaten enthält;
eine Entkapselungseinrichtung, die zum Erfassen der 360-Grad-Videodaten und der Metadaten eingerichtet ist;
einen Decodierer, der zum Decodieren der 360-Grad-Videodaten eingerichtet ist;
einen Renderer, der zum Rendern der 360-Grad-Videodaten basierend auf den Metadaten eingerichtet ist,
wobei die Metadaten Gesichtspunktinformationen enthalten, die Positionsinformationen eines Gesichtspunkts enthalten, an dem die 360-Grad-Videodaten erfasst werden,
wobei die Metadaten weiterhin Gesichtspunktgruppeninformationen enthalten, die eine Kennung für eine Gesichtspunktgruppe enthalten, die eine Gruppe von Gesichtspunkten für die 360-Grad-Videodaten ist,
wobei die Kennung für die Gesichtspunktgruppe zum Wechseln zu einem Gesichtspunkt in der Gruppe verwendet wird,
wobei die Metadaten weiterhin dynamische Gesichtspunktinformationen enthalten, die im Laufe der Zeit dynamisch geändert werden,
wobei die dynamischen Gesichtspunktinformationen ein Flag enthalten, das angibt, ob Gier-, Nick- und Rollrotationswinkel von X-, Y- und Z-Achsen eines globalen Koordinatensystems eines Gesichtspunkts relativ zu einem gemeinsamen Referenzkoordinatensystem in Proben, die sich auf einen Probeneintrag beziehen, unverändert bleiben oder nicht.

**14.** Vorrichtung zum Verarbeiten und Senden von 360-Grad-Videodaten, wobei die Vorrichtung umfasst:

eine Erfassungseinrichtung, die zum Erfassen von 360-Grad-Videodaten eingerichtet ist, die von zumindest einer Kamera aufgenommen werden;
einen Packer, der zum Ableiten eines zweidimensionalen, 2D, Bilds einschließlich eines Rundumbilds durch Verarbeiten der 360-Grad-Videodaten eingerichtet ist;
einen Erzeuger, der zum Erzeugen von Metadaten für die 360-Grad-Videodaten eingerichtet ist;
einen Codierer, der zum Codieren des 2D-Bilds eingerichtet ist; und
eine Kapselungseinrichtung, die zum Kapseln des 2D-Bilds und der Metadaten eingerichtet ist,
wobei die Metadaten Gesichtspunktinformationen enthalten, die Positionsinformationen eines Gesichtspunkts enthalten, an dem die 360-Grad-Videodaten erfasst werden,
wobei die Metadaten weiterhin Gesichtspunktgruppeninformationen enthalten, die eine Kennung für eine Gesichtspunktgruppe enthalten, die eine Gruppe von Gesichtspunkten für die 360-Grad-Videodaten ist,
wobei die Kennung für die Gesichtspunktgruppe zum Wechseln zu einem Gesichtspunkt in der Gruppe verwendet wird,
wobei die Metadaten weiterhin dynamische Gesichtspunktinformationen enthalten, die im Laufe der Zeit dynamisch geändert werden,
wobei die dynamischen Gesichtspunktinformationen ein Flag enthalten, das angibt, ob Gier-, Nick- und Rollrotationswinkel von X-, Y- und Z-Achsen eines globalen Koordinatensystems eines Gesichtspunkts relativ zu einem gemeinsamen Referenzkoordinatensystem in Proben, die sich auf einen Probeneintrag beziehen, unverändert bleiben oder nicht.

## Revendications

1. Procédé de traitement de données vidéo 360° par un appareil de réception de données vidéo 360, le procédé comprenant:

   la réception d'un flux binaire comprenant des données vidéo à 360° et des métadonnées pour les données vidéo à 360°;
   la décapsulation des données vidéo 360° et des métadonnées;
   le décodage des données vidéo 360°; et
   la restitution des données vidéo 360° sur la base des métadonnées,
   dans lequel les métadonnées comprennent des informations sur le point de vue, notamment des informations sur la position d'un point de vue dans lequel les données vidéo à 360° ont été acquises,
   dans lequel les métadonnées comprennent en outre des informations sur le groupe de points de vue, notamment un identifiant pour un groupe de points de vue qui est un groupe de points de vue pour les données vidéo 360°,
   dans lequel l'identifiant du groupe de points de vue est utilisé pour passer à un point de vue du groupe,
   dans lequel les métadonnées comprennent en outre des informations sur le point de vue dynamique qui sont modifiées de manière dynamique au fil du temps,
   dans lequel les informations dynamiques sur le point de vue comprennent un drapeau indiquant si les angles de rotation de lacet, de tangage et de roulis des axes X, Y et Z d'un système de coordonnées global d'un point de vue par rapport à un système de coordonnées de référence communes restent inchangés ou non dans les échantillons se référant à une entrée d'échantillon.

2. Procédé selon la revendication 1,
   dans lequel les métadonnées comprennent en outre des informations sur le point de vue, notamment des informations sur la position sur l'axe x, la position sur l'axe y et la position sur l'axe z d'un point de vue pour les données vidéo à 360°, des informations sur la longitude d'une géolocalisation du point de vue, des informations sur la latitude d'une géolocalisation du point de vue et des informations sur l'altitude d'une géolocalisation du point de vue.

3. Procédé selon la revendication 1,

   dans lequel les métadonnées comprennent des informations sur la structure de rotation du système de coordonnées globales du groupe, qui représentent des informations sur un angle de rotation relatif entre une coordonnée de référence commune et une coordonnée globale d'un groupe de points de vue comprenant des points de vue,
   dans lequel les informations sur la structure de rotation du système de coordonnées globales du groupe comprennent
   un angle de rotation en lacet, un angle de rotation de tangage et un angle de rotation de roulis pour la coordonnée de référence commune de chacun parmi un axe x, un axe y et un axe z de la coordonnée globale,
   dans lequel les métadonnées comprennent un drapeau d'informations sur les coordonnées de référence communes indiquant si les informations relatives aux coordonnées de référence communes sont présentes ou non,
   lorsque le drapeau d'informations sur les coordonnées de référence communes est égal à un (1), les informations sur la structure de rotation du système de coordonnées globales du groupe sont incluses dans les métadonnées
   ou
   dans lequel les points de vue inclus dans le groupe de points de vue partagent la coordonnée de référence commune.

4. Procédé selon la revendication 1,
   dans lequel lorsqu'un premier point de vue des points de vue est différent d'un second point de vue des points de vue, une coordonnée de référence commune pour le premier point de vue est différente d'une coordonnée de référence commune pour le second point de vue.

**5.** Procédé selon la revendication 1,
dans lequel les métadonnées comprennent des informations sur la structure de l'orientation de la vue représentant une structure de l'orientation de l'affichage pour un point de vue.

**6.** Procédé selon la revendication 5,
dans lequel les informations sur la structure de l'orientation de la vue comprennent des informations sur l'emplacement du centre d'un objet.

**7.** Procédé selon la revendication 6,

dans lequel les informations d'emplacement du centre de l'objet comprennent l'orientation de l'axe x, l'orientation de l'axe y et l'orientation de l'axe z de l'objet, ou
dans lequel les informations sur la structure de l'orientation de la vue comprennent un drapeau de présence de la position GPS, qui indique si les informations de position GPS pour le centre de l'objet sont présentes ou non.

**8.** Procédé selon la revendication 5,
dans lequel les informations sur la structure de l'orientation de la vue comprend des informations sur l'emplacement du centre de l'orientation de la vue.

**9.** Procédé selon la revendication 8,
dans lequel les informations sur l'emplacement du centre de l'orientation de la vue comprennent l'emplacement de l'orientation de l'axe x, l'emplacement de l'orientation de l'axe y et l'emplacement de l'orientation de l'axe z d'un centre de l'orientation de la vue.

**10.** Procédé selon la revendication 5,

dans lequel les informations sur la structure de l'orientation de la vue comprennent
un drapeau de présence de volume indiquant si l'orientation de la vue représentant un espace 3D ou une sphère à afficher ou qu'il convient d'afficher est présente ou non.

**11.** Procédé selon la revendication 1,
dans lequel l'appareil de réception des données vidéo à 360° communique avec au moins un dispositif mobile, un réseau et une voiture automatique.

**12.** Procédé de traitement de données vidéo 360° par un appareil de transmission de données vidéo 360°, le procédé comprenant:

l'acquisition de données vidéo 360° capturées par au moins une caméra;
la dérivation d'une image bidimensionnelle (2D) comprenant une image omnidirectionnelle par traitement des données vidéo 360°;
la génération des métadonnées pour les données vidéo 360°;
le codage de l'image 2D; et
l'encapsulation de l'image 2D et des métadonnées,
dans lequel les métadonnées comprennent des informations sur le point de vue, notamment des informations sur la position d'un point de vue dans lequel les données vidéo 360° ont été acquises,
dans lequel les métadonnées comprennent en outre des informations sur le groupe de points de vue, notamment un identifiant pour un groupe de points de vue qui est un groupe de points de vue pour les données vidéo 360°,
dans lequel l'identifiant du groupe de points de vue est utilisé pour passer à un point de vue du groupe,
dans lequel les métadonnées comprennent en outre des informations sur le point de vue dynamique qui sont modifiées de manière dynamique au fil du temps,
dans lequel les informations dynamiques sur le point de vue comprennent un drapeau indiquant si les angles de rotation de lacet, de tangage et de roulis des axes X, Y et Z d'un système de coordonnées global d'un point de vue par rapport à un système de coordonnées de référence communes restent inchangés ou non dans les échantillons se référant à une entrée d'échantillon.

**13.** Appareil de traitement et de réception de données vidéo 360°, l'appareil comprenant:

un récepteur configuré pour recevoir un flux binaire comprenant des données vidéo 360° et des métadonnées pour les données vidéo 360°;
un dispositif de décapsulation configuré pour acquérir les données vidéo 360° et les métadonnées;
un décodeur configuré pour décoder les données vidéo 360°;
un moteur de rendu configuré pour restituer les données vidéo 360° sur la base des métadonnées,
dans lequel les métadonnées comprennent des informations sur le point de vue, notamment des informations sur la position d'un point de vue dans lequel les données vidéo 360° ont été acquises,
dans lequel les métadonnées comprennent en outre des informations sur le groupe de points de vue, notamment un identifiant pour un groupe de points de vue qui est un groupe de points de vue pour les données vidéo 360°,
dans lequel l'identifiant du groupe de points de vue est utilisé pour passer à un point de vue du groupe,
dans lequel les métadonnées comprennent en outre des informations sur le point de vue dynamique qui sont modifiées de manière dynamique au fil du temps,
dans lequel les informations dynamiques sur le point de vue comprennent un drapeau indiquant si les angles de rotation de lacet, de tangage et de roulis des axes X, Y et Z d'un système de coordonnées globales d'un point de vue par rapport à un système de coordonnées de référence communes restent inchangés ou non dans les échantillons se référant à une entrée d'échantillon.

14. Appareil de traitement et de transmission de données vidéo 360°, l'appareil comprenant:

un dispositif d'acquisition configuré pour acquérir des données vidéo 360° capturées par au moins une caméra;
un packer configuré pour dériver une image bidimensionnelle (2D) comprenant une image omnidirectionnelle par traitement des données vidéo à 360°;
un générateur configuré pour générer des métadonnées pour les données vidéo à 360°;
un codeur configuré pour coder l'image 2D; et
un dispositif d'encapsulation configuré pour encapsuler l'image 2D et les métadonnées,
dans lequel les métadonnées comprennent des informations sur le point de vue, notamment des informations sur la position d'un point de vue dans lequel les données vidéo 360° ont été acquises,
dans lequel les métadonnées comprennent en outre des informations sur le groupe de points de vue, notamment un identifiant pour un groupe de points de vue qui est un groupe de points de vue pour les données vidéo 360°,
dans lequel l'identifiant du groupe de points de vue est utilisé pour passer à un point de vue du groupe,
dans lequel les métadonnées comprennent en outre des informations sur le point de vue dynamique qui sont modifiées de manière dynamique au fil du temps,
dans lequel les informations dynamiques sur le point de vue comprennent un drapeau indiquant si les angles de rotation de lacet, de tangage et de roulis des axes X, Y et Z d'un système de coordonnées global d'un point de vue par rapport à un système de coordonnées de référence communes restent inchangés ou non dans les échantillons se référant à une entrée d'échantillon.

Fig. 1

```
aligned(8) class Box (unsigned int(32) boxtype, optional
unsigned int(8)[16] extended_type)
{
    unsigned int(32) size;
    unsigned int(32) type = boxtype;
    if (size==1) {
        unsigned int(64) largesize;
    } else if (size==0) {
        // box extends to end of file
    }
    if (boxtype=='uuid') {
        unsigned int(8)[16] usertype = extended_type;
    }
}

aligned(8) class FullBox(unsigned int(32) boxtype, unsigned int(8)
v, bit(24) f) extends Box(boxtype) {
    unsigned int(8)    version = v;
    bit(24)            flags = f;
}
```

250

Fig. 2

Fig. 3

Fig. 4

EP 3 823 274 B1

50

# Fig. 5

**360 Video Transmission Apparatus**

Data Input Unit → Metadata Processor

Stitcher

Projection Processor

Data Encoder

(Transmitting-side) Feedback Processor

Encapsulation Processor

Transmission Processor

Transmitter

Transmission          Feedback Information

Fig. 6

Fig. 7

Fig. 8

EP 3 823 274 B1

Image stitching, projection, and region-wise packing

Input images $B_i$ → Stitching and projection → C Projected frame → Region-wise packing (optional) → D Packed frame(s) → Image/video encoding

(a)

top / middle / bottom
Equirectangular panorama picture

→ Region-wise resampling and positioning →

top | bottom / middle

(b)

| | top | |
| right | front | left | back |
| | bottom | |

→

| Front | Right |
| | Back |
| Left | Top | Bottom |

(c)

| Projections | 3D Model | 2D Projection | Vertexes |
|---|---|---|---|
| Tetrahedron (4 faces) | | | 4 |
| Cube (6 faces) | | | 8 |
| Octahedron (8 faces) | | | 6 |
| Dodecahedron (12 faces) | | | 20 |
| Icosahedron (20 faces) | | | 12 |

(d)

# Fig. 9a

# Fig. 9b

(e)

Left-top  Right-top
front
Left-bottom  Right-bottom

(f)

width (e.g., 2πr)

(g)

## Fig. 10a

Fig. 10b

## Fig. 11

```
...
                <Default metadata>
unsigned      int(8)        vr_geometry;
unsigned      int(8)        projection_schme;

        < Stereoscopic related metadata >

unsigned      int(1)        is_stereoscopic;
unsigned      int(3)        stereo_mode;

        < Initial View related metadata >

signed        int(8)        initial_view_yaw_degree;
signed        int(8)        initial_view_pitch_degree;
signed        int(8)        initial_view_roll_degree;

            < ROI related metadata >

unsigned int(1)             2d_roi_range_flag;
unsigned int(1)             3d_roi_range_flag;
if (2d_roi_region_flag==1) {
    unsigned int(16) min_top_left_x;
    unsigned int(16) max_top_left_x;
    unsigned int(16) min_top_left_y;
    unsigned int(16) max_top_left_y;
    unsigned int(16) min_width;
    unsigned int(16) max_width;
    unsigned int(16) min_height;
    unsigned int(16) max_height;
    unsigned int(16) min_x;
    unsigned int(16) max_x;
    unsigned int(16) min_y;
    unsigned int(16) max_y;
}
if (3d_roi_region_flag==1{
    unsigned int(16) min_yaw;
    unsigned int(16) max_yaw;
    unsigned int(16) min_pitch;
    unsigned int(16) max_pitch;
    unsigned int(16) min_roll;
    unsigned int(16) max_roll;
    unsigned int(16) min_field_of_view;
    unsigned int(16) max_field_of_view;
}

        < Field Of View related metadata >

unsigned int(1)             content_fov_flag;
if (content_fov_flag==1) {
    unsigned int(16)        content_fov;
}

        < Cropped Region related metadata >

unsigned int(1)             is_copped_region;
if (content_fov_flag==1) {
    unsigned int(16)        cr_region_left_top_x;
    unsigned int(16)        cr_region_left_top_y;
    unsigned int(16)        cr_region_width;
    unsigned int(16)        cr_region_height;
}
...
```

Fig. 12

viewpoint

(a)

viewing position

(b)

viewing orientation

(c)

## Fig. 13

Acquisition
video/image/
audio/text data — 1310

Pre-procession&
encoding
Stitching, editing,
view segmentation,
projection, packing,
encoding — 1320

Composition
Video/image/text
Audio/sound effects
medias

Delivery
Broadcast,
unicast,
transmission

Feedback
Head/position
orientation for
region of interest

Decoding&
Pre-procession
unpacking,
selection,
re-projection — 1330

Rendering&
Composition
Texture/depth/overlay
composition,
video/audio playback,
& head/position
tracking interaction — 1340

## Fig. 14a

## Fig. 14b

Fig. 15

## Fig. 16

## Fig. 17

Fig. 18

Fig. 19

Fig. 20

## Fig. 21

Start

Receive information about 360-degree video data — S2100

Acquire information about encoded picture and metadata from information about 360-degree video data; — S2110

Decode picture based on information about encoded picture — S2120

Render decoded picture based on metadata — S2130

End

## Fig. 22

Information about Encoded Picture

Decoded Picture

Reception Processor → Data Decoder → Renderer

Metadata

360 Video Transmission Apparatus

# Fig. 23

Fig. 24

eMBB

Transmission at gigabyte per second

Artificial intelligence (e.g. Big data)

3D video (4K screen)

Smart home/building

Work/play in cloud

AR/VR/MR

Voice

Industrial automation (e.g. Robot)

Smart network (e.g. Smart city)

Mission-critical applications (e.g. Healthcare)

Self-driving vehicle

mMTC

URLLC

Edge computing

Fig. 25

1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018061002 A1

- WO 2017082079 A1

**Non-patent literature cited in the description**

- FLUS Metadata. *3GPP DRAFT, S4-171199*